# EUROPEAN PATENT APPLICATION

(11) **EP 4 807 169 A1**
(43) Date of publication of application: **16.09.2026**
(21) Application number: 24889180.6
(22) Date of filing: 08.11.2024
(51) Int. Cl.: F02M 21/02, F02D 41/22, G01M 3/22, B63H 21/14, B63H 21/38, F02M 37/00, F02M 59/10

(54) **LIQUID FUEL PRESSING UNIT, AND LIQUID FUEL SUPPLY SYSTEM AND ENGINE COMPRISING SAME**

(30) Priority: 10.11.2023 KR 20230155875; 10.11.2023 KR 20230155876; 14.11.2023 KR 20230157037; 14.11.2023 KR 20230157038; 14.11.2023 KR 20230157068; 14.11.2023 KR 20230157069; 14.11.2023 KR 20230157070; 14.11.2023 KR 20230157071; 14.11.2023 KR 20230157072; 14.11.2023 KR 20230157073
(71) Applicant: HD Hyundai Heavy Industries Co., Ltd., Dong-gu Ulsan 44032 (KR)
(72) Inventor: KIM, Dong Yeon, Ulsan 44032 (KR); PARK, Chul Hee, Ulsan 44032 (KR); PARK, Jae Wan, Ulsan 44032 (KR); JANG, Ki Hoon, Ulsan 44032 (KR); LEE, Eun Kyu, Ulsan 44032 (KR); KANG, Nam Ee, Ulsan 44032 (KR); JEON, Woo Hyuk, Ulsan 44032 (KR)
(74) Representative: advotec.
(86) International application number: PCT/KR2024/017636
(87) International publication number: WO 2025/100994

(57) **Abstract**

Disclosed in the present disclosure are a liquid fuel pressing unit, and a liquid fuel supply system and an engine, comprising the liquid fuel pressing unit, the liquid fuel pressing unit comprising: a control cylinder (212); an operating oil supply port (214) connected to the side surface of the control cylinder (212) in the radial direction; a plunger pump portion (P500) which receives the pressure of an operating oil supplied from the operating oil supply port (214) and boosts the low-pressure liquid fuel into the high-pressure liquid fuel and then discharges the liquid fuel; and a valve shaft (300) of a rotary type, which is installed in the control cylinder (212) with a valve portion (V300) on the outer circumference of the shaft, and controls the flow direction of the operating oil so that the valve portion (V300) supplies the operating oil to the operating oil supply port (214) or discharges the operating oil according to rotation of the shaft.

## Description

### [Technical Field]

The present disclosure relates to a system for supplying liquid fuel to an internal combustion engine, and more particularly, relates to a liquid fuel pressurizing unit for improving reliability and safety of a liquid fuel supply system, a liquid fuel supply system and an engine comprising the same.

### [Background Art]

Recently, in order to reduce ship exhaust gas, a low-flashpoint fuel supply system (LFSS) suitable for stably utilizing low-flashpoint eco-friendly fuels such as liquefied petroleum gas (LPG), methanol, ammonia, and ethanol in ships is being researched.

However, since low-flashpoint eco-friendly fuel is easily ignited even at a low temperature, leakage from a transfer pipe in a ship or an engine room may cause a very great danger.

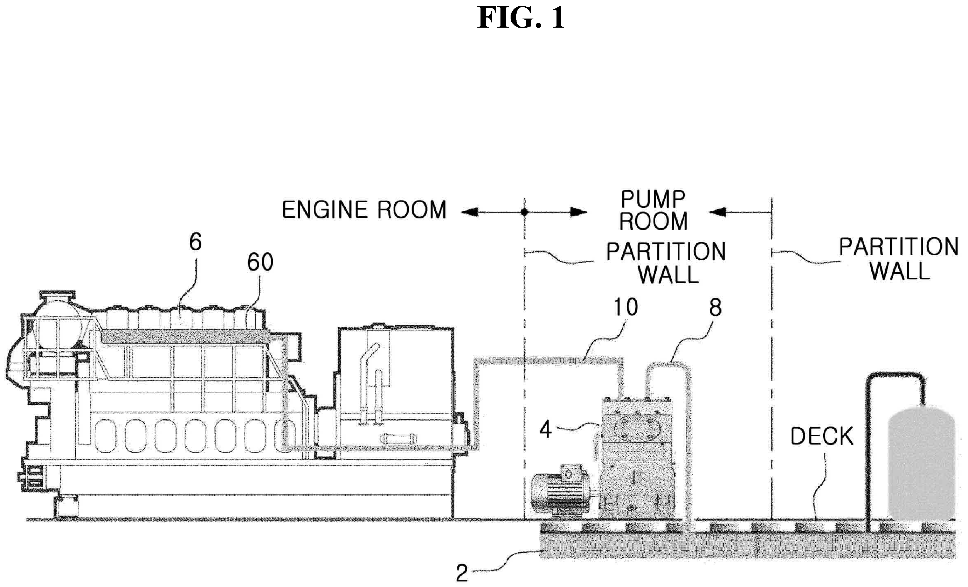

In FIG. 1, a fuel supply system in a ship using liquid fuel (e.g., low-flashpoint fuel such as methanol) in the related art is illustrated.

With reference to FIG. 1, a liquid fuel supply system in the related art includes a fuel storage tank 2 of a double bottom structure, a high pressure pump 4 driven by an electric motor, and a high pressure common rail system 60 of an engine structure 6.

The high pressure pump 4 for methanol driven by the electric motor is installed in a separate pump room space isolated far from the engine room by a partition wall or the like, in order to satisfy ship safety regulations according to a risk of ignition or explosion.

In addition, the high pressure pump 4 is connected to the fuel storage tank 2 by a low-pressure double pipe 8, and is connected to the common rail system 60 of an engine by a high-pressure double pipe 10. Accordingly, the high pressure pump 4 sucks fuel of the fuel storage tank 2 through the low-pressure double pipe 8, and the liquid fuel of which pressure is increased in the high pressure pump 4 moves a long distance through the high-pressure double pipe 10 and is supplied to the common rail system 60.

As such, the high pressure pump 4 driven by the electric motor is installed in the separate space apart from the engine room for safety reasons, so that a length of the high-pressure double pipe 10 for transferring high-pressure fuel from the high pressure pump 4 to the common rail system 60 inevitably becomes very long. For example, the length of the high-pressure double pipe 10 varies depending on a size of a ship, but it reaches 100 meters at the longest. Since such a high-pressure double pipe 10 is more expensive than the low-pressure double pipe 8, as the length of the high-pressure double pipe 10 increases, investment costs inevitably rise.

In addition, since the high-pressure double pipe 10 must pass through a long region in the ship, a dangerous section such as leakage of liquid fuel increases by that much, which is disadvantageous in terms of ship safety, and additional costs and risks occur, such as having to additionally provide a detection device in preparation for leakage or safety equipment in preparation for ignition or explosion of leaked fuel.

Meanwhile, a common rail for distributing liquid fuel to each engine cylinder and a liquid fuel supply line for transferring high-pressure liquid fuel to the common rail must find a leakage point and take measures for a leakage test process after equipment assembly or leakage occurring during engine operation.

However, in order to accurately identify a leakage occurrence point or section, the common rail and the liquid fuel supply line must be disassembled one by one, or an engine stop time greatly increases to find the leakage occurrence point.

### [Disclosure]

### [Technical Problem]

The present disclosure was developed to solve the overall problems in the related art as described above, and an object of the present disclosure is to improve reliability and safety of a liquid fuel supply system as a whole.

The overall object as described above includes detailed objects as described below.

That is, one object is to reduce a problem of leakage according to long-distance transfer of high-pressure liquid fuel, while removing a long use section of a high-pressure double pipe in a region other than an engine room, by providing a new type of a liquid fuel supply device that pressurizes low-pressure liquid fuel by a liquid fuel pressurizing device in the engine room and supplies the same to a cylinder.

In addition, another object is to structurally optimize a high-pressure liquid fuel supply line and a common rail for supplying high-pressure liquid fuel to a cylinder from viewpoints of manufacturing, assembly, and operation.

In addition, another object is to enable leakage to be detected for each section by inserting a leakage detector at each important point of a high-pressure liquid fuel supply line, so that a defective part where leakage occurs during a leakage test process at the time of engine manufacturing or engine operation may be quickly and accurately identified and measures may be taken.

The present disclosure, in addition to the detailed objects as described above, has various detailed objects revealed in a part describing embodiments of the following invention, in order to improve reliability and safety of a liquid fuel supply system as a whole.

### [Technical Solution]

A liquid fuel pressurizing unit according to one aspect of the present disclosure comprises: a control cylinder 212; and a valve shaft 300 of a rotary type provided with a valve portion V300 on an outer circumference of a shaft and installed inside the control cylinder 212, and configured to control a flow direction of operating oil so that the valve portion V300 supplies or discharges the operating oil as the shaft rotates.

A liquid fuel pressurizing unit according to another aspect of the present disclosure comprises a piston pump unit 500 configured to pressurize low-pressure liquid fuel to a high pressure by pressure of operating oil and discharge the same, and the piston pump unit 500 comprises a plurality of plunger pump portions P500 operated by the operating oil, and comprises a plurality of operating oil supply ports 214 configured to supply the operating oil to the plurality of plunger pump portions P500.

A liquid fuel pressurizing unit according to still another aspect of the present disclosure comprises: a control cylinder 212; an operating oil supply port 214 connected to a side surface of the control cylinder 212 in a radial direction; a plunger pump portion P500 configured to pressurize low-pressure liquid fuel to high-pressure liquid fuel and discharge the same by receiving pressure of operating oil supplied from the operating oil supply port 214; and a valve shaft 300 of a rotary type provided with a valve portion V300 on an outer circumference of a shaft and installed inside the control cylinder 212, and configured to control a flow direction of the operating oil so that the valve portion V300 supplies or discharges the operating oil to the operating oil supply port 214 as the shaft rotates.

In addition, a liquid fuel supply system of the present disclosure comprises any one of the above three types of liquid fuel pressurizing units.

In addition, an engine of the present disclosure comprises the liquid fuel supply system.

### [Advantageous Effects]

According to the liquid fuel supply system and the ship according to the present disclosure, instead of a high pressure pump which was conventionally disposed in a pump room adjacent to a liquid fuel storage tank, the liquid fuel pressurizing unit of the present disclosure may be directly installed in an engine inside an engine room to pressurize low-pressure liquid fuel and then supply the same to an engine cylinder.

Accordingly, since low-pressure fuel may be transferred from the liquid fuel tank to the liquid fuel pressurizing unit of the engine room, use of a high-pressure double pipe may be excluded and a low-pressure transfer pipe may be used in a long section from the liquid fuel tank to the engine room. Therefore, as much as the high-pressure double pipe is replaced with the low-pressure transfer pipe, equipment costs may be reduced.

In addition, a leakage risk section according to transferring high-pressure fuel in a section from the pump room to the engine room is removed, so that safety of the ship may be improved, and an economical and safe fuel supply system and a ship may be implemented, which do not need to additionally provide a detection device in preparation for such fuel leakage, safety equipment in preparation for ignition or explosion of leaked gas, or the like.

In addition, according to the present disclosure, when only low-pressure operating oil is provided to the liquid fuel pressurizing unit, low-pressure liquid fuel may be pressurized to high-pressure operating oil necessary for the engine cylinder. Therefore, only a low-pressure hydraulic pump needs to be provided instead of the conventional high pressure pump. The low-pressure hydraulic pump is the only pump in the liquid fuel supply system of the present disclosure, and since it has a small capacity and a small size, it may be installed inside the engine room or directly mounted on an engine structure. Accordingly, the pump may be installed without occupying much space of the engine room, and most maintenance work of the liquid fuel supply system including the pump may be easily performed inside the engine room.

In addition, since the liquid fuel pressurizing unit of the present disclosure has an operating oil valve device of a type that rotates a valve shaft in which a valve portion is formed on an outer circumference, a structurally simple and compact operating oil control part may be implemented.

In addition, by having a valve structure such that a pressurizing plunger performs two compression strokes per one rotation of the valve shaft, a discharge time interval of high-pressure liquid fuel is narrowed, so that pressure pulsation may be reduced by maintaining a uniform peak pressure inside an outlet of the piston pump unit and a common rail.

In addition to this, the present disclosure provides a structure in which a plurality of valve portions are provided on a valve shaft of a rotary type and a plurality of plunger pump portions are disposed in parallel corresponding thereto, and further provides an overlap design of an operating oil supply valve (an inlet groove). Accordingly, the discharge interval of high-pressure liquid fuel becomes narrower and discharge processes between the valve portions are overlapped, so that while the peak pressure inside a liquid fuel discharge port and the common rail may be maintained more uniformly, the pressure pulsation may be more surely reduced.

In addition, according to the present disclosure, a leakage detection part is provided in a state of being always mounted at a certain point of each connection part section of a high-pressure liquid fuel inlet line, a discharge line, and the common rail. The leakage detection part usually plays a role of connecting a main fuel line and an annular space, but provides a configuration in which a leakage detector may be inserted when necessary. That is, the leakage detector may be inserted only by a simple work of separating a plug of the leakage detection part and inserting a separator. Therefore, only by inserting the separator for each leakage detection part, fuel leakage may be easily and accurately detected for each predetermined section. This enables a defective part where leakage occurs during a leakage test process at the time of engine manufacturing or engine operation to be quickly and accurately identified and measures to be taken.

In addition, according to the present disclosure, a block type common rail of a form is provided, in which a high-pressure block and a high-pressure block are connected by a jumping block of a block type of which inside is completely filled, and a main fuel-line connection hole and an annular space connection groove are perforated in this jumping block. According to such a block type common rail, a height difference or a gradient of an annular space connection part between the high-pressure block and the jumping block may be removed, so that fuel leaked into the annular space may smoothly flow and be discharged.

### [Description of Drawings]

FIG. 1 is a view illustrating a liquid fuel supply system for a ship in the related art.
FIG. 2 is a view illustrating configurations of a liquid fuel pressurizing unit and operating oil and fuel systems thereof of a liquid fuel supply system according to the present disclosure.
FIG. 3 is a view illustrating configurations of an engine and a ship provided with the liquid fuel supply system according to the present disclosure.
FIG. 4 is a perspective view illustrating an external appearance of the liquid fuel pressurizing unit according to the present disclosure.
FIG. 5 is a view of the external appearance of the liquid fuel pressurizing unit illustrated in FIG. 4 as seen from another direction.
FIG. 6 is a cross-sectional view along line I-I of FIG. 5, and is a view for explaining a process of pressurizing low-pressure liquid fuel to a high pressure and discharging the same by a pump operation of the liquid fuel pressurizing unit.
FIG. 7 is a cross-sectional view along line I-I of FIG. 5, and is a view for explaining a process in which low-pressure liquid fuel is filled again in a high-pressure chamber of the liquid fuel pressurizing unit.
FIG. 8 is a view for explaining a valve opening/closing change and displacement of a plunger according to rotation of a valve shaft.
FIG. 9 is a cross-sectional perspective view illustrating an overall horizontal cross-sectional structure of the liquid fuel pressurizing unit according to the present disclosure.
FIG. 10 is a plan view of FIG. 9.
FIG. 11 is a cross-sectional view along line II-II of FIG. 5, and is a view for explaining the valve shaft and a drain flow path of the liquid fuel pressurizing unit.
FIG. 12 is a cross-sectional view along line III-III of FIG. 5, and is a view for explaining configurations of the valve shaft and an operating oil inlet port of the liquid fuel pressurizing unit.
FIG. 13 is a view (a perspective view and a plan view) illustrating an outer shape of the valve shaft of the liquid fuel pressurizing unit provided with a plurality of valve portions according to the present disclosure.
FIG. 14 is a view illustrating an operating oil supply flow path and one valve portion in FIG. 13 in an enlarged manner.
FIG. 15 is a view (a perspective view and a cross-sectional view) for explaining a phase difference between a plurality of inlet grooves and outlet grooves in the valve shaft according to the present disclosure.
FIG. 16 is a view for explaining a valve overlap between a plurality of inlet grooves in the valve shaft according to the present disclosure.
FIG. 17 is a graph for explaining an overlap range of a plurality of inlet grooves in the valve shaft according to the present disclosure.
FIG. 18 is a view for explaining a formation state of peak pressure of a liquid fuel discharge part (a high-pressure chamber and a high-pressure common flow path (a common rail)) by overlap between a plurality of inlet grooves in the valve shaft according to the present disclosure.
FIG. 19 is a front view illustrating an example of a high-pressure liquid fuel supply line constituting the liquid fuel supply system according to the present disclosure.
FIG. 20 is a perspective view of FIG. 19.
FIG. 21 is a perspective view illustrating a configuration of a connection part for leakage detection of the high-pressure liquid fuel supply line according to the present disclosure.
FIG. 22 is an exploded perspective view of the connection part for leakage detection of FIG. 21.
FIG. 23 is an exploded cross-sectional view of the connection part for leakage detection of the high-pressure liquid fuel supply line according to the present disclosure.
FIG. 24 is a view as seen from direction IV of FIG. 22, and is a view for explaining a structure of a connection part of a leakage detection block.
FIG. 25 is a cross-sectional view along line V-V of FIG. 23, and is a view for explaining a structure of an annular space connection part of the leakage detection block.
FIG. 26 is a cross-sectional view illustrating a state in which the connection part for leakage detection is coupled in FIG. 23.
FIG. 27 is a cross-sectional view along line VI-VI of FIG. 26, and is a view for explaining a connection state of an annular space connection groove and a configuration of a separator insertion hole.
FIG. 28 is a view illustrating a state in which leakage is detected by inserting a separator into two separator insertion holes illustrated in FIG. 27.
FIG. 29 is a perspective view illustrating an overall configuration of a high-pressure liquid fuel supply line to which a block type common rail according to the present disclosure is applied.
FIG. 30 is a plan view of a part of the block type common rail of FIG. 29.
FIG. 31 is a horizontal cross-sectional view cut based on a center of a main fuel line in FIG. 30, and is a view illustrating a configuration and a connection state of the main fuel line of the block type common rail.
FIG. 32 is a perspective view illustrating a connection state of the main fuel line of the block type common rail according to the present disclosure.
FIG. 33 is a perspective view illustrating a connection state of an annular space of the block type common rail according to the present disclosure.
FIG. 34 is a view illustrating a configuration of a connection part between a connection flange of a high-pressure inlet line and an upstream side flange part of a high-pressure block of the block type common rail according to the present disclosure.
FIG. 35 is a cross-sectional view along line VII-VII of FIG. 30, and is a view illustrating a state in which the flange part of FIG. 34 is coupled.
FIG. 36 is a view illustrating FIG. 37 in a state in which the flange part is separated.
FIG. 37 is a view illustrating a configuration of a connection part between the high-pressure block and a jumping block of the block type common rail illustrated in FIG. 30.
FIG. 38 is a cross-sectional view along line VIII-VIII of FIG. 30, and is a cross-sectional view illustrating a connection part between the high-pressure block and the jumping block of the block type common rail illustrated in FIG. 37 in a state of being separated.
FIG. 39 is a cross-sectional view illustrating the connection part of FIG. 38 in a coupled state.
FIG. 40 is a cross-sectional view along line IX-IX of FIG. 30, and is a view illustrating a formation shape of the main fuel line and an annular space inside the high-pressure block.
FIG. 41 is a cross-sectional view along line XI-XI of FIG. 40, and is a view illustrating a connection shape of the annular space inside the high-pressure block.
FIG. 42 is a perspective view illustrating a configuration of a connection part between a downstream side flange part of the jumping block and an upstream side flange part of the high-pressure block of the block type common rail according to the present disclosure.
FIG. 43 is a cross-sectional view along line X-X of FIG. 30, and is a view illustrating a state in which two flange parts of FIG. 42 are coupled.
FIG. 44 is a view illustrating two flange parts of FIG. 43 in a state of being separated.
FIG. 45 illustrates the block type common rail according to the present disclosure, and is a partial plan view and a front view.
FIG. 46 is a cross-sectional view along line XII-XII of FIG. 45, and is a view illustrating structures of the main fuel line and an annular space connection groove formed inside one side block-shaped body part of the jumping block.
FIG. 47 is a cross-sectional view along line XIII-XIII of FIG. 45, and is a view illustrating structures of the main fuel line and an annular space connection groove formed inside another side block-shaped body part of the jumping block.
FIG. 48 is a cross-sectional view along line XIV-XIV of FIG. 45, and is a view illustrating a configuration for communication of upper and lower annular space connection grooves formed inside one side block-shaped body part of the jumping block.
FIG. 49 is a cross-sectional view along line XV-XV of FIG. 45, and is a view illustrating a configuration for communication of upper and lower annular space connection grooves formed inside another side block-shaped body part of the jumping block.
FIG. 50 is a cross-sectional view along line XVI-XVI of FIG. 45, and is a view for explaining a structure in which two vertical communication holes of FIG. 48 and FIG. 49 are communicated again with a separator insertion hole.
FIG. 51 is a horizontal cross-sectional view along line XVII-XVII of FIG. 45, and is a view illustrating a connection structure of a lower side annular space and the separator insertion hole of the block type common rail.
FIG. 52 is a perspective view illustrating a jumping pipe type common rail according to the present disclosure.
FIG. 53 is a front view of FIG. 52.
FIG. 54 is a view for explaining configurations of the high-pressure block and a flange part of a jumping pipe of the jumping pipe type common rail according to the present disclosure.
FIG. 55 is a cross-sectional view along line XVIII-XVIII of the same view illustrating a state in which the high-pressure block and flange parts of the jumping pipe of FIG. 53 are coupled.
FIG. 56 is a view illustrating the high-pressure block and the flange parts of the jumping pipe illustrated in FIG. 53 in a state of being separated.
FIG. 57 is a view for explaining leakage detection of a high-pressure liquid fuel supply line including the block type common rail according to the present disclosure.
FIG. 58 is a view for explaining leakage detection of a high-pressure liquid fuel supply line including the jumping pipe type common rail according to the present disclosure.
FIG. 59 is a view for explaining leakage detection of a high-pressure liquid fuel supply line including a straight pipe type common rail according to the present disclosure.

### [Mode for Disclosure]

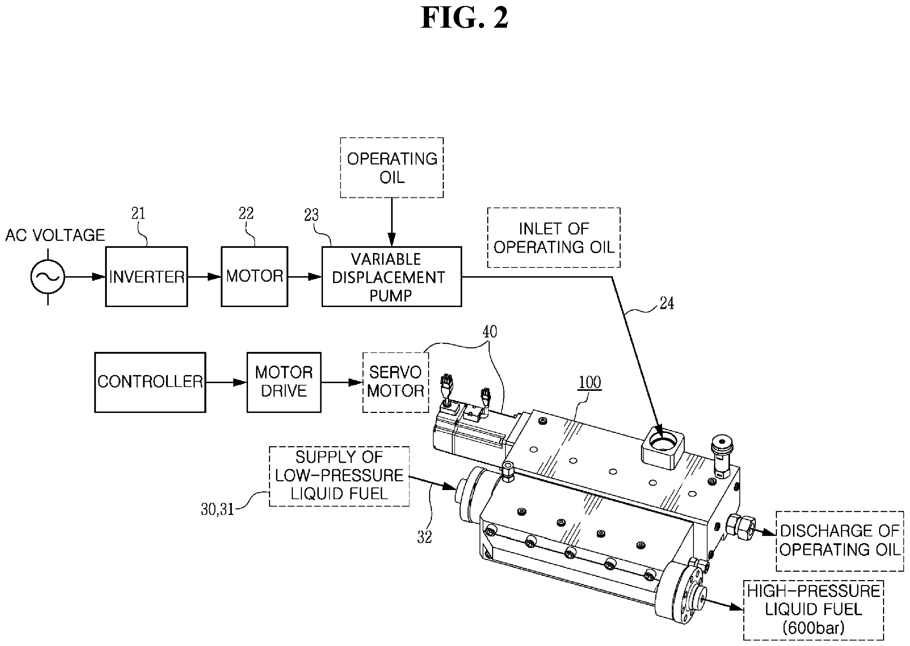

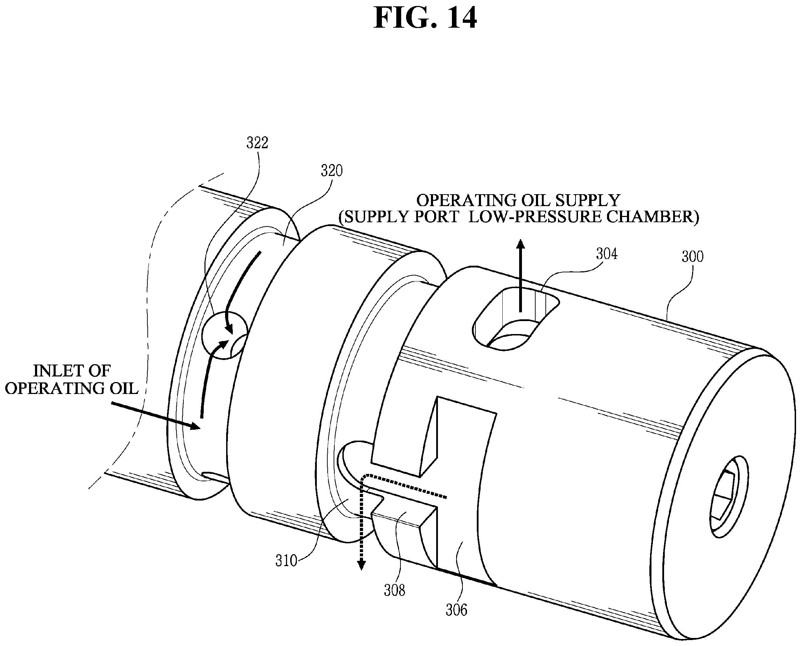

Hereinafter, with reference to the accompanying drawings FIG. 2 to FIG. 59, specific embodiments of the liquid fuel supply system, engine, and ship of the present disclosure in detail.

### [Configuration of Liquid Fuel Supply System, Engine, and Ship]

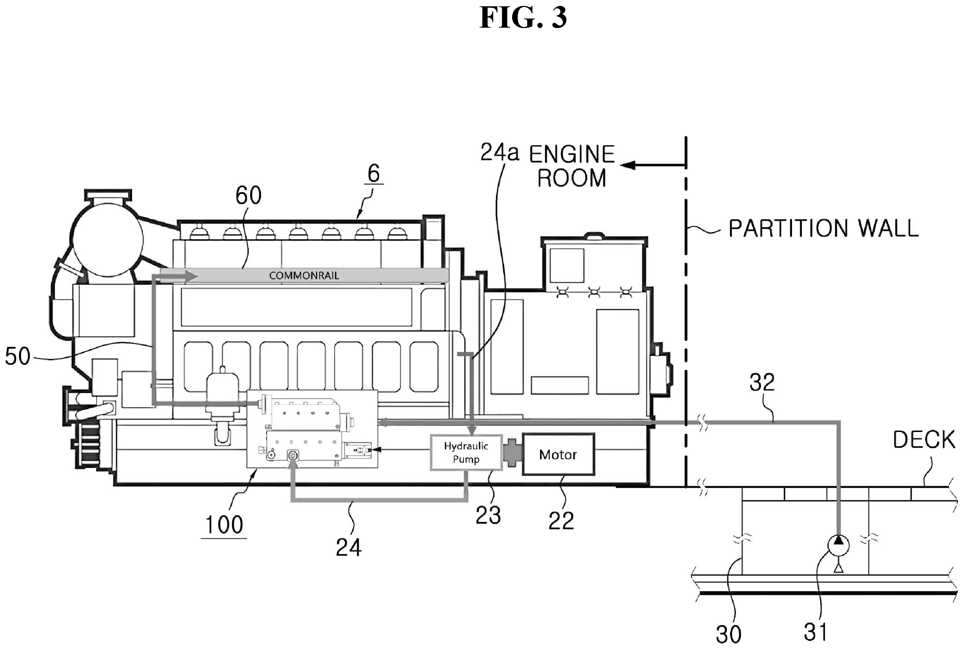

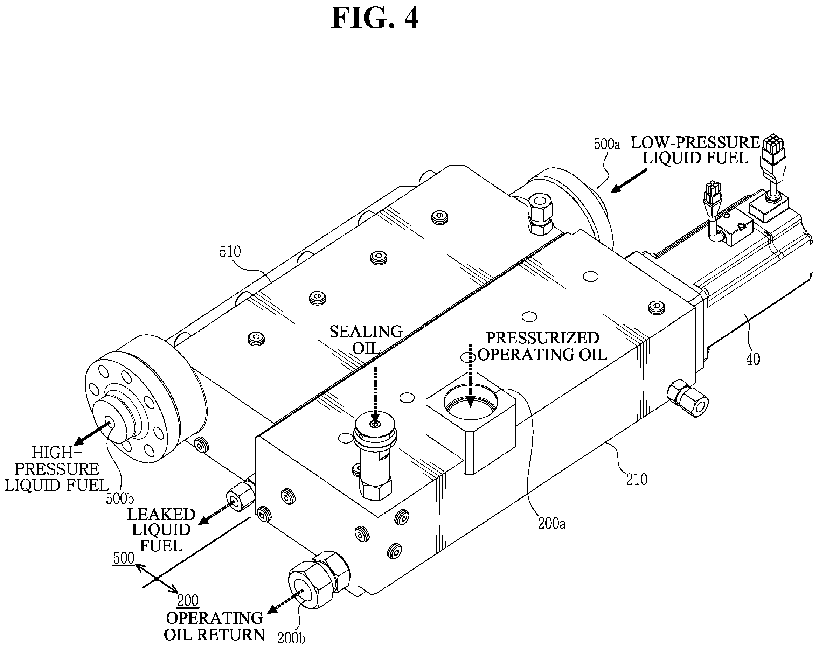

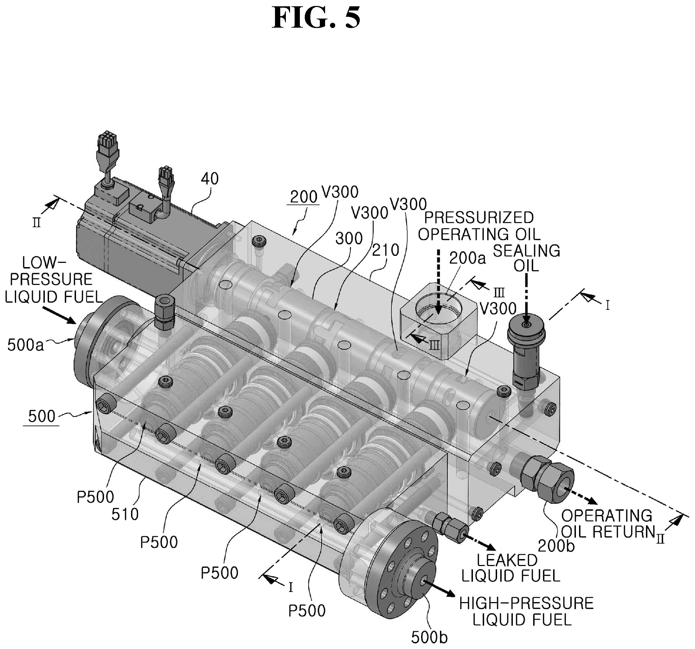

FIG. 2 to FIG. 5 illustrate a liquid fuel supply system, engine, and a ship according to the present disclosure, in which FIG. 2 is a view illustrating configurations of a liquid fuel pressurizing unit and operating oil and fuel systems thereof, FIG. 3 is a view illustrating configurations of an engine and a ship provided with the liquid fuel supply system, FIG. 4 is a perspective view illustrating an external appearance of the liquid fuel pressurizing unit, and FIG. 5 is a view illustrating the external appearance of the liquid fuel pressurizing unit as seen from another direction with the external appearance processed to be transparent.

With reference to FIG. 2, the liquid fuel supply system of the present disclosure includes a liquid fuel pressurizing unit (or also referred to as liquid fuel pressing unit) 100, a low-pressure hydraulic pump 23, and a step motor 40.

The liquid fuel pressurizing unit 100 is a device that operates a pressurizing plunger according to supply of low-pressure operating oil, pressurizes low-pressure liquid fuel to increase pressure by the pressurizing plunger, and then sends the same toward an engine cylinder.

The low-pressure hydraulic pump 23 is a motor 22 integrated type pump operated by current applied through an inverter 21 or the like, which compresses operating oil to a low pressure (e.g., about 350 bar) by the motor 22 and discharges the same, and the discharged low-pressure operating oil is supplied to the liquid fuel pressurizing unit 100 through a working fluid supply line 24.

The step motor 40 is for operating a valve for controlling a flow direction of operating oil to be supplied to the pressurizing plunger.

To the liquid fuel pressurizing unit 100, low-pressure liquid fuel of a low pressure (e.g., about 10 bar) supplied from a low-pressure liquid fuel pump 31 on a side of the liquid fuel tank 30 described above is introduced through a low-pressure transfer pipe 32. The low-pressure liquid fuel is pressurized to a high pressure (e.g., about 600 bar) necessary for an engine cylinder (more specifically, a common rail) by operation of the pressurizing plunger of the liquid fuel pressurizing unit 100 and is fed toward the engine cylinder.

Next, FIG. 3 schematically illustrates a form in which a liquid fuel supply system is installed in a ship, in which a body of the ship is divided into spaces of several layers through a plurality of decks below an upper deck, and each divided space of the layers is partitioned into various compartments through partition walls.

A liquid fuel tank 30 for storing liquid fuel such as methanol is generally provided in a cargo hold having a double bottom structure, and an engine room may be provided in a stern compartment isolated from the cargo hold.

In an engine structure 6 disposed in the engine room, an assembly of the liquid fuel pressurizing unit 100, the low-pressure hydraulic pump 23, and the motor 22 of the liquid fuel supply system according to the present disclosure is installed. High-pressure liquid fuel discharged from the liquid fuel pressurizing unit 100 is transferred along a high-pressure liquid fuel inlet line 50 toward a direction to the cylinder. The high-pressure liquid fuel transferred from the high-pressure liquid fuel inlet line 50 is distributed to each cylinder in a common rail 60.

In addition, a low-pressure liquid fuel pump 31 is provided on a side of the liquid fuel tank 30. Between the low-pressure liquid fuel pump 31 and the liquid fuel pressurizing unit 100 inside the engine room, a low-pressure transfer pipe 32 is connected. The low-pressure liquid fuel pump 31 is for supplying liquid fuel at a low pressure (e.g., about 7 bar). For the low-pressure transfer pipe 32, a low-pressure double pipe having a lower price and weight compared to a high-pressure transfer pipe may be used.

The low-pressure hydraulic pump 23 supplies low-pressure operating oil from an operating oil supply source to the liquid fuel pressurizing unit 100. As the low-pressure operating oil, engine oil, which is lubricating oil of the engine, may be utilized. In a case where the engine oil is utilized as the low-pressure operating oil, the engine oil may be supplied from an engine oil lead-out pipe 24a led out from an oil passage of an engine block. In this case, a separate facility such as an operating oil tank is not required, and the engine itself becomes the operating oil supply source.

The low-pressure hydraulic pump 23 is for compressing operating oil to a low pressure (e.g., about 350 bar) and supplying the same. Since the low-pressure hydraulic pump 23 has a small capacity and a small size compared to a capacity (e.g., 650 bar) of a liquid fuel high pressure pump in the related art, it may be installed inside the engine room or directly mounted on the engine structure. Accordingly, even if the low-pressure hydraulic pump 23 is directly mounted on the engine, it does not occupy much space of the engine room, and most maintenance work for the liquid fuel supply system may be easily performed inside the engine room.

Next, with reference to FIG. 4 to FIG. 5, the liquid fuel pressurizing unit 100 may be provided with a valve housing 210 constituting a part of an operating oil control unit 200, and a pump housing 510 constituting a part of a piston pump unit 500.

The piston pump unit 500 plays a role of pressurizing low-pressure liquid fuel to a high pressure and discharging the same by operating a piston by pressure of operating oil supplied from the low-pressure hydraulic pump 23.

The operating oil control unit 200 performs a control operation of supplying and discharging low-pressure operating oil for operating the piston pump unit 500.

On a side of the operating oil control unit 200, a step motor 40 for valve driving, an operating oil inlet port 200a through which low-pressure operating oil from the low-pressure hydraulic pump 23 is introduced, and an operating oil return port 200b for returning operating oil discharged after operating the piston pump unit 500 to the supply source are provided.

In addition, on a side of the piston pump unit 500, a liquid fuel inlet port 500a through which low-pressure liquid fuel from the low-pressure transfer pipe 32 is introduced, and a liquid fuel discharge port 500b for discharging high-pressure liquid fuel compressed from the piston pump unit 500 toward the cylinder, that is, to the high-pressure liquid fuel inlet line 50, are provided.

With reference to FIG. 5, in the piston pump unit 500 of the liquid fuel pressurizing unit 100, a plurality of plunger pump portions P500 are disposed in parallel, and the operating oil control unit 200 includes a plurality of valve portions V300 for respectively supplying and discharging low-pressure operating oil to the plurality of plunger pump portions P500 disposed in parallel.

In this case, the plurality of valve portions V300 are configured to sequentially operate at equal cycles so that the plurality of plunger pump portions P500 sequentially pressurize and discharge liquid fuel at equal cycles.

The piston pump unit 500 according to the present disclosure may be made in a form provided with a set of the plunger pump portion P500 and the valve portion V300. In addition, as in an example illustrated in FIG. 5, it may be made in a form provided with a plurality of sets (e.g., four sets as in FIG. 5) of the plunger pump portion P500 and the valve portion V300.

The plurality of valve portions V300 may all be formed on one valve shaft 300 rotated by the step motor 40. That is, the plurality of valve portions V300 may be formed by maintaining intervals corresponding to intervals of the plurality of plunger pump portions P500 in an axial direction on a circumference of the one valve shaft 300. According to this, the plurality of valve portions V300 may be simply configured on the one valve shaft 300.

### [Configuration of Liquid Fuel Pressurizing Unit 100]

Next, a configuration of the liquid fuel pressurizing unit 100 will be described in detail. The configuration of the liquid fuel pressurizing unit 100 includes, in detail, a configuration of the operating oil control unit 200 and the valve portion V300 thereof, a configuration of the piston pump unit 500 and the plunger pump portion P500 thereof, and a pressure balance configuration for a control cylinder 212 and the valve shaft 300.

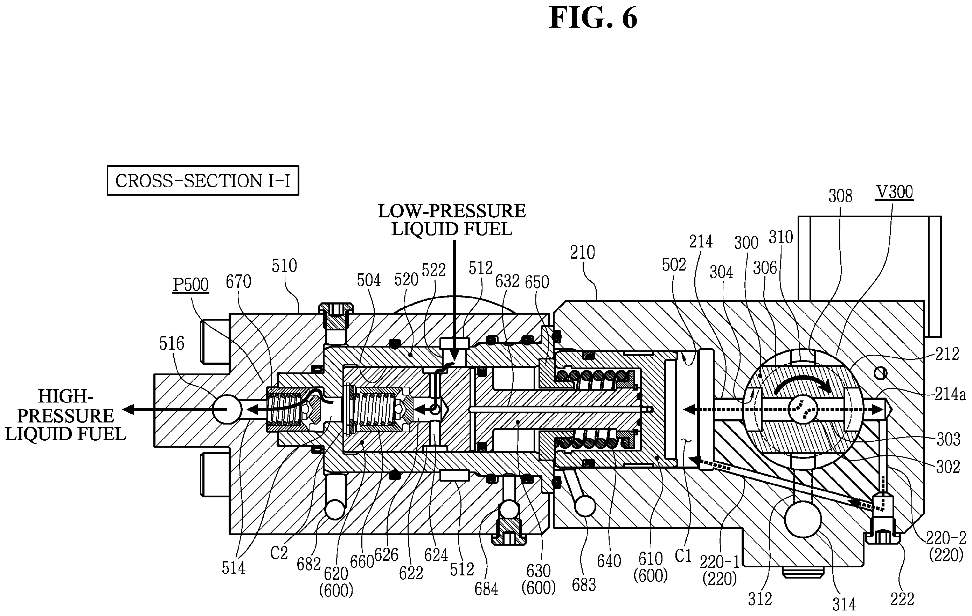

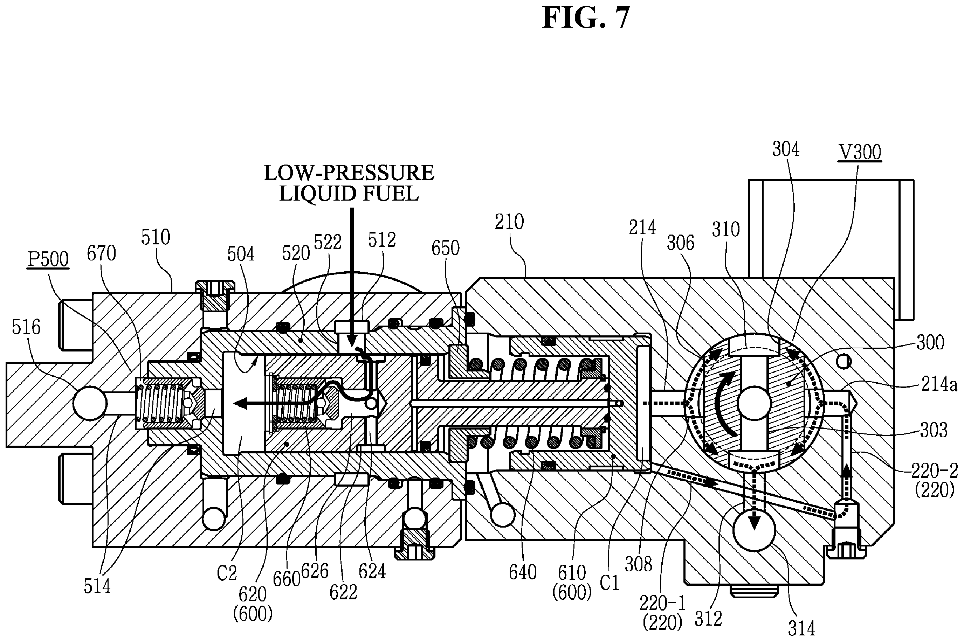

FIG. 6 to FIG. 7 are cross-sectional views along line I-I of FIG. 5 illustrating configurations of the operating oil control unit 200 and the valve portion V300, and the piston pump unit 500 and the plunger pump portion P500 of the liquid fuel pressurizing unit according to the present disclosure. In FIG. 6, a view for explaining a process of pressurizing low-pressure liquid fuel to a high pressure and discharging the same by a pump operation of the liquid fuel pressurizing unit is illustrated, and in FIG. 7, a view for explaining a process in which low-pressure liquid fuel is filled again in a high-pressure chamber C2 of the liquid fuel pressurizing unit is illustrated.

With reference to FIG. 6 to FIG. 7, the operating oil control unit 200 includes a control cylinder 212 formed inside the valve housing 210, a valve shaft 300 of a rotary type for controlling a flow direction of operating oil inside the control cylinder 212, and a valve portion V300 formed on this valve shaft 300.

The plunger pump portion P500 includes a low-pressure part cylinder 502 and a low-pressure chamber C1, a high-pressure part cylinder 504 and a high-pressure chamber C2, a pressurizing plunger 600, and a high-pressure liquid fuel discharge flow path 514, which is an outlet of the high-pressure chamber C2.

The low-pressure part cylinder 502 has a large diameter, and the high-pressure part cylinder 504 has a diameter smaller than that of the low-pressure part cylinder 502.

The pressurizing plunger 600 is configured with a low-pressure part piston 610 having a large diameter moving in the low-pressure part cylinder 502 at one end, a high-pressure part piston 620 having a small diameter moving in the high-pressure part cylinder 504 at an opposite side, and a rod part 630 connecting the low-pressure part piston 610 and the high-pressure part piston 620 into one body.

The pressurizing plunger 600 performs pressure increase by a diameter difference between the low-pressure part piston 610 and the high-pressure part piston 620.

Between the control cylinder 212 and the low-pressure chamber C1, an operating oil supply port 214 is formed.

When operating oil is introduced from a side of the control cylinder 212 into the low-pressure chamber C1 through the operating oil supply port 214, it pushes the low-pressure part piston 610, and the pressurizing plunger 600 moves in a compression direction (a liquid fuel discharge direction). As the pressurizing plunger 600 moves in the compression direction, the high-pressure part piston 620 pressurizes liquid fuel inside the high-pressure chamber C2. The pressurized liquid fuel is fed to the high-pressure liquid fuel inlet line 50 described above through the high-pressure liquid fuel discharge flow path 514.

When pressurizing of liquid fuel is finished, the pressurizing plunger 600 returns again to a release direction (a liquid fuel filling direction) by restoring force of a compression spring 640. Accordingly, the low-pressure part piston 610 pushes out operating oil present inside the low-pressure chamber C1 and discharges the same to the operating oil supply port 214. At the same time, the high-pressure chamber C2 is filled again with low-pressure liquid fuel.

Next, the valve portion V300 will be described in more detail.

The valve portion V300 is formed on an outer circumference of the valve shaft 300 and meets the operating oil supply port 214 according to rotation of the valve shaft 300.

The valve portion V300 is configured with an inlet groove 304 and an outlet groove 306.

In a center part of the valve shaft 300, an operating oil supply flow path 302 is formed along an axial direction. From the operating oil supply flow path 302 to the inlet groove 304, an operating oil distribution flow path 303 is penetratively formed in a radial direction.

Accordingly, when the inlet groove 304 meets and communicates with the operating oil supply port 214, operating oil supplied from the operating oil supply flow path 302 is introduced into the inlet groove 304 along the operating oil distribution flow path 303, and enters the low-pressure chamber C1 from the inlet groove 304 through the operating oil supply port 214.

The outlet groove 306 communicates with a drain recess 312 provided in the valve housing 210, and the drain recess 312 is connected to a drain flow path 314.

Actually, for discharge of operating oil introduced into the outlet groove 306, as will be described in detail later, a communication slot 308 formed in an axial direction from the outlet groove 306, and a drain groove 310 recessed in a form of an annular groove on the outer circumference of the valve shaft 300 at an end of the communication slot 308 are further included. The drain groove 310 and the drain recess 312 are communicating at all times.

Accordingly, when the valve shaft 300 rotates and the outlet groove 306 meets the operating oil supply port 214, operating oil that was inside the low-pressure chamber C1 comes out to the outlet groove 306 through the operating oil supply port 214. Further, it flows to the drain recess 312 after passing through the communication slot 308 and the drain groove 310 from the outlet groove 306 in order, and then is discharged through the drain flow path 314.

As illustrated in FIG. 6 and FIG. 7, in the present disclosure, a total of two inlet grooves 304 are formed in symmetrical shapes on both left and right sides on a cross section of the valve shaft 300. A total of two outlet grooves 306 are formed in symmetrical shapes on both left and right sides in a direction orthogonal to the inlet grooves 304. That is, two inlet grooves 304 and two outlet grooves 306 are respectively formed.

Accordingly, while the valve shaft 300 performs one rotation, two inlet grooves 304 and two outlet grooves 306 alternately meet the operating oil supply port 214. Thus, a total of two operating oil supply/discharge operations are performed per one rotation of the valve shaft 300. According to this, the pressurizing plunger 600 performs a total of two liquid fuel pressurizing (discharge) operations.

As such, if two liquid fuel pressurizing strokes are performed per one rotation of the valve shaft 300, a discharge time interval of high-pressure liquid fuel is narrowed, so that a uniform peak pressure having small pressure fluctuation may be maintained inside a common discharge flow path 516 of the high-pressure chamber C2 and the common rail 60, and a pressure pulsation phenomenon may also be reduced. Accordingly, liquid fuel may be stably supplied to a fuel injection valve of a cylinder with small pressure fluctuation.

Next, a pressure balance flow path configuration will be described in detail.

The pressure balance flow path causes pressure of operating oil acting on the valve shaft 300 to act uniformly even at an opposite side of the operating oil supply port 214, thereby preventing vibration of the valve shaft 300, uneven wear of the valve shaft 300, or the like, to aim at operation stabilization of the operating oil control unit 200 and prevent vibration, noise, and shortening of life.

With reference to FIG. 6 to FIG. 7, in the valve housing 210, when based on a cross-sectional center of the valve shaft 300, an opposite port 214a communicating with the control cylinder 212 at a diametrically opposite side of the operating oil supply port 214 is formed.

The opposite port 214a is made of a groove of the same diameter as the operating oil supply port 214, and provides a symmetrical space through which operating oil may be introduced even at the opposite side of the operating oil supply port 214.

The opposite port 214a is connected by the low-pressure chamber C1 and a pressure balance flow path 220.

The pressure balance flow path 220 may be formed in the valve housing 210 so as to bypass the control cylinder 212. This may be made of a first balance flow path 220-1 connected to the low-pressure chamber C1, and a second balance flow path 220-2 connected to this first balance flow path 220-1 and connected to the opposite port 214a, as illustrated in the drawings. This may perforate the first balance flow path 220-1 by advancing a drill inward from an inlet side of the low-pressure part cylinder 502 inside the valve housing 210, and may perforate the second balance flow path 220-2 by advancing a drill into the valve housing 210 from an outside. An inlet (drill entry hole) of the second balance flow path 220-2 is blocked with a plug 222.

As illustrated in FIG. 6, when the inlet groove 304 meets the operating oil supply port 214 (that is, during a compression stroke), and as illustrated in FIG. 7, when the outlet groove 306 meets the operating oil supply port 214, pressure of operating oil of the low-pressure chamber C1 acting through the operating oil control unit 200 also acts simultaneously and identically on the opposite port 214a at the opposite side of the operating oil supply port 214.

Accordingly, since operating oil acts with the same pressure on both sides of the valve shaft 300, the valve shaft 300 under load may achieve balance of a radial load.

In the present disclosure, the pressure balance flow path 220 is described as a structure perforated by, for example, drill processing in the valve housing 210, but the low-pressure chamber C1 and the opposite port 214a may also be connected by a pipe or a hose bypassing the outside of the valve housing 210.

Next, a configuration of the plunger pump portion P500 of the piston pump unit 500 will be described in more detail.

Previously, it was described that the plunger pump portion P500 includes a low-pressure part cylinder 502 having a large diameter filled with operating oil, a high-pressure part cylinder 504 having a small diameter pressurizing low-pressure liquid fuel, a pressurizing plunger 600 in which a low-pressure part piston 610 and a high-pressure part piston 620 are formed on both sides, and a high-pressure liquid fuel discharge flow path 514 for sending high-pressure liquid fuel, which is pressurized by the high-pressure part piston 620 and of which pressure is increased, toward the cylinder.

In addition to this, in the pump housing 510, a separate cylinder liner 520 forming the high-pressure part cylinder 504 may be inserted and installed.

The cylinder liner 520 is for forming the high-pressure part cylinder 504, so as to be easily replaced in preparation for wear of the high-pressure part cylinder 504, and enables formation of a supply flow path of liquid fuel or installation of the pressurizing plunger 600 or the like described below to be easily performed.

In such a cylinder liner 520, a plurality of low-pressure liquid fuel distribution holes 522 are penetratively formed in a radial direction. In the pump housing 510, a low-pressure liquid fuel inlet groove 512 in contact with the plurality of low-pressure liquid fuel distribution holes 522 is formed in a form of an annular groove.

Low-pressure liquid fuel supplied from the low-pressure liquid fuel pump 31 is introduced into the low-pressure liquid fuel inlet groove 512 and enters the low-pressure liquid fuel distribution hole 522.

On an outer circumference of the high-pressure part piston 620, an inlet groove 622 in contact with and communicating with the low-pressure liquid fuel distribution hole 522 is formed, and from the inlet groove 622, a plurality of distribution passages 624 are formed in a radial direction toward an axial center of the high-pressure part piston 620.

In addition, an inlet passage 626 connecting inner ends of the plurality of distribution passages 624 is penetratively formed to an end along an axial direction of the high-pressure part piston 620.

Accordingly, low-pressure liquid fuel introduced into the low-pressure liquid fuel distribution hole 522 may pass through the inlet groove 622, the distribution passage 624, and the inlet passage 626 again in order and be filled in the high-pressure chamber C2.

At an outlet of the high-pressure liquid fuel discharge flow path 514, a common discharge flow path 516 is formed. High-pressure liquid fuel discharged from the high-pressure liquid fuel discharge flow path 514 gathers in the common discharge flow path 516 and is fed to the high-pressure liquid fuel inlet line 50 connected thereto.

Inside the low-pressure part piston 610, a compression spring 640 is installed. The compression spring 640, when discharge of liquid fuel inside the high-pressure chamber C2 is completed and pressure inside the high-pressure chamber C2 is released, pushes the low-pressure part piston 610 in an opposite direction to compression by spring restoring force and discharges operating oil of the low-pressure chamber C1. In this case, low-pressure liquid fuel is filled again in the high-pressure chamber C2 through the low-pressure liquid fuel inlet groove 512 -> inlet groove 622 -> distribution passage 624 -> inlet passage 626.

Meanwhile, in the low-pressure liquid fuel inlet passage 626, a first check valve 660 may be installed, and in the high-pressure liquid fuel discharge flow path 514, a second check valve 670 may be installed.

The first check valve 660 closes the inlet passage 626 at all times, so as to prevent liquid fuel inside the high-pressure chamber C2 from flowing back when the pressurizing plunger 600 moves in the compression direction, so that pressure inside the high-pressure chamber C2 may be increased to a set pressure. In addition, when discharge of high-pressure liquid fuel is completed and the pressure inside the high-pressure chamber C2 is released, it is opened by pressure of low-pressure liquid fuel acting on the inlet passage 626, so as to enable low-pressure liquid fuel to be filled again inside the high-pressure chamber C2.

The second check valve 670 closes the high-pressure liquid fuel discharge flow path 514 at all times. Accordingly, while preventing high-pressure liquid fuel on a side of the common discharge flow path 516 on which pressure of the common rail is acting from flowing back to the high-pressure chamber C2, the high-pressure chamber C2 is sealed so that low-pressure liquid fuel may be filled as much as a predetermined amount inside the high-pressure chamber C2.

The second check valve 670, when liquid fuel pressure inside the high-pressure chamber C2 increases to a set pressure (e.g., 650 bar) by a pressurizing action of the pressurizing plunger 600, operates in a direction of opening the high-pressure liquid fuel discharge flow path 514 so that pressurized high-pressure liquid fuel may be discharged.

In the present disclosure, the low-pressure part cylinder 502 may be formed on a side of the valve housing 210, and the high-pressure part cylinder 504 may be formed on a side of the pump housing 510. By dividing and forming the low-pressure part cylinder 502 and the high-pressure part cylinder 504 in the valve housing 210 and the pump housing 510, respectively, processing of the low-pressure part cylinder 502 and the high-pressure part cylinder 504 is easy, and assembly of the cylinder liner 520 and the pressurizing plunger 600 may be conveniently performed.

With reference to FIG. 6, compression and discharge strokes of the pressurizing plunger 600 will be described.

While the valve shaft 300 rotates, when the inlet groove 304 meets and communicates with the operating oil supply port 214, operating oil introduced from the operating oil supply flow path 302 is introduced into the inlet groove 304 along the operating oil distribution flow path 303. Further, it enters the low-pressure chamber C1 through the operating oil supply port 214, the opposite port 214a, and the pressure balance flow path 220 from the inlet groove 304.

The operating oil entered into the low-pressure chamber C1 pushes the low-pressure part piston 610, and by that, the pressurizing plunger 600 moves in the compression direction (left in FIG. 6), so that the high-pressure part piston 620 pressurizes low-pressure liquid fuel filled in the high-pressure chamber C2.

In this case, the first check valve 660 maintains a state of blocking the inlet passage 626 by compression pressure of the high-pressure chamber C2.

When the pressure of the high-pressure chamber C2 reaches the set pressure according to the pressurizing action of the high-pressure part piston 620, the second check valve 670 is opened, and thus, the pressurized liquid fuel is discharged to the common discharge flow path 516 through the high-pressure liquid fuel discharge flow path 514.

As in FIG. 6, when the high-pressure part piston 620 is moved to the end and discharge of liquid fuel is completed, the pressure of the high-pressure chamber C2 is released.

Accordingly, as in FIG. 7, the first check valve 660 is opened by the pressure of low-pressure liquid fuel introduced through the inlet passage 626, so that low-pressure liquid fuel is filled again in the high-pressure chamber C2.

At the same time, the pressurizing plunger 600 moves in the liquid fuel filling direction (or, an operating oil discharge direction, right in FIG. 6) by the restoring force of the compression spring 640.

Then, as in FIG. 7, operating oil that was in the low-pressure chamber C1 goes out to the outlet groove 306 of the valve shaft 300 through the operating oil supply port 214, the pressure balance flow path 220, and the opposite port 214a, and goes out again to the drain groove 310 through the communication slot 308 from the outlet groove 306, and is discharged to the drain flow path 314 through the drain recess 312 from the drain groove 310 again.

Such pressurizing and filling strokes are performed twice per every one rotation of the valve shaft 300 by two inlet grooves 304 and two outlet grooves 306 each, as described above.

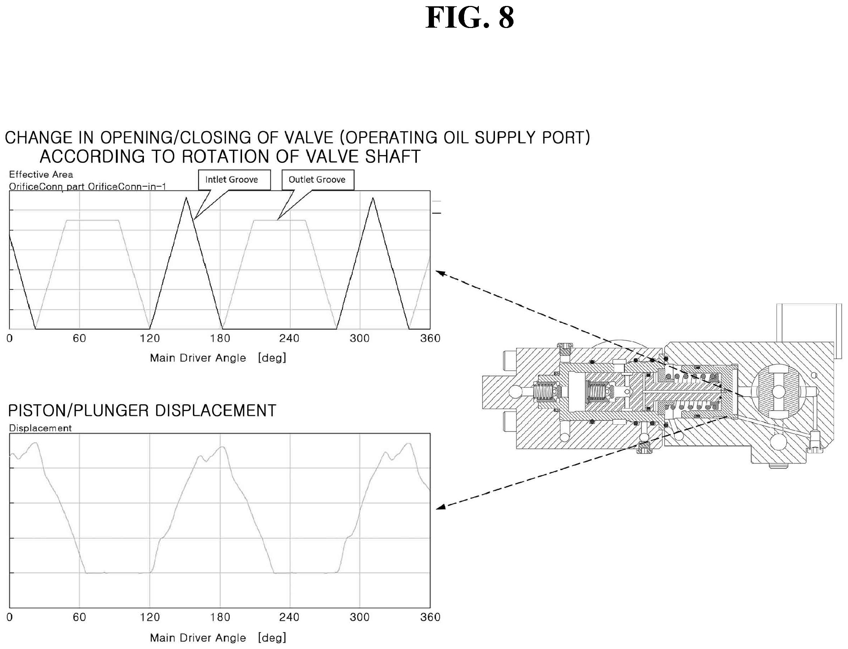

In FIG. 8, a view for explaining an opening/closing change of the valve portion V300 and displacement of the pressurizing plunger 600 according to rotation of the valve shaft 300 is illustrated.

As described above, two inlet grooves 304 and two outlet grooves 306 are respectively formed on both orthogonal sides of the valve shaft 300.

Accordingly, while the valve shaft 300 performs one rotation, two inlet grooves 304 and two outlet grooves 306 alternately meet the operating oil supply port 214. Therefore, a total of two operating oil supply/discharge operations are performed per one rotation of the valve shaft 300, and a total of two liquid fuel pressurizing/filling operations are performed. Accordingly, the discharge time interval of high-pressure liquid fuel is narrowed, so that a uniform peak pressure having small pressure fluctuation may be maintained inside the common discharge flow path 516 of the high-pressure chamber C2 and the common rail 60.

### [A Plurality of Parallel Type Liquid Fuel Pressurizing Units 100]

Next, an embodiment in which a plurality of plunger pump portions P500 and valve portions V300 are installed in parallel will be described.

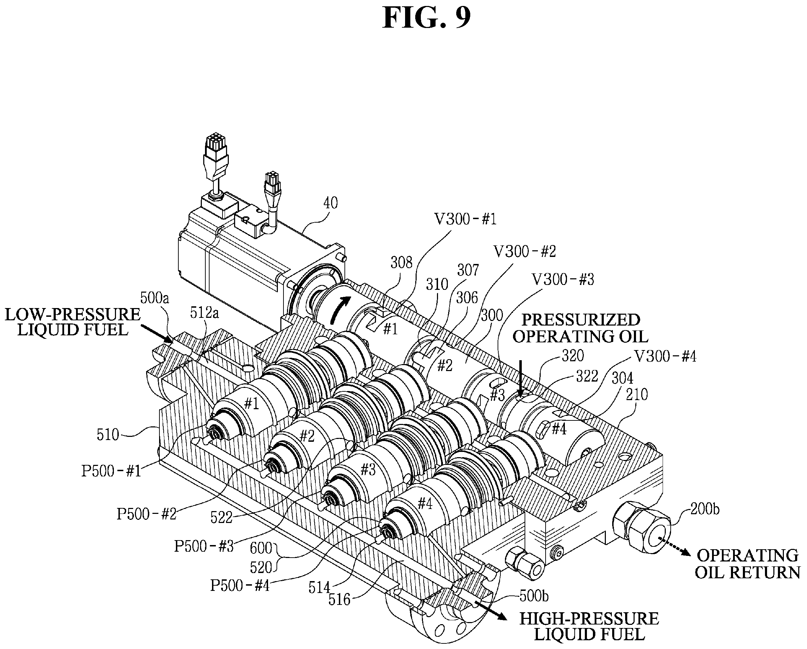

In FIG. 9 to FIG. 18, views for explaining the liquid fuel pressurizing unit of such a plurality of parallel type are illustrated.

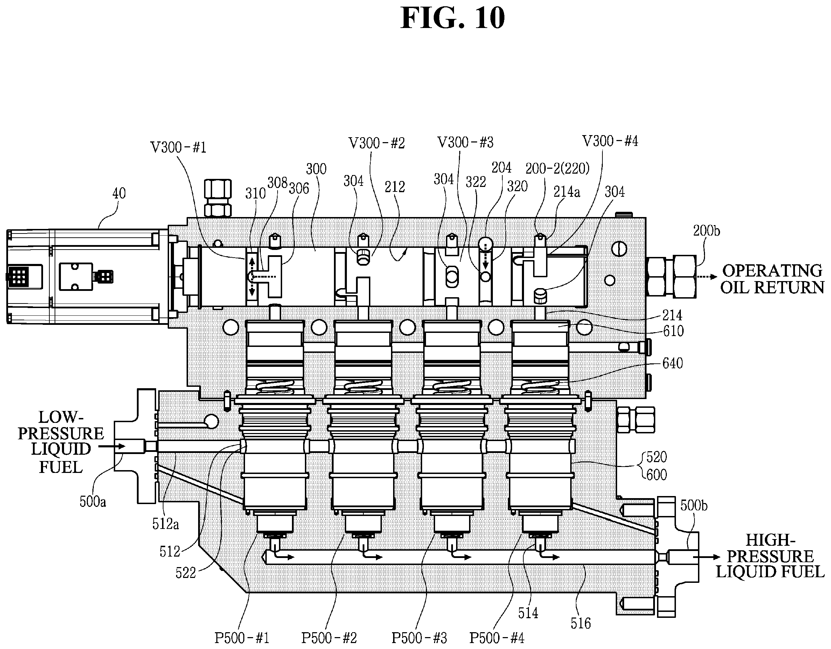

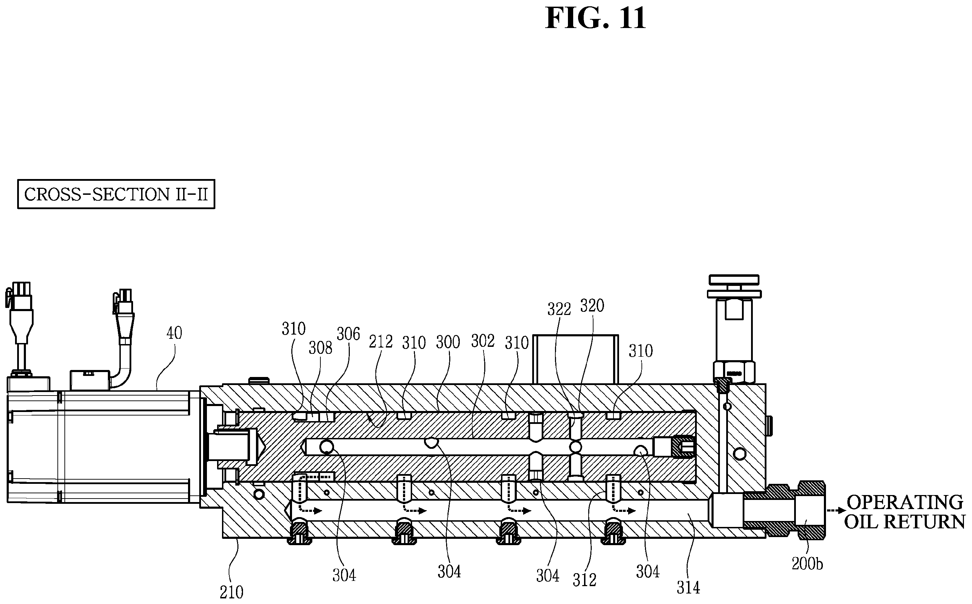

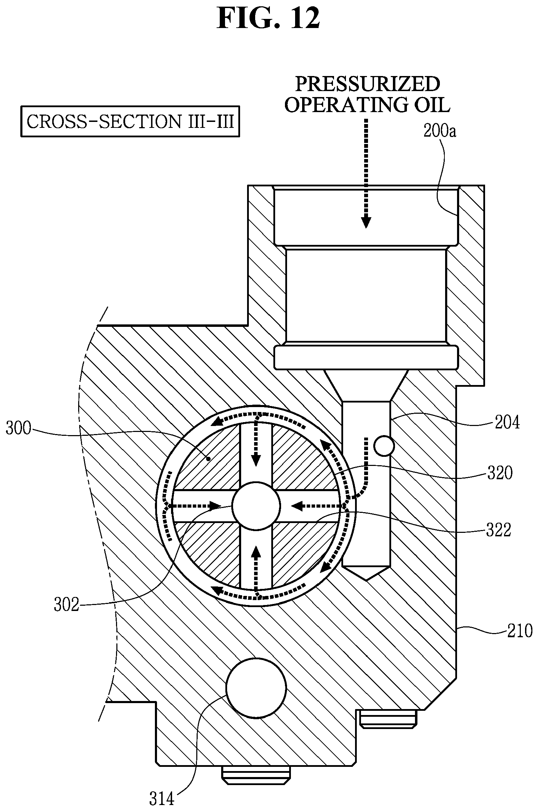

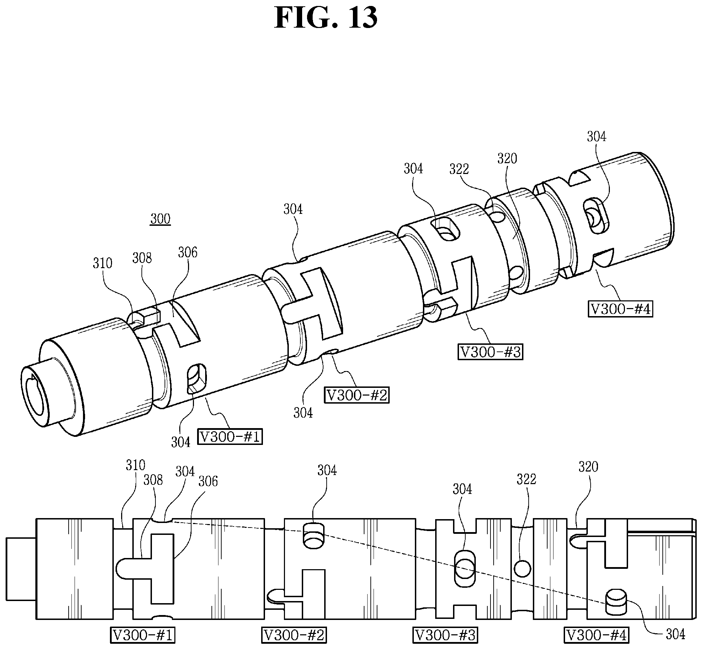

In FIG. 9, an overall cross-sectional perspective view is illustrated, in FIG. 10, a plan view is illustrated, in FIG. 11, a cross-sectional view along line II-II of FIG. 5 is illustrated, in FIG. 12, a cross-sectional view along line III-III of FIG. 5 is illustrated, in FIG. 13, a form of the valve shaft 300 is illustrated, and in FIG. 13, one valve portion V300 and an operating oil inlet groove 320 are illustrated.

With reference to FIG. 9 to FIG. 14, the valve shaft 300 has a configuration in which a plurality of valve portions V300 are formed by maintaining certain intervals in an axial direction. Corresponding to the plurality of valve portions V300, a plurality of plunger pump portions P500 are disposed in parallel. As such, by designing with a configuration having all valves for controlling the plurality of plunger pump portions P500 in the one valve shaft 300, an overall structure of the liquid fuel pressurizing unit 100 including a valve device becomes simple and may be compactly configured.

In the present embodiment, a form provided with four valve portions V300 and four plunger pump portions P500 is described, but the number may be increased or decreased as necessary.

One valve portion V300 has, as described above, two inlet grooves 304 and two outlet grooves 306. Each inlet groove 304 and outlet groove 306 are connected by a communication slot 308.

In addition, on the outer circumference of the valve shaft 300, one operating oil inlet groove 320 for supplying operating oil to the plurality of valve portions V300 is formed. From the operating oil inlet groove 320, an operating oil supply hole 322 is perforated in a radial direction. The operating oil supply hole 322 is configured to communicate with the operating oil supply flow path 302 formed long along an axial center of the valve shaft 300.

As illustrated in FIG. 12, operating oil transferred from the low-pressure hydraulic pump 23 enters a connection flow path 204 through an operating oil inlet port 200a formed in the valve housing 210. The operating oil entered into the connection flow path 204 is introduced into the operating oil inlet groove 320 formed in the valve shaft 300 and moves in a circumferential direction, while moving toward an inside in a radial direction through the plurality of operating oil supply holes 322 to be introduced into the operating oil supply flow path 302.

While the operating oil supply flow path 302 is formed long along the axial center of the valve shaft 300, it is communicating with an operating oil distribution flow path 303 (refer to FIG. 6 to FIG. 7) on a side of the valve portion V300, and thus is supplied to the inlet groove 304 through this operating oil distribution flow path 303.

Meanwhile, with reference to FIG. 9 to FIG. 10, in the pump housing 510, a liquid fuel supply passage 512a for supplying low-pressure liquid fuel from the liquid fuel inlet port 500a is formed. The low-pressure liquid fuel introduced into the liquid fuel inlet port 500a is supplied to the low-pressure liquid fuel inlet groove 512 and the low-pressure liquid fuel distribution hole 522 of each plunger pump portion P500 through the liquid fuel supply passage 512a.

In addition, in the pump housing 510, for each valve portion V300 and plunger pump portion P500, the operating oil supply port 214 and the high-pressure liquid fuel discharge flow path 514 described above are formed correspondingly, respectively.

The high-pressure liquid fuel discharge flow path 514 of each plunger pump portion P500 is connected to one common discharge flow path 516. Accordingly, high-pressure liquid fuel discharged through the high-pressure liquid fuel discharge flow path 514 of each plunger pump portion P500 joins at the common discharge flow path 516 and then is sent to the high-pressure liquid fuel inlet line 50 and the common rail 60 through the liquid fuel discharge port 500b.

Next, the plurality of valve portions V300 are formed so as to have a phase difference of equal angles (equal intervals) with each other in a rotational direction of the valve shaft 300.

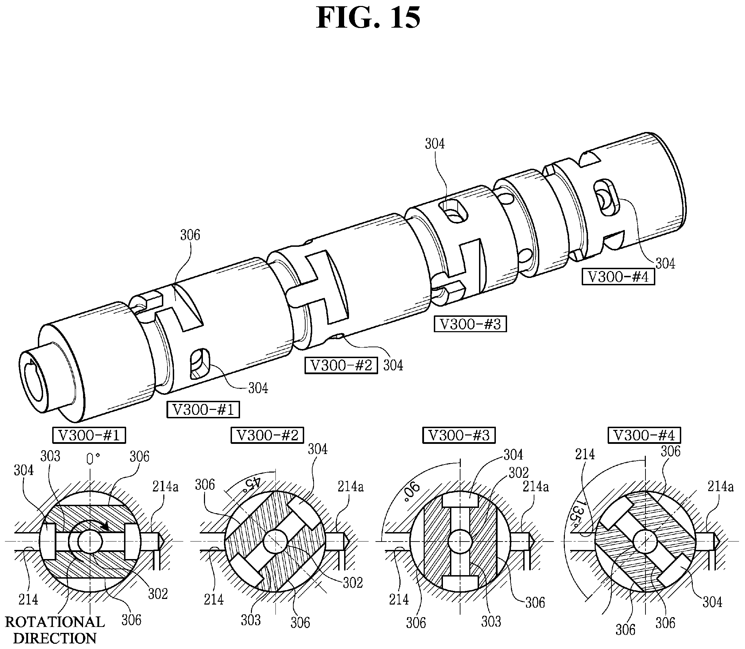

That is, as illustrated in FIG. 13 and FIG. 15, when based on the rotational direction of the valve shaft 300, any one valve portion V300 preceding toward the operating oil supply port 214 and another valve portion V300 following immediately next have a phase difference of 360°/2N in a circumferential direction (here, 'N' is the number of the valve portions V300).

For example, if the number of the valve portions V300 is four (V300-#1 to V300-#4) as in the embodiment illustrated in the drawings, since two inlet grooves 304 and outlet grooves 306 are formed in one valve portion V300, 2N=8, and thus the phase difference between the preceding valve portion V300 and the valve portion V300 following immediately next becomes 45° (=360°/8) (refer to FIG. 15).

In FIG. 15, an embodiment having a phase difference of 45° in order from the first valve portion V300-#1 to the fourth valve portion V300-#4 is illustrated.

However, it is sufficient if the plurality of valve portions V300 have a phase difference so as not to overlap each other, and it is not necessarily required to sequentially have the corresponding phase difference according to an order formed on the valve shaft 300.

For example, when based on the first valve portion V300-#1, any one valve portion (e.g., V300-#3) except the first valve portion V300-#1 is caused to have a phase difference of 45°, and with respect to that valve portion V300-#3, any other one valve portion (e.g., V300-#4) except the above two valve portions V300-#1, #3 is caused to have a phase difference of 45°, and with respect to that valve portion V300-#4, the remaining one valve portion V300-#2 may be caused to have a phase difference of 45°. In this case, pressurizing/discharge of liquid fuel is performed in an order of V300-#1 → V300-#3 → V300-#4 → V300-#2.

As such, one valve portion V300 has two inlet grooves 304 and outlet grooves 306, and while the valve portion V300 and the plunger pump portion P500 are provided in plurality, the plurality of valve portions V300 are configured to have the phase difference of 360°/2N with each other. Accordingly, every time the valve shaft 300 performs one rotation, 2N times of operating oil supply/discharge operations are performed at equal intervals, and according to that, 2N times of liquid fuel pressurizing/discharge operations are performed at equal intervals. According to such a configuration, a discharge interval of high-pressure liquid fuel may be made shorter, and according to that, pressure fluctuation of liquid fuel is even less and a uniform peak pressure may be maintained inside the common discharge flow path 516 at a rear end of the high-pressure chamber C2 and the common rail 60, and the pressure pulsation may be reduced. Accordingly, liquid fuel of a uniform and stable peak pressure may be supplied to a fuel injection valve of a cylinder.

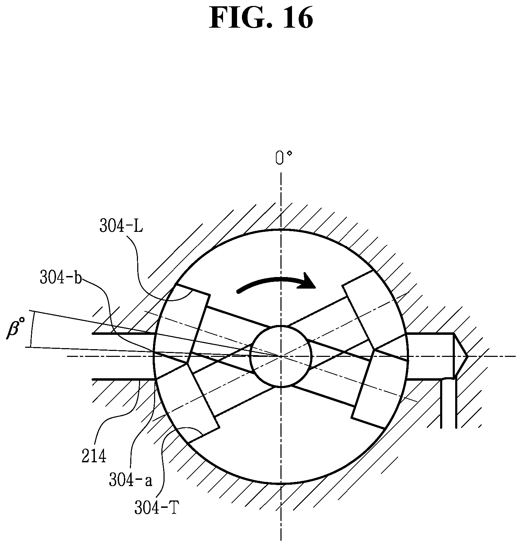

Next, in FIG. 16, a view for explaining an overlap of the inlet groove 304 is illustrated.

The overlap of the inlet groove 304 is, in a form provided with a plurality of valve portions V300, set such that at a time point when a trailing end 304-b of the inlet groove 304-L (illustrated as a solid line) of any one valve portion V300, which is in the middle of supplying operating oil by communicating with the operating oil supply port 214, does not deviate from the operating oil supply port 214 based on the rotational direction of the valve shaft 300, a leading end 304-a of the inlet groove 304-T (illustrated as a dotted line) of another valve portion V300 following immediately next meets the operating oil supply port 214 to start supply of operating oil.

In this case, an angle at which the trailing end 304-b of the inlet groove 304-L of the preceding valve portion V300 and the operating oil supply port 214 overlap is an overlap angle (β°). That is, the two inlet grooves 304 of the preceding valve portion V300 and the following valve portion V300 are simultaneously opened to the operating oil supply port 214 for a certain time.

In other words, at a time point when the leading end 304-a of the inlet groove 304-T of any one following valve portion V300 meets the operating oil supply port 214 to start the supply of operating oil, the trailing end 304-b of the inlet groove 304-L of the other one valve portion V300 immediately preceding it is made to be in a state of still continuing to supply operating oil by communicating with the operating oil supply port 214 by the overlap angle (β°).

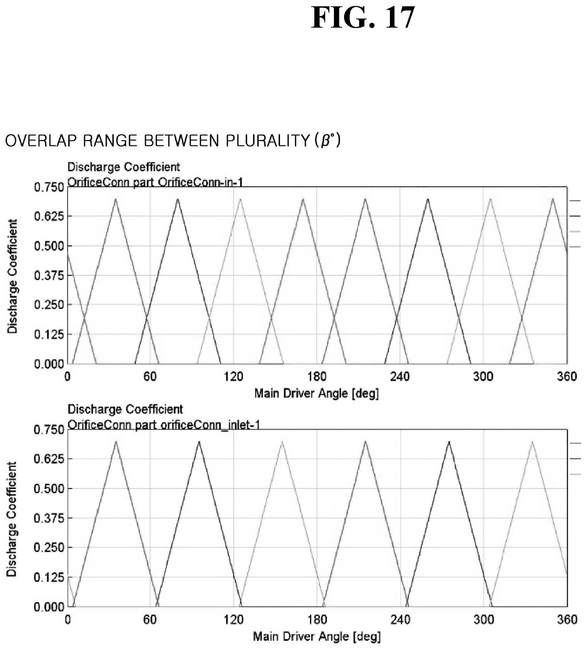

In FIG. 17, as a graph for setting a range of such an overlap angle (β°), according to experiments, the overlap angle (β°) may be set to a range of 5 to 25°.

Within the range (5 to 25°), the overlap angle (β°) may be set by increasing or decreasing a size of a width in the rotational direction of each inlet groove 304.

In addition, in determining the overlap range, for example, the operating oil supply port 214 is designed with a diameter such that operating oil may be introduced and discharged at a flow velocity and a flow rate suitable for a pressurizing capacity, an operation cycle, and a speed of the pressurizing plunger 600. Accordingly, the width in the rotational direction of the inlet groove 304 is designed with a size suitable for the diameter of the operating oil supply port 214.

In addition, it should be considered that as the diameter of the operating oil supply port 214 increases, the width of the inlet groove 304 also increases, and thus eventually a diameter of the valve shaft 300 must increase, so that an overall size of the liquid fuel pressurizing unit 100 increases. In addition, it is necessary to design by considering a point that if the size and the overlap range of the inlet groove 304 become excessively large, strength of the valve shaft 300 may become weak.

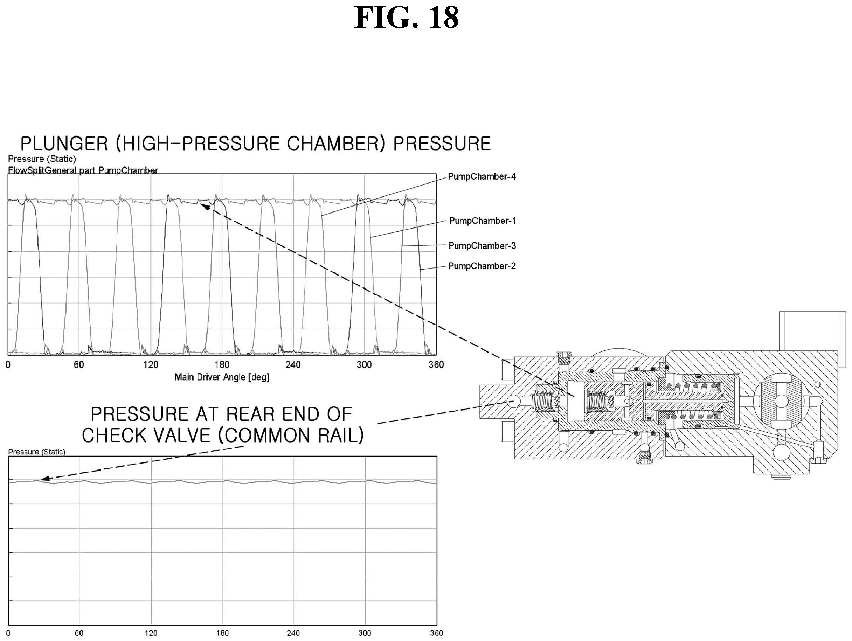

In FIG. 18, a view illustrating a pressure change of the common discharge flow path 516 and the common rail 60 when applying the configuration as described above is illustrated.

That is, while adopting a plurality of valve portions V300 and plunger pump portions P500, it may be seen that the peak pressure is maintained flat in the common discharge flow path 516 and the common rail 60 when the overlap angle (β°) of the inlet groove 304 is applied at 5 to 25°.

That the peak pressure is maintained flat means that liquid fuel pressure inside the common discharge flow path 516 and the common rail 60 is continuously and uniformly maintained at a maximum pressure (with small pressure fluctuation). Accordingly, the liquid fuel pressurizing unit 100 may be implemented, which maintains a uniform peak pressure with even less pressure fluctuation inside the common discharge flow path 516 and the common rail 60 and may reduce the pressure pulsation, and may stably supply liquid fuel to the fuel injection valve of the cylinder with small pressure fluctuation.

In the above, the liquid fuel pressurizing unit 100 was described as a unit for pressurizing liquid "fuel", but it is obvious that the liquid fuel pressurizing unit 100 according to the present disclosure may be used as a unit for pressurizing not only liquid "fuel" but also liquid "control oil" or "sealing oil". As the control oil or the sealing oil, hydraulic oil (hydraulic operating oil), lubricating oil, or the like mainly used in a hydraulic system or a lubrication system may be mentioned. For example, the hydraulic oil or the lubricating oil may be pressurized to a high pressure through the liquid fuel pressurizing unit 100 of the present disclosure and supplied as control oil (or pilot oil) or operating oil (working oil) to an operating part, supplied as sealing oil to a sealing part, or supplied as lubricating oil to a lubrication part.

### [Liquid Fuel Supply Line - Example 1]

Next, an embodiment of a liquid fuel supply line (a high-pressure liquid fuel supply line) constituting the liquid fuel supply system according to the present disclosure will be described.

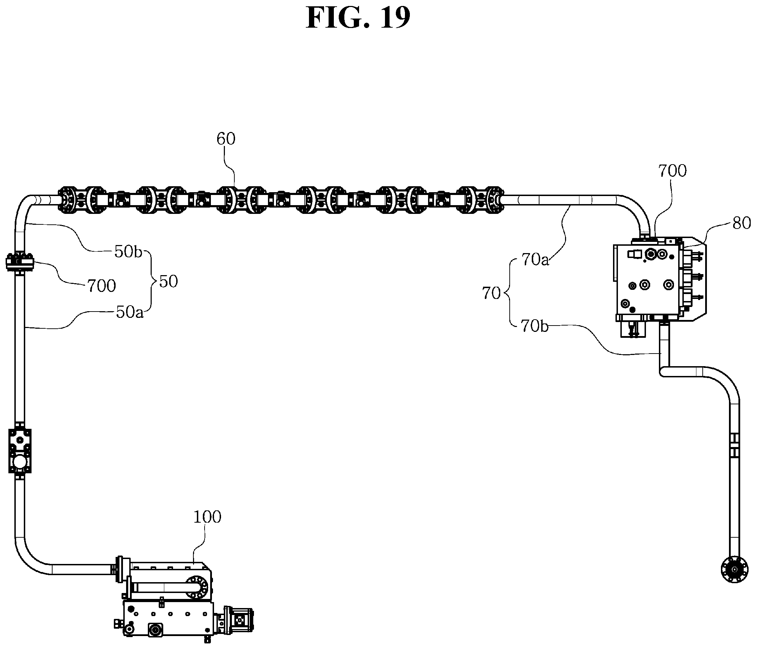

FIG. 19 to FIG. 26 are views illustrating a liquid fuel supply line according to a first embodiment of the present disclosure.

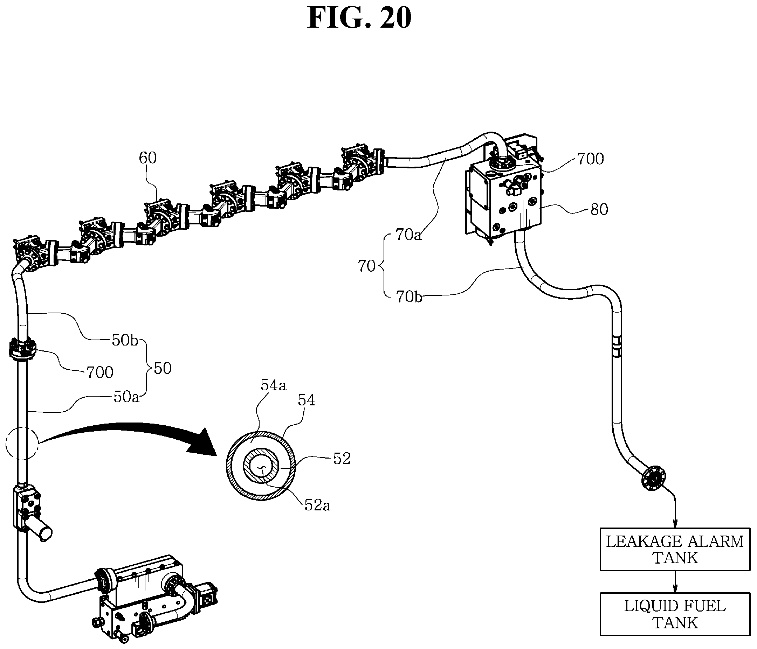

First, in FIG. 19, a front view illustrating an example of a liquid fuel supply line constituting the liquid fuel supply system is illustrated, and in FIG. 20, a perspective view is illustrated.

With reference to FIG. 19 to FIG. 20, the liquid fuel supply line of the present disclosure is configured by including a high-pressure liquid fuel inlet line 50 which is a high-pressure double pipe connected toward an engine cylinder from the liquid fuel pressurizing unit 100, a common rail 60 connected with the high-pressure liquid fuel inlet line 50 and for feeding high-pressure liquid fuel to the engine cylinder, and a discharge line 70 which is a high-pressure double pipe connected to an outlet of the common rail 60.

In the present embodiment, a configuration is disclosed in which the high-pressure liquid fuel inlet line 50 is divided into a first inlet line 50a on an upstream side and a second inlet line 50b on a downstream side in a liquid fuel flow direction, and the divided first inlet line 50a and second inlet line 50b are connected by a connection part for leakage detection 700.

The connection part for leakage detection 700 is a connection part to which a separator for leakage detection 850, which will be described later according to the present disclosure, is attachable/detachable. This connection part for leakage detection 700 maintains a state of being always mounted during operation except at a time of maintenance or replacement.

The connection part for leakage detection 700 is configured to connect the first inlet line 50a and an annular space 54a between the first inlet line 50a and the second inlet line 50b, while being made of a structure in which the separator 850 for inserting a leakage detection sensor 860, which will be described later, is attachable/detachable while disconnecting the connection of the annular space 54a at a time of leakage detection.

In the discharge line 70, a safety valve unit 80 may be installed. In addition, the discharge line 70 may be divided into a first discharge line 70a and a second discharge line 70b based on the safety valve unit 80, and the connection part for leakage detection 700 may be mounted at the divided part.

The safety valve unit 80 plays a role of regulating pressure through discharge of liquid fuel in a case where pressure becomes excessively high, while maintaining the pressure of the common rail 60 constantly. In addition, it is used according to necessity such as at a time of emergency or maintenance.

With reference to FIG. 20, the high-pressure liquid fuel inlet line 50 and the discharge line 70 have a high-pressure double pipe structure, and are configured with an inner pipe 52 forming a main fuel line 52a inside, and an outer pipe 54 forming an annular space 54a, which is a space in a radial direction, outside the inner pipe 52.

High-pressure (e.g., 650 bar) liquid fuel discharged from the liquid fuel pressurizing unit 100 is transferred through the main fuel line 52a of the high-pressure liquid fuel inlet line 50.

Inert gas may be made to flow through the annular space 54a. At a downstream end of the discharge line 70, a leakage alarm tank (not illustrated) for recovering fuel leaked into the annular space and displaying or notifying whether or not leakage occurs is provided.

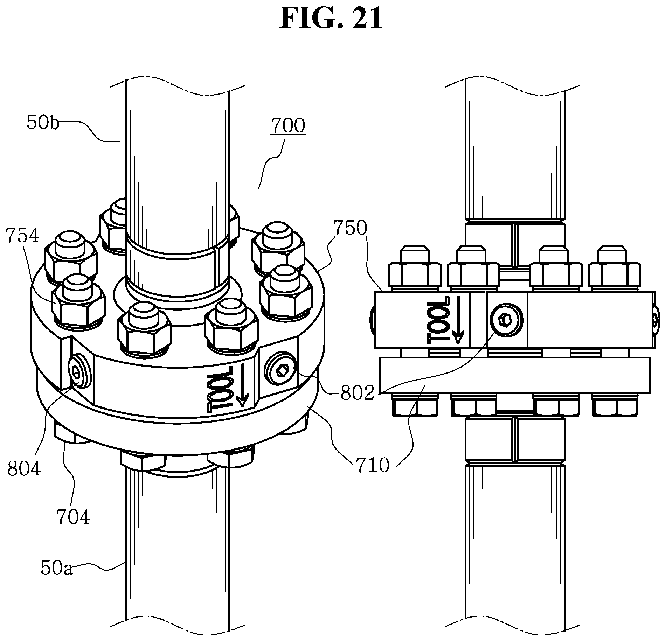

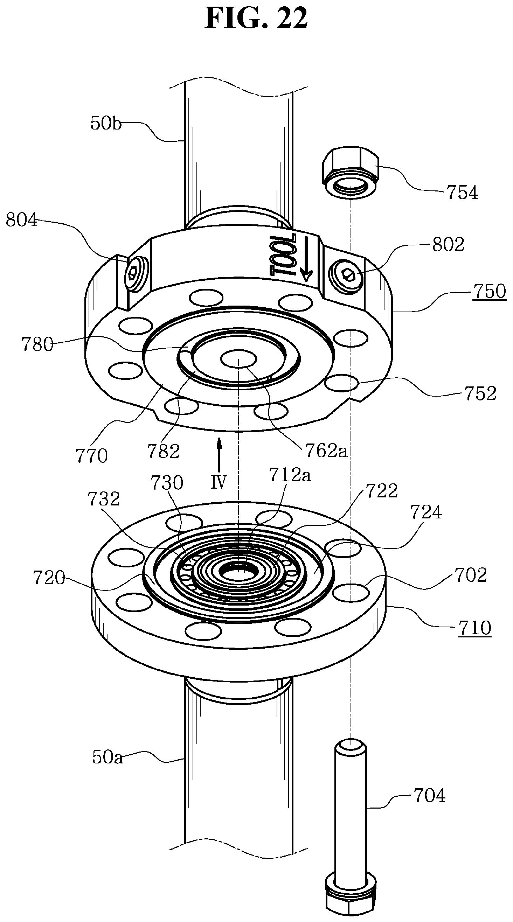

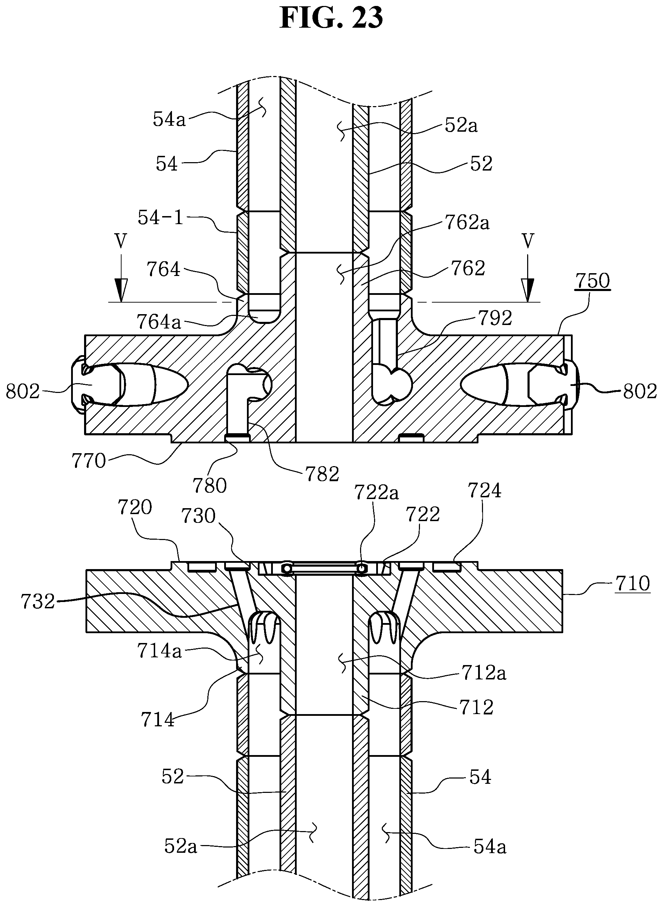

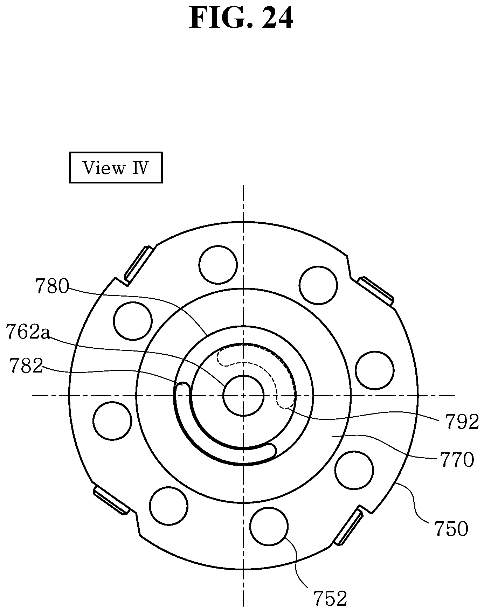

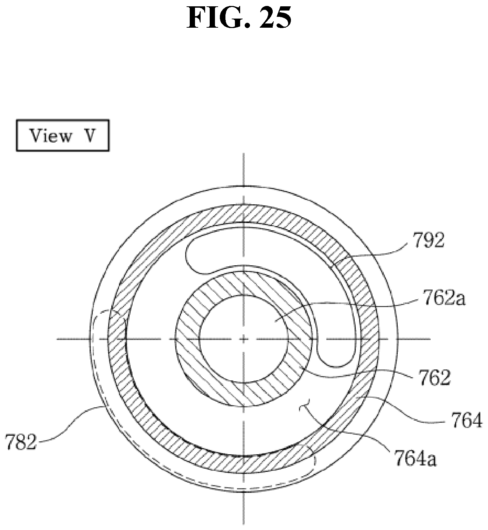

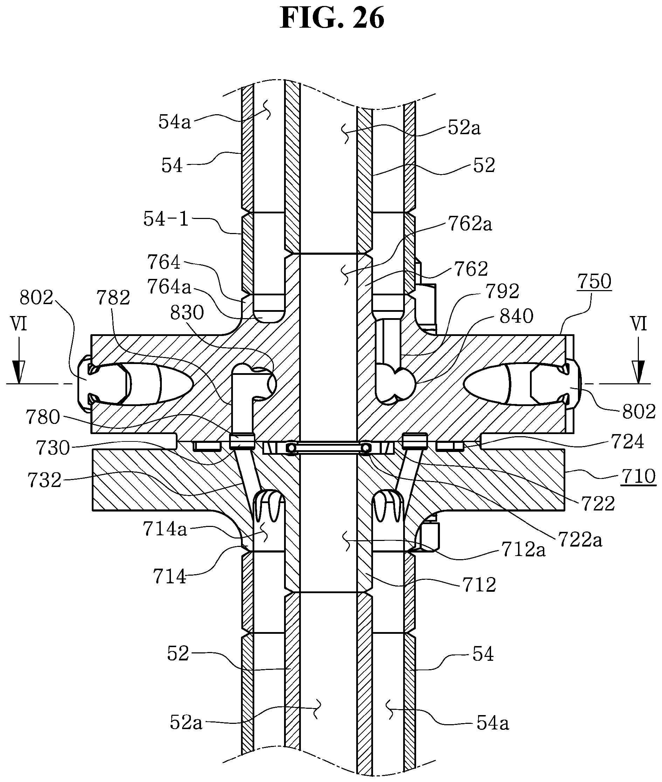

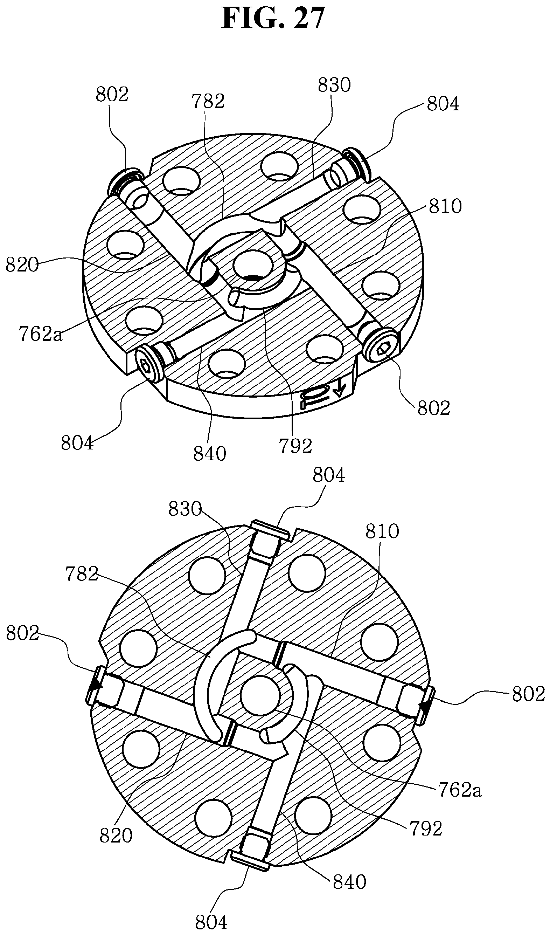

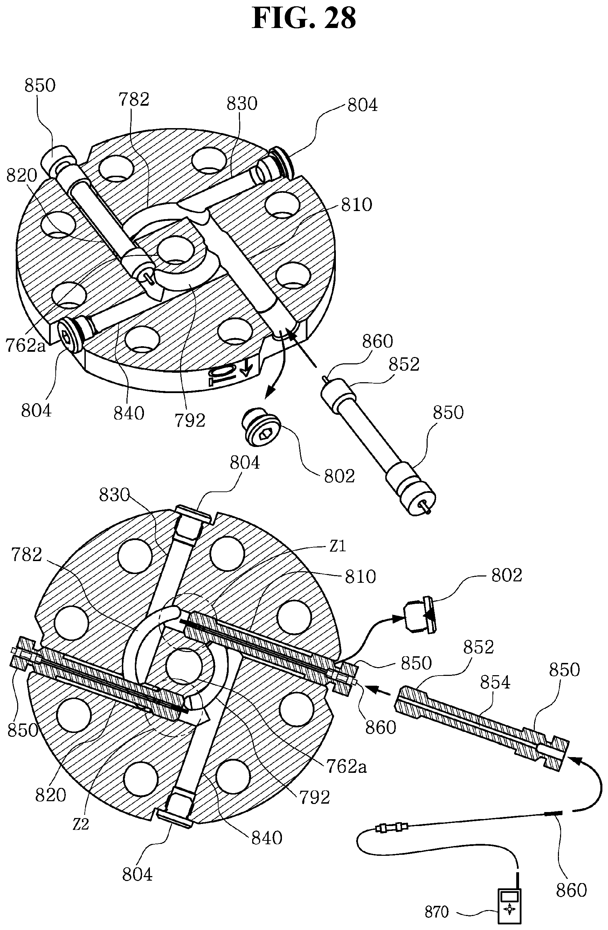

Next, FIG. 21 to FIG. 28 are for explaining the connection part for leakage detection 700, in which FIG. 21 is a view illustrating a perspective view, FIG. 22 illustrates an exploded perspective view, FIG. 23 illustrates an exploded cross-sectional view, FIG. 24 illustrates a view as seen from direction IV of FIG. 22, FIG. 25 illustrates a cross section along line V-V of FIG. 23, FIG. 26 illustrates a cross-sectional view illustrating a state in which the connection part for leakage detection is coupled in FIG. 23, FIG. 27 illustrates a cross-sectional view along line VI-VI of FIG. 26, and FIG. 28 is a view illustrating a state in which a separator is inserted into two separator insertion holes illustrated in FIG. 27.

With reference to FIG. 21 to FIG. 25, the connection part for leakage detection 700 includes a connection flange 710 of a double pipe (or also referred to as 'double wall') structure connected to the first inlet line 50a, and a leakage detection block 750 connected to the second inlet line 50b.

The connection flange 710 and the leakage detection block 750 are fastened to abut each other by a fastening means such as a bolt 704/a nut 754.

The connection flange 710 includes an inner junction part 712 coupled with the inner pipe 52 of the first inlet line 50a, an outer junction part 714 coupled with the outer pipe 54 of the first inlet line 50a, and a connection surface 720 facing and abutting the leakage detection block 750.

In the inner junction part 712, a main fuel-line connection hole 712a connected with the main fuel line 52a of the first inlet line 50a is formed in a center thereof.

Such an inner junction part 712 is weld-joined to abut the inner pipe 52 of the first inlet line 50a.

In the outer junction part 714, an annular groove 714a connected with the annular space 54a of the first inlet line 50a is formed, and it is weld-joined to abut the outer pipe 54 of the first inlet line 50a.

In this case, between the outer junction part 714 and the outer pipe 54, and between the outer pipe 54 and an outer junction part 764, a divided pipe 54-1 may be fitted and coupled.

The divided pipe 54-1 is a member for securing a clearance interval where a welding gun may be put between an end of the outer pipe 54 and the outer junction parts 714 and 764.

Meanwhile, in the connection surface 720 of the connection flange 710, an annular groove 730 is formed. The annular groove 730 is formed by maintaining an interval toward an outside in a radial direction of the main fuel-line connection hole 712a.

The annular groove 730 and the annular groove 714a are connected by a plurality of through holes 732. Accordingly, the plurality of through holes 732 communicate with each other through the annular groove 730.

In the connection surface 720, an inner seal groove 722 and an outer seal groove 724 may be formed.

The inner seal groove 722 is formed between the annular groove 730 and the inner junction part 712. The outer seal groove 724 is formed at the outside of the annular groove 730.

In an example illustrated in the drawings, the inner seal groove 722 and the outer seal groove 724 are formed in the connection flange 710, but may also be formed in a connection surface 770 of the leakage detection block 750.

By inserting a seal 722a into each of the inner seal groove 722 and the outer seal groove 724, airtightness between the two connection surfaces 720 and 770 may be maintained.

The leakage detection block 750 includes an inner junction part 762 coupled with the inner pipe 52 of the second inlet line 50b, an outer junction part 764 coupled with the outer pipe 54 of the second inlet line 50b, and a connection surface 770 facing and abutting the connection flange 710.

In the inner junction part 762, a main fuel-line connection hole 762a connected with the main fuel line 52a of the second inlet line 50b is formed in a center thereof.

Such an inner junction part 762 is weld-joined to abut the inner pipe 52 of the second inlet line 50b.

In the outer junction part 764, an annular groove 764a connected with the annular space 54a of the second inlet line 50b is formed, and it is weld-joined to abut the outer pipe 54 of the second inlet line 50b.

In the connection surface 770 of the leakage detection block 750, a first annular space connection groove 782 communicating with the annular groove 730 of the connection flange 710 is formed to a certain depth of a body in an axial direction (a longitudinal direction).

In the annular groove 764a of the leakage detection block 750, a second annular space connection groove 792 communicating with the annular space 54a of the second inlet line 50b is formed to a certain depth of the body in the axial direction (the longitudinal direction).

With reference to FIG. 24 to FIG. 25, the first annular space connection groove 782 and the second annular space connection groove 792 are formed to a certain depth in the axial direction at diametrically opposite sides of each other.

In addition, in each of the first annular space connection groove 782 and the second annular space connection groove 792, a cross-sectional shape thereof is made in a form of a circular arc concentric with the main fuel-line connection hole 762a. By this, a cross-sectional area of the annular space may be secured larger than a circular hole without increasing a size of the connection surface 770.

In addition, in the connection surface 770, an annular groove 780 is formed. The annular groove 780 faces and communicates with the annular groove 730 of the connection flange 710.

The first annular space connection groove 782 is formed inside the annular groove 780. Accordingly, the first annular space connection groove 782 maintains a state of communicating with the annular groove 780.

With reference to FIG. 26, when the connection surface 720 of the connection flange 710 and the connection surface 770 of the leakage detection block 750 are coupled to abut each other, the annular groove 730 of the connection flange 710 and the annular groove 780 of the leakage detection block 750 communicate with each other.

Accordingly, by the communication of the two annular grooves 730 and 780, the plurality of through holes 732 of the connection flange 710 and the first annular space connection groove 782 of the leakage detection block 750 communicate with each other.

The first annular space connection groove 782 and the second annular space connection groove 792 communicate with each other by separator insertion holes 810 and 820, which will be described later.

In FIG. 27 (a cross-sectional view along line VI-VI of FIG. 26), a connection configuration of the first annular space connection groove 782 and the second annular space connection groove 792 is illustrated.

With reference to FIG. 26 along with FIG. 27, the separator insertion holes 810 and 820 have a form perforated toward an inside of the body from an outer circumferential surface of the leakage detection block 750.

The first separator insertion hole 810 is formed in a form connected across one end in a width direction of the first annular space connection groove 782 and the second annular space connection groove 792. Accordingly, respective one ends of the first annular space connection groove 782 and the second annular space connection groove 792 communicate with each other through the first separator insertion hole 810.

The second separator insertion hole 820 is formed in a form connected across the other end in the width direction of the first annular space connection groove 782 and the second annular space connection groove 792. Accordingly, the opposite end of the first annular space connection groove 782 and the second annular space connection groove 792 communicate with each other by the second separator insertion hole 820.

Accordingly, an inner end part of the first separator insertion hole 810 and a middle part of the second separator insertion hole 820 are in a state of communicating with each other through the first annular space connection groove 782. Similarly, an inner end part of the second separator insertion hole 820 and a middle part of the first separator insertion hole 810 are in a state of communicating with each other through the second annular space connection groove 792.

The first communication hole 830 is connected across an end of the first separator insertion hole 810 and the middle part of the second separator insertion hole 820. This first communication hole 830 penetratively passes through the first annular space connection groove 782 of the circular arc shape in a transverse direction, thereby causing the first annular space connection groove 782 to more surely communicate with the first separator insertion hole 810 and the second separator insertion hole 820.

In addition, the second communication hole 840 is connected across an end of the second separator insertion hole 820 and the middle part of the first separator insertion hole 810. This second communication hole 840 penetratively passes through the second annular space connection groove 792 of the circular arc shape in the transverse direction, thereby causing the second annular space connection groove 792 to more surely communicate with the second separator insertion hole 820 and the first separator insertion hole 810.

Inlets of the first and second separator insertion holes 810 and 820 and the first and second communication holes 830 and 840 may be made blocked with a plug 802 and a plug 804, respectively.

Next, with reference to FIG. 28, at a time of leakage detection, the separator 850 is inserted into the first separator insertion hole 810 and the second separator insertion hole 820. In this case, first, the plug 802 is removed.

The separator 850 causes a sensor (probe) 860 insertion hole 854 formed in a center of the separator 850 to maintain a communication state with only any one of the two annular space connection grooves (782 or 792), while blocking communicative connection between the first annular space connection groove 782 and the second annular space connection groove 792.

That is, as illustrated in FIG. 28, in the separator 850 inserted into the first separator insertion hole 810, a head part 852 thereof blocks the first separator insertion hole 810 to block a communication state of the respective one ends of the first annular space connection groove 782 and the second annular space connection groove 792. Further, an end surface (or end face) of the head part 852, which is an insertion end of the separator 850, is exposed and communicates with the first annular space connection groove 782 and the first communication hole 830. Accordingly, when the leakage detection sensor 860 is inserted into the sensor insertion hole 854 formed in the center of the separator 850, a probe part of the leakage detection sensor 860 may detect leaked fuel in the first annular space connection groove 782.

Similarly, in the separator 850 inserted into the second separator insertion hole 820, a head part 852 thereof blocks the second separator insertion hole 820 to block a communication state of respective other ends of the second annular space connection groove 792 and the first annular space connection groove 782. Further, an end surface of the head part 852, which is an insertion end of the separator 850, is exposed in the second annular space connection groove 792 and the second communication hole 840. Accordingly, when the leakage detection sensor 860 is inserted into the sensor insertion hole 854 formed in the center of the separator 850, the probe part of the leakage detection sensor 860 may detect leaked fuel in the second annular space connection groove 792.

Accordingly, when the leakage detection sensor 860 is inserted into the sensor insertion hole 854 formed in the center of the separator 850, the probe part of the leakage detection sensor 860 may detect the leaked fuel of the second annular space connection groove 792.

If it is desired to detect only a leakage state of the annular space on a side of the first annular space connection groove 782, that is, on a side of the first inlet line 50a, the correct separator 850 is inserted into only the first separator insertion hole 810, and a dummy separator produced separately may be inserted into the second separator insertion hole 820.

Conversely, if it is desired to detect only a leakage state of the annular space on a side of the second annular space connection groove 792, that is, on a side of the second inlet line 50b, the correct separator 850 is inserted into only the second separator insertion hole 820, and a dummy separator produced separately may be inserted into the first separator insertion hole 810.

As such, by providing the connection part for leakage detection 700 in the high-pressure liquid fuel inlet line 50 at all times, leakage may be easily detected only by separating the plug 802 from each separator insertion holes 810 and 820 and inserting the separator 850 without a separate complicated process at any time of a test step before operation or during operation.

Meanwhile, in an embodiment illustrated in FIG. 17 to FIG. 18, it may be configured in a form having only the first separator insertion hole 810 and not having the second separator insertion hole 820.

In this case, the first annular space connection groove 782/the first communication hole 830 and the second annular space connection groove 792/the second communication hole 840 are connected only by the first separator insertion hole 810. Accordingly, by inserting the separator 850 into the first separator insertion hole 810 and inserting the leakage detection sensor 860 into this separator 850, only whether or not leakage of the first annular space connection groove 782, which is the annular space on the upstream side in the liquid fuel flow direction, occurs may be detected.

Accordingly, if it is a place where it is necessary to detect all leakage of the annular space on the upstream and downstream sides in one leakage detection block 750, the leakage detection block 750 in which both the first separator insertion hole 810 and the second separator insertion hole 820 are formed is used. Unlike this, if it is a place where it is necessary to detect only leakage of the annular space on the upstream side, the leakage detection block 750 in which only the first separator insertion hole 810 is formed may also be used.

### [Liquid Fuel Supply Line - Example 2]

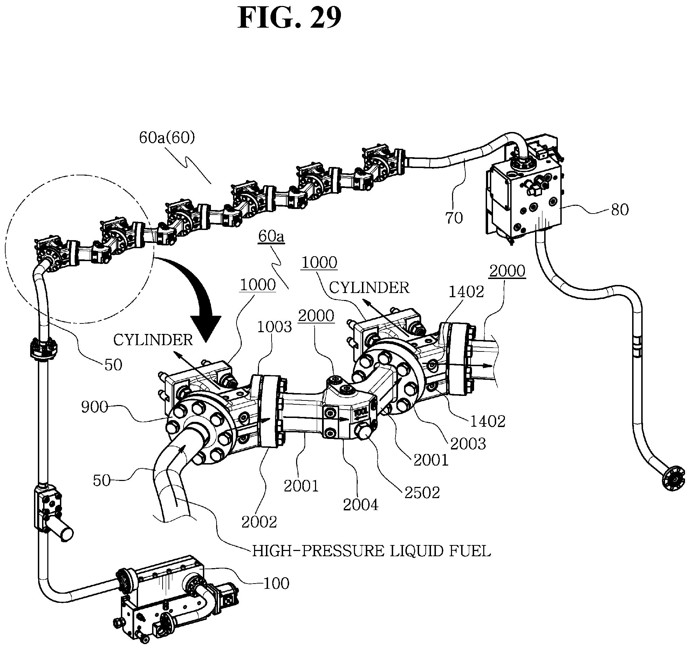

FIG. 29 to FIG. 51 are views for explaining another embodiment of the liquid fuel supply line according to the present disclosure, particularly, an embodiment in which the common rail 60 is configured as a block type common rail 60a, and a leakage detection structure is applied to the corresponding block type common rail 60a.

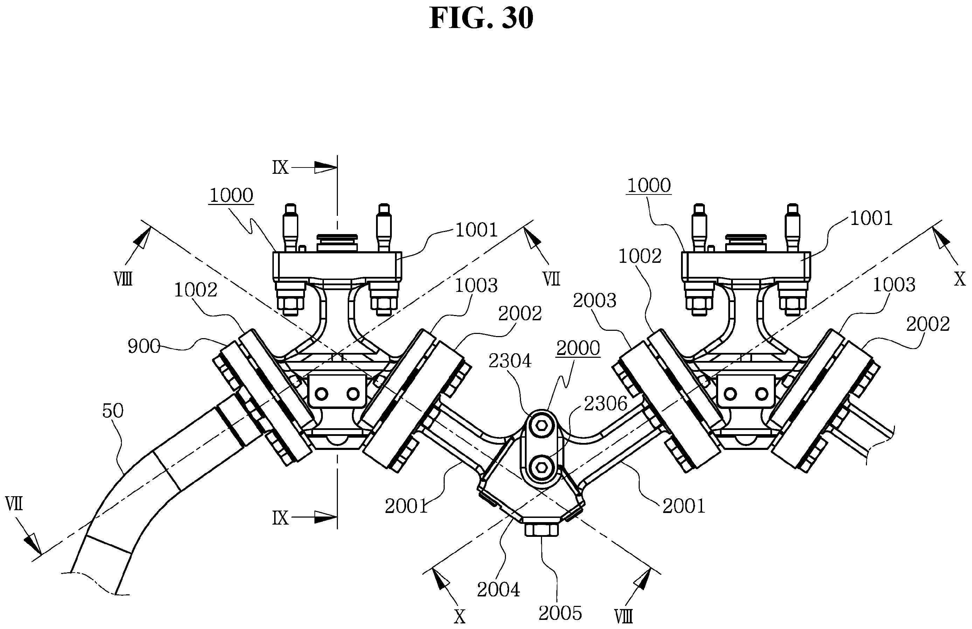

In FIG. 29, an embodiment of a liquid fuel supply line of the liquid fuel supply system according to the present disclosure is illustrated, and in FIG. 30, a plan view of a principal part of the common rail is illustrated.

With reference to FIG. 29 to FIG. 30, the liquid fuel supply line of the present disclosure is configured by including a high-pressure liquid fuel inlet line 50 of a high-pressure double pipe, a block type common rail 60a connected with the high-pressure liquid fuel inlet line 50 and for supplying high-pressure liquid fuel to the engine cylinder, and a discharge line 70 made of a high-pressure double pipe connected to an outlet of the block type common rail 60a.

The high-pressure liquid fuel inlet line 50 and the discharge line 70 are, as described above, configured with an inner pipe 52 forming a main fuel line 52a in a center, and an outer pipe 54 maintaining an annular space 54a outside the inner pipe 52.

The block type common rail 60a of the present disclosure is configured with a plurality of high-pressure blocks 1000 aligned in parallel with engine cylinders and mounted on an engine block, and a jumping block 2000 having a solid block-shaped body and connecting between the neighboring high-pressure blocks 1000.

The high-pressure block 1000 has an engine side flange part 1001 at one side of a body, and has an upstream side flange part 1002 and a downstream side flange part 1003 respectively at both sides opposite to the engine side flange part 1001.

The jumping block 2000 has a block-shaped body part 2001, an upstream side flange part 2002 connected with the downstream side flange part 1003 of the high-pressure block 1000 at one end of the block-shaped body part 2001, and a downstream side flange part 2003 connected with the upstream side flange part 1002 of the neighboring high-pressure block 1000 at the other end of the block-shaped body part 2001.

In addition, in a middle of the block-shaped body part 2001 of the jumping block 2000, a separator attachment/detachment part 2004 for leakage detection is formed.

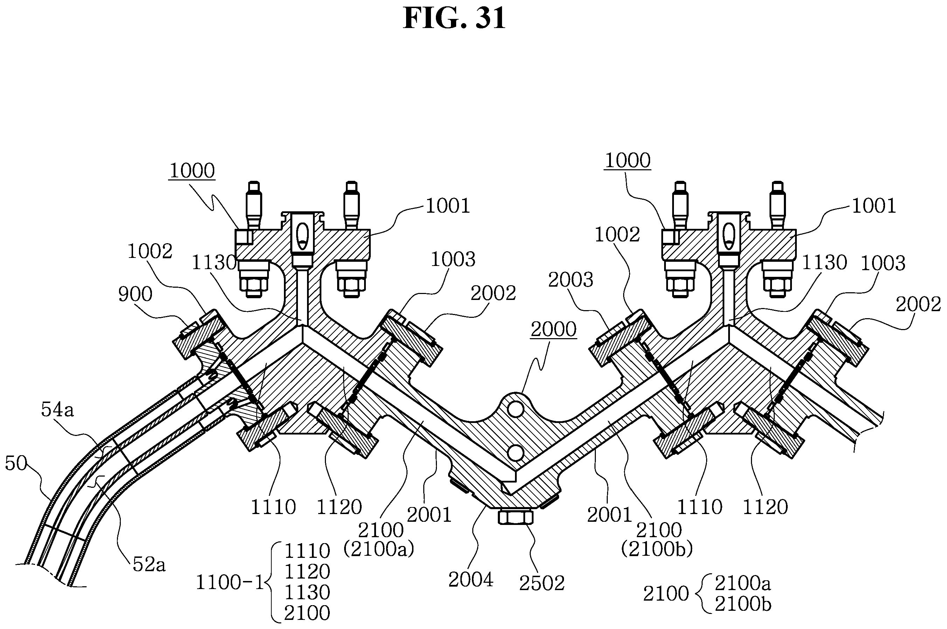

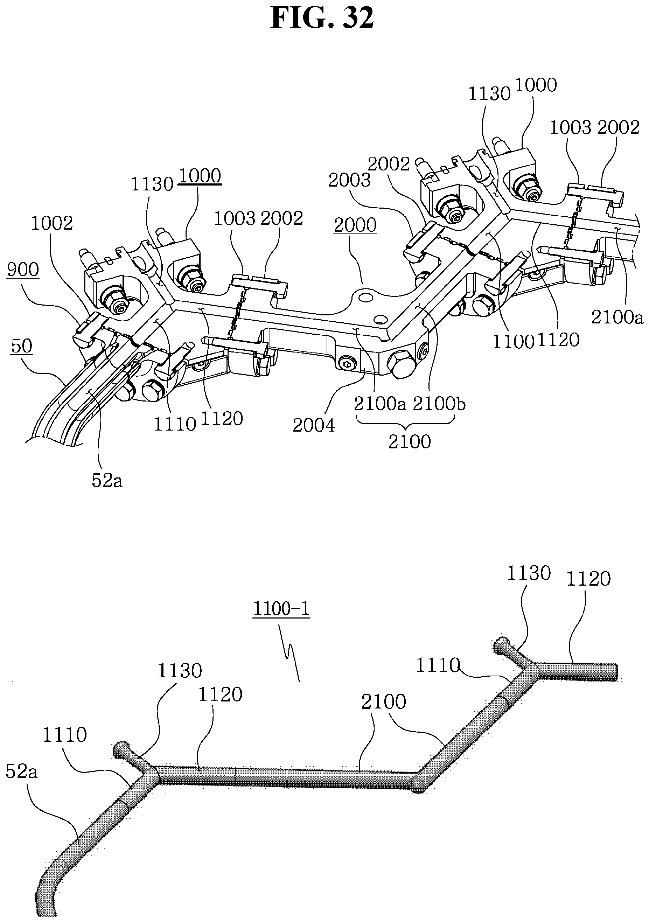

In FIG. 31, a horizontal cross-sectional view cut based on a center of the center main fuel line of FIG. 30 is illustrated, and in FIG. 32, a view illustrating a configuration and a connection state of the main fuel line is illustrated.

With reference to FIG. 31 to FIG. 32, a main fuel-line connection hole 1100-1 is continuously formed in a form branchingly penetrating toward the engine block while penetratively connecting cross sectional centers of the high-pressure block 1000 and the jumping block 2000.

The main fuel-line connection hole 1100-1 is configured with a first main fuel-line connection hole 1110, a second main fuel-line connection hole 1120, a third main fuel-line connection hole 1130, and a fourth main fuel-line connection hole 2100.

The first to third main fuel-line connection holes 1110 to 1130 are liquid fuel passages provided in the high-pressure block 1000, and the fourth main fuel-line connection hole 2100 is a liquid fuel passage provided in the jumping block 2000.

The first main fuel-line connection hole 1110 of the high-pressure block 1000 is in a form perforated in a straight line toward a center part of the body from a side of the upstream side flange part 1002.

The second main fuel-line connection hole 1120 is in a form perforated in the straight line toward the center part of the body from a side of the downstream side flange part 1003.

The first main fuel-line connection hole 1110 and the second main fuel-line connection hole 1120 join at the center part of the body.

In addition, the third main fuel-line connection hole 1130 is perforated in the straight line toward the center part of the body from a side of the engine side flange part 1001. This third main fuel-line connection hole 1130 meets and communicates with a junction of the first main fuel-line connection hole 1110 and the second main fuel-line connection hole 1120.

The fourth main fuel-line connection hole 2100 of the jumping block 2000 penetratively connects the upstream side flange part 2002, the block-shaped body part 2001, and the downstream side flange part 2003 of the jumping block 2000.

For perforation (e.g., drill processing), the fourth main fuel-line connection hole 2100 may be configured in a form in which an upstream side main line connection hole 2100a and a downstream side main line connection hole 2100b meet at a middle point in a longitudinal direction of the body (refer to a form illustrated in FIG. 31 to FIG. 32).

To this end, the upstream side main line connection hole 2100a is perforated in the straight line from the upstream side flange part 2002 to a middle part of the block-shaped body part 2001. An inlet (upstream side end) of this upstream side main line connection hole 2100a is connected with an outlet (downstream side end) of the second main fuel-line connection hole 1120 formed in the downstream side flange part 1003 of the high-pressure block 1000.

The downstream side main line connection hole 2100b is perforated in the straight line from the downstream side flange part 2003 to the middle part of the block-shaped body part 2001. This downstream side main line connection hole 2100b is communicated with the upstream side main line connection hole 2100a at the middle point of the block-shaped body part 2001. In addition, an outlet of the downstream side main line connection hole 2100b is connected with an inlet of the first main fuel-line connection hole 1110 formed in the upstream side flange part 1002 of the neighboring downstream side high-pressure block 1000.

According to the configuration as described above, high-pressure liquid fuel introduced toward the block type common rail 60a through the main fuel line 52a of the high-pressure liquid fuel inlet line 50 is filled in the main fuel-line connection hole 1100-1 penetrating the plurality of high-pressure blocks 1000 and the plurality of jumping blocks 2000 with pressure necessary for the cylinder. Subsequently, it is supplied to an injector of each cylinder through the third main fuel-line connection hole 1130 of each high-pressure block 1000 according to a combustion stroke of each cylinder.

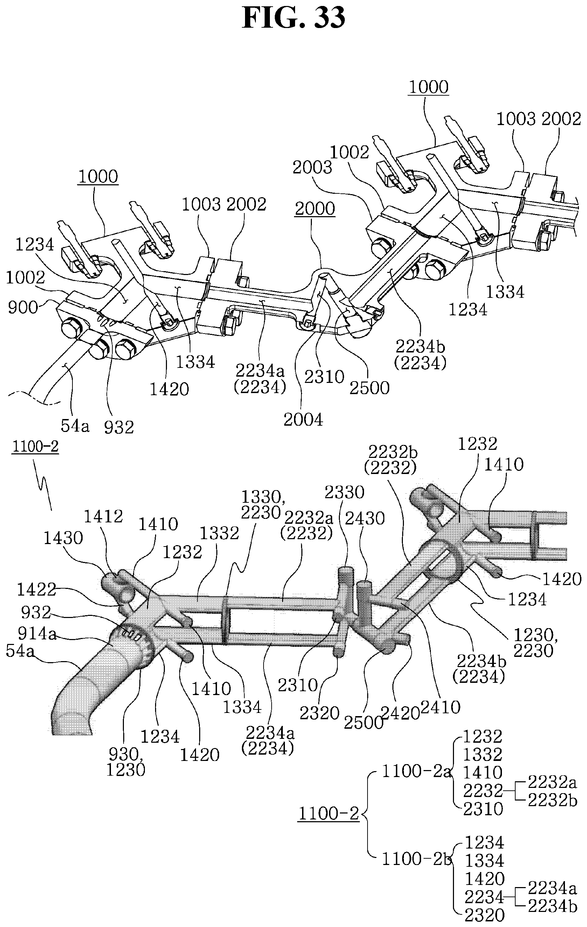

Next, in FIG. 33, a view illustrating a connection state of the annular space of the block type common rail 60a is illustrated.

With reference to FIG. 33, an annular space connection groove 1100-2 according to the present disclosure is perforated to penetratively connect the high-pressure block 1000 and the jumping block 2000 over an entire length while being parallel with the main fuel-line connection hole 1100-1 and maintaining horizontal without a height difference with respect to the ground.

The annular space connection groove 1100-2 is configured with an upper annular space connection groove 1100-2a and a lower annular space connection groove 1100-2b.

The upper annular space connection groove 1100-2a is perforated to penetratively connect the high-pressure block 1000 and the jumping block 2000 over the entire length at an upper part of the main fuel-line connection hole 1100-1.

The lower annular space connection groove 1100-2b is perforated to penetratively connect the high-pressure block 1000 and the jumping block 2000 over the entire length at a lower part of the main fuel-line connection hole 1100-1.

Each of the upper annular space connection groove 1100-2a and the lower annular space connection groove 1100-2b is caused to maintain horizontal without the height difference with respect to the ground in all sections while maintaining a state parallel with the main fuel-line connection hole 1100-1.

As such, in a case of designing with the block type common rail 60a including the jumping block 2000 as the common rail 60, the annular space connection groove 1100-2 may be formed by perforation work inside the solid jumping block 2000. Accordingly, the annular space connection groove 1100-2 may be easily formed horizontally over the all sections of the jumping block 2000. When the annular space connection groove 1100-2 maintains horizontal without the height difference such as a gradient or a step, fuel leaked into the annular space connection groove 1100-2 may smoothly flow and be discharged.

The annular space connection groove 1100-2 in a section of the high-pressure block 1000 is configured with a first upper annular space connection groove 1232 and a first lower annular space connection groove 1234 perforated in the straight line toward the center part of the body from the side of the upstream side flange part 1002.

In addition, it is provided with a second upper annular space connection groove 1332 and a second lower annular space connection groove 1334 formed in the straight line toward the center part of the body from the side of the downstream side flange part 1003. Each of the second upper annular space connection groove 1332 and the second lower annular space connection groove 1334 joins with the first upper annular space connection groove 1232 and the first lower annular space connection groove 1234, respectively, at the body center part of the high-pressure block 1000. At each junction, an upper communication hole 1410 and a lower communication hole 1420, which will be described later, may be formed.

In addition, the annular space connection groove 1100-2 in a section of the jumping block 2000 is configured with a third upper annular space connection groove 2232 and a third lower annular space connection groove 2234.

The third upper annular space connection groove 2232 is configured with an upstream side upper annular space connection groove 2232a and a downstream side upper annular space connection groove 2232b.

The upstream side upper annular space connection groove 2232a is formed in the straight line from a side of the upstream side flange part 2002 to the middle point (that is, the separator attachment/detachment part 2004) of the block-shaped body part 2001.

The downstream side upper annular space connection groove 2232b is formed in the straight line from a side of the downstream side flange part 2003 to the middle point (that is, the separator attachment/detachment part 2004) of the block-shaped body part 2001.

Inlets of the upstream side upper annular space connection groove 2232a and an upstream side lower annular space connection groove 2234a are connected horizontally without the height difference with outlets of the second upper annular space connection groove 1332 and the second lower annular space connection groove 1334 of the downstream side flange part 1003 of the high-pressure block 1000, respectively.

In addition, inlets of the downstream side upper annular space connection groove 2232b and a downstream side lower annular space connection groove 2234b are connected horizontally with the first upper annular space connection groove 1232 and the first lower annular space connection groove 1234 of the upstream side flange part 1002 of the neighboring high-pressure block 1000 on the downstream side, respectively.

The upper annular space connection groove 1100-2a and the lower annular space connection groove 1100-2b of the annular space connection groove 1100-2 as described above communicate with each other at one or more points within the section between one high-pressure block 1000 and the jumping block 2000.

In the embodiment illustrated in the drawings, they communicate with each other at a part (a first point) of the separator attachment/detachment part 2004 of the jumping block 2000 and a part (a second point) of annular grooves 1330 and 2230 of the downstream side flange part 1003 of the high-pressure block 1000 and the upstream side flange part 2002, which will be described later.

In the separator attachment/detachment part 2004, the upstream side upper annular space connection groove 2232a and the upstream side lower annular space connection groove 2234a communicate vertically by a first vertical communication hole 2330.

In addition, at a point apart from the first vertical communication hole 2330, the downstream side upper annular space connection groove 2232b and the downstream side lower annular space connection groove 2234b communicate vertically by a second vertical communication hole 2430.

Further, a separator insertion hole 2500 is formed in a form connected across the first vertical communication hole 2330 and the second vertical communication hole 2430.

When the separator for leakage detection 850 is inserted into the separator insertion hole 2500, the second vertical communication hole 2430 is blocked by the head part 852 of the separator 850, and thus connection of the first vertical communication hole 2330 and the second vertical communication hole 2430 is disconnected.

Along with this, an end of the separator 850 is exposed into the first vertical communication hole 2330. Accordingly, the leakage detection sensor 860 inserted into the separator 850 may detect leaked fuel in the upstream side upper annular space connection groove 2232a and the upstream side lower annular space connection groove 2234a. This will be described in more detail through other drawings later.

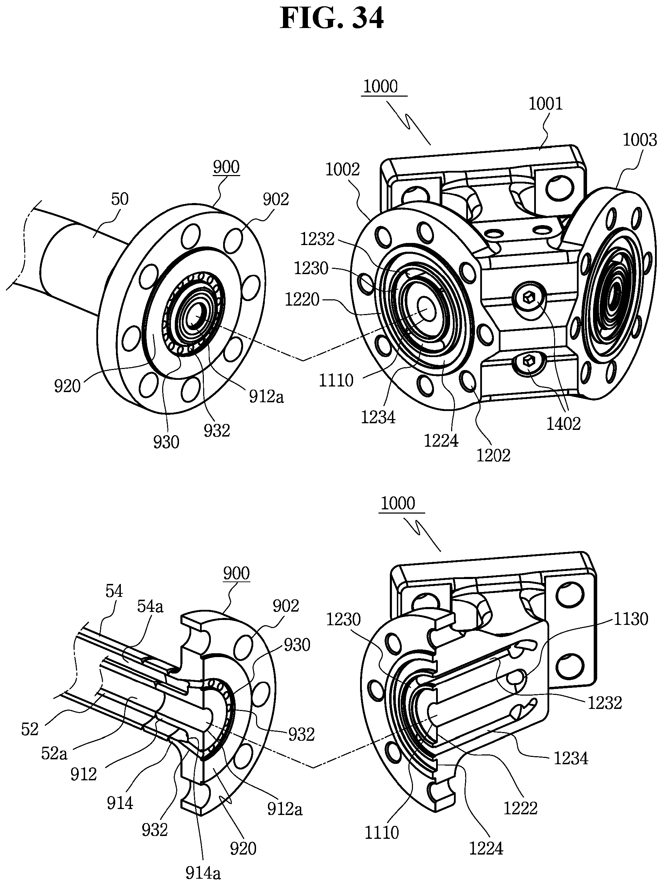

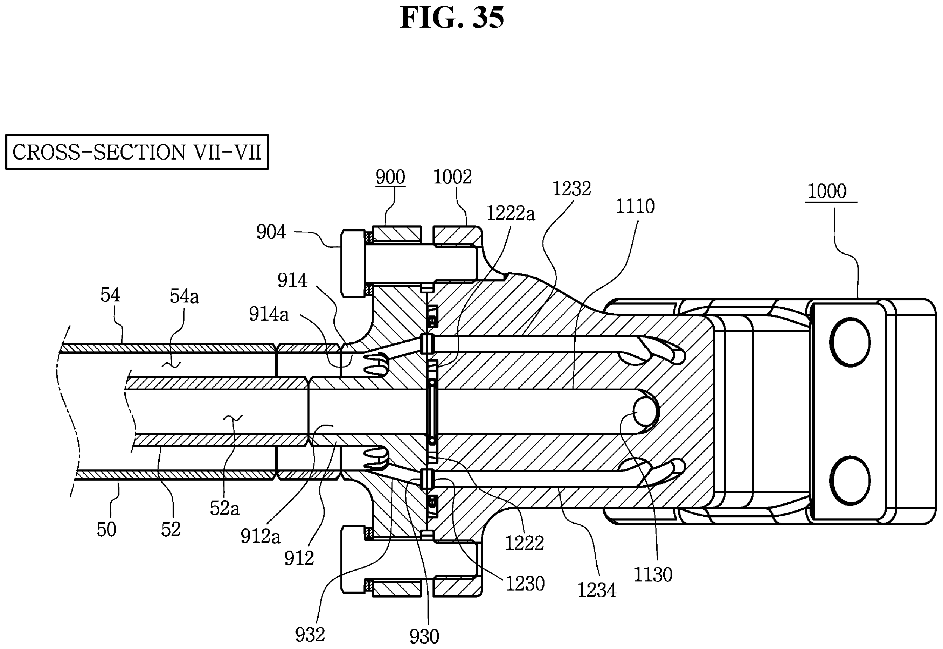

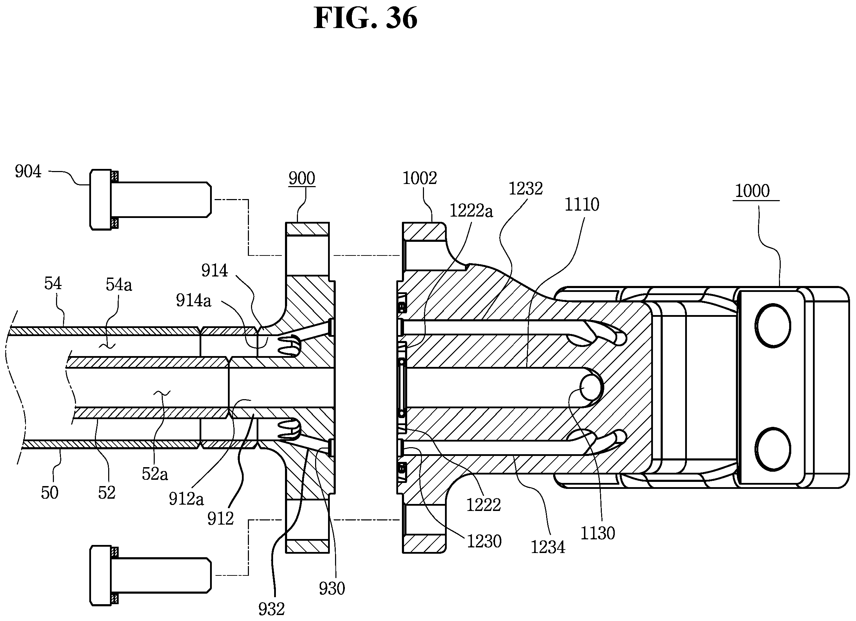

Next, FIG. 34 to FIG. 36 illustrate a configuration of a connection part for connection of the block type common rail 60a and the high-pressure liquid fuel inlet line 50, in which FIG. 34 illustrates a perspective view and a cross-sectional view, FIG. 35 illustrates a cross-sectional view in a coupled state, and FIG. 36 illustrates a cross-sectional view in a separated state. FIG. 31 to FIG. 33 together will be referenced.

With reference to FIG. 34 to FIG. 36, and FIG. 31 to FIG. 33 together, a connection flange 900 on a side of the high-pressure liquid fuel inlet line 50 includes an inner junction part 912 coupled with the inner pipe 52, an outer junction part 914 coupled with the outer pipe 54, and a connection surface 920 facing and abutting the upstream side flange part 1002 of the high-pressure block 1000.

In the inner junction part 912, a main fuel-line connection hole 912a connected with the main fuel line 52a of the high-pressure liquid fuel inlet line 50 is formed in a center thereof.

Such an inner junction part 912 is weld-joined to abut the inner pipe 52 of the high-pressure liquid fuel inlet line 50.

In the outer junction part 914, an annular groove 914a connected with the annular space 54a of the high-pressure liquid fuel inlet line 50 is formed, and it is weld-joined to abut the outer pipe 54.

In the connection surface 920 of the connection flange 910, an annular groove 930 is formed by maintaining an interval toward an outside in a radial direction of the main fuel-line connection hole 912a.

The annular groove 930 and the annular groove 914a are connected by a plurality of through holes 932. Accordingly, the plurality of through holes 932 communicate with each other through the annular groove 930.

In the connection flange 900, a fastening hole 902 for fastening with the upstream side flange part 1002 of the high-pressure block 1000 is formed.

Next, in the upstream side flange part 1002 of the high-pressure block 1000, a first main fuel-line connection hole 1110 is formed in a center. This first main fuel-line connection hole 1110 is connected with the main fuel-line connection hole 912a on a side of the connection flange 900.

In addition, in a connection surface 1220 of the upstream side flange part 1002, an annular groove 1230 is formed. The annular groove 1230 is formed by maintaining an interval toward an outside in a radial direction of the first main fuel-line connection hole 1110.

At upper and lower parts of the annular groove 1230, the first upper annular space connection groove 1232 and the first lower annular space connection groove 1234 are formed, respectively. Accordingly, the first upper annular space connection groove 1232 and the first lower annular space connection groove 1234 communicate with each other at the annular groove 1230.

The annular groove 1230 also abuts and mutually communicates with the annular groove 930 of the connection flange 900. Accordingly, the through holes 932 of the connection flange 900 and the first upper annular space connection groove 1232 and the first lower annular space connection groove 1234 of the upstream side flange part 1002 communicate with each other through the annular groove 930 and the annular groove 1230.

The first upper annular space connection groove 1232 and the first lower annular space connection groove 1234 maintain horizontal with respect to a ground while being parallel with the first main fuel-line connection hole 1110.

In the upstream side flange part 1002, a fastening hole 1202 for fastening with the fastening hole 902 of the connection flange 900 is formed. The fastening hole 902 of the connection flange 900 and the fastening hole 1202 of the upstream side flange part 1002 are fastened by a bolt 904.

In the connection surface 1220 of the upstream side flange part 1002, an inner seal groove 1222 and an outer seal groove 1224 may be formed. By inserting a seal 1222a (refer to FIG. 35) into each of the inner seal groove 1222 and the outer seal groove 1224, a space between the two connection surfaces 920 and 1220 is sealed.

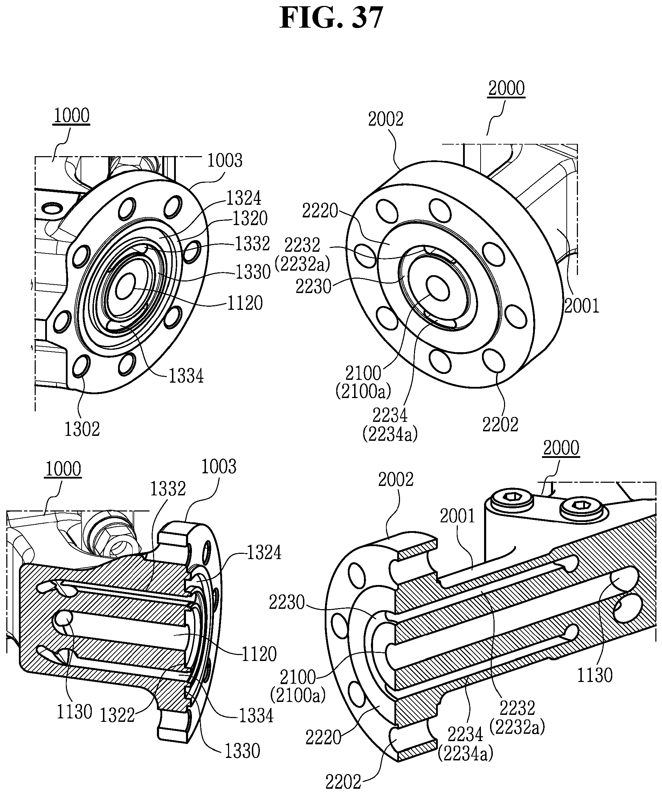

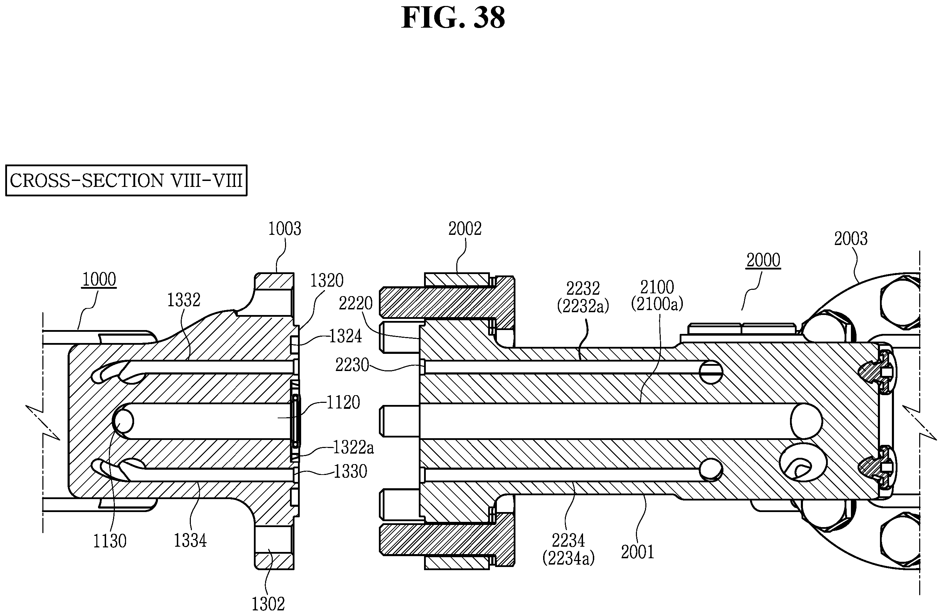

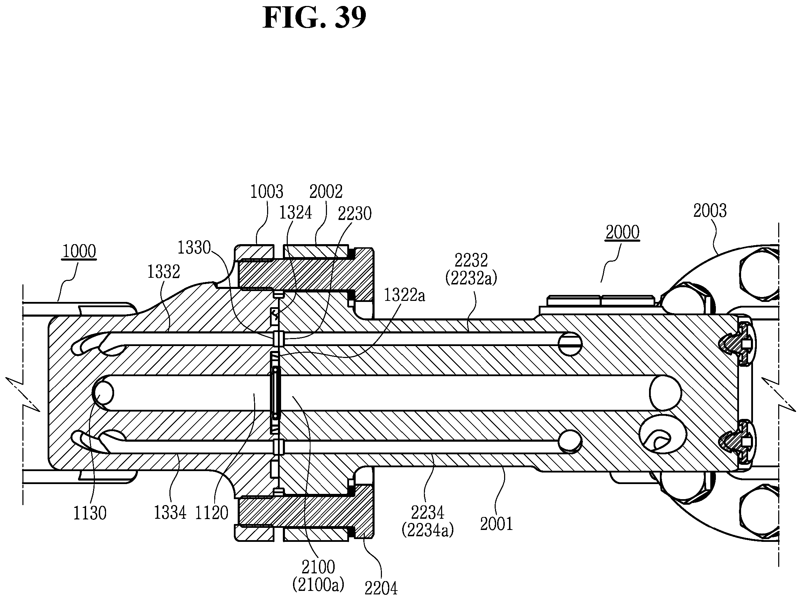

Next, FIG. 37 to FIG. 39 illustrate a configuration of a connection part between the high-pressure block 1000 and the jumping block 2000 of the block type common rail 60a, in which FIG. 37 illustrates a perspective view, FIG. 38 illustrates an exploded cross-sectional view, and FIG. 39 illustrates a coupled state cross-sectional view. FIG. 31 to FIG. 33 together will be referenced.

With reference to FIG. 37 to FIG. 39, and FIG. 31 to FIG. 33, in the downstream side flange part 1003 of the high-pressure block 1000, a second main fuel-line connection hole 1120 is formed in a center thereof. This second main fuel-line connection hole 1120 is connected with the first main fuel-line connection hole 1110 on a side of the upstream side flange part 1002 inside the body of the high-pressure block 1000 (refer to FIG. 31 to FIG. 32).

In addition, in a connection surface 1320 of the downstream side flange part 1003, an annular groove 1330 is formed by maintaining an interval toward an outside in a radial direction of the second main fuel-line connection hole 1120.

At upper and lower parts of the annular groove 1330, a second upper annular space connection groove 1332 and a second lower annular space connection groove 1334 are formed, respectively. Accordingly, the second upper annular space connection groove 1332 and the second lower annular space connection groove 1334 communicate with each other at the annular groove 1330.

In the upstream side flange part 2002 of the jumping block 2000, a fourth main fuel-line connection hole 2100 is formed in a center thereof. As described in FIG. 31 to FIG. 32, since the fourth main fuel-line connection hole 2100 extends only from the upstream side flange part 2002 to the separator attachment/detachment part 2004, it was specially distinguished as "an upstream side main line connection hole 2100a".

Such a fourth main fuel-line connection hole 2100 extends from the upstream side flange part 2002 to the separator attachment/detachment part 2004 in a downstream direction along the block-shaped body part 2001 of the jumping block 2000.

In addition, in a connection surface 2220 of the upstream side flange part 2002 of the jumping block 2000, an annular groove 2230 is formed. The annular groove 2230 is formed by maintaining an interval toward an outside in a radial direction of the fourth main fuel-line connection hole 2100.

In the annular groove 2230, a third upper annular space connection groove 2232 and a third lower annular space connection groove 2234 are formed. Accordingly, the third upper annular space connection groove 2232 and the third lower annular space connection groove 2234 communicate with each other at the annular groove 2230.

As described in FIG. 33, since the third upper annular space connection groove 2232 of the upstream side flange part 2002 of the jumping block 2000 extends only from the upstream side flange part 2002 to the separator attachment/detachment part 2004, it was specially distinguished as "an upstream side upper annular space connection groove 2232a", and the third lower annular space connection groove 2234 was distinguished as "an upstream side lower annular space connection groove 2234a".

The annular groove 2230 also abuts and mutually communicates with the annular groove 1330 of the downstream side flange part 1003 of the high-pressure block 1000. Accordingly, as may be seen in FIG. 37 to FIG. 39, the second upper annular space connection groove 1332 and the second lower annular space connection groove 1334 of the downstream side flange part 1003 of the high-pressure block 1000 and the upstream side upper annular space connection groove 2232a and the upstream side lower annular space connection groove 2234a of the upstream side flange part 2002 of the jumping block 2000 communicate with each other through the annular groove 1330 and the annular groove 2230.

The first upper annular space connection groove 1232, the upstream side upper annular space connection groove 2232a, the second lower annular space connection groove 1334, and the upstream side lower annular space connection groove 2234a maintain horizontal without a height difference with respect to the ground while being parallel with the second main fuel-line connection hole 1120 and the fourth main fuel-line connection hole 2100.

Then, as illustrated in FIG. 39, since the second lower annular space connection groove 1334 and the third lower annular space connection groove 2234 (i.e., the upstream side lower annular space connection groove 2234a) are horizontally connected to each other without the height difference such as a gradient or a step, leaked fuel may smoothly flow and be discharged without being collected at a connection part of the third lower annular space connection groove 2234 (i.e., the upstream side lower annular space connection groove 2234a).

In addition, in the downstream side flange part 1003 of the high-pressure block 1000 and the upstream side flange part 2002 of the jumping block 2000, fastening holes 1302 and 2202 for fastening a bolt 2204 are formed.

In the connection surface 1320 of the downstream side flange part 1003 of the high-pressure block 1000, an inner seal groove 1322 and an outer seal groove 1324 may be formed. By inserting a seal 1322a (refer to FIG. 38 to FIG. 39) into each of these inner seal groove 1322 and outer seal groove 1324, airtightness between the two connection surfaces 1320 and 2220 may be maintained.

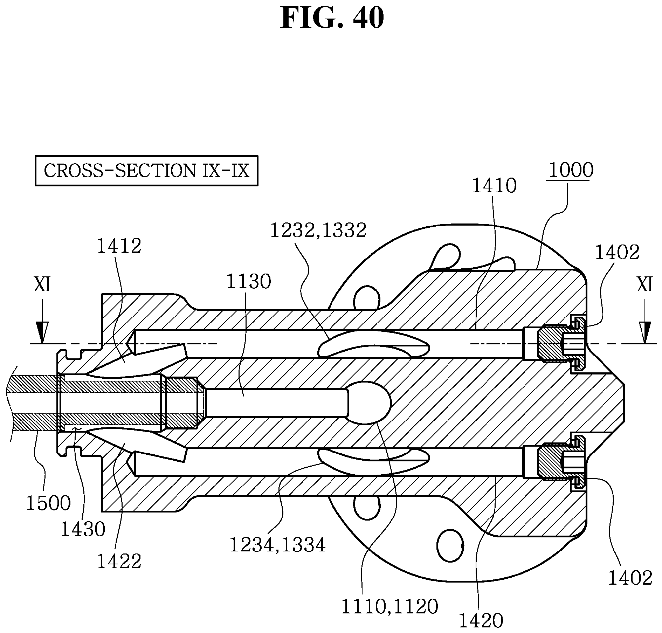

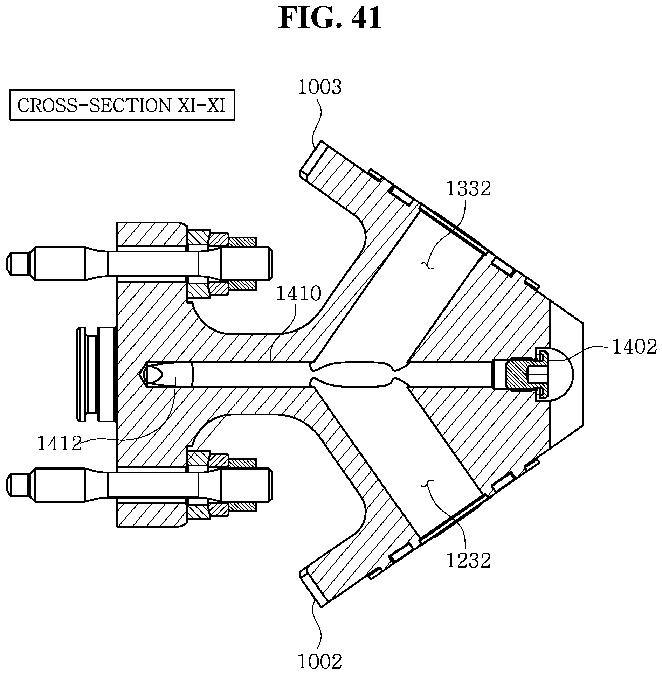

Next, FIG. 40 to FIG. 41 are for explaining a connection state of an annular space formed toward the engine side flange part 1001 of the high-pressure block 1000, in which FIG. 40 is a cross-sectional view along line IX-IX of FIG. 30 and illustrates a formation shape of the main fuel line and the annular space inside the high-pressure block 1000, and FIG. 41 illustrates a cross-sectional view along line XI-XI of FIG. 40. FIG. 31 to FIG. 33 together will be referenced.

As illustrated in FIG. 40 to FIG. 41 and FIG. 31 to FIG. 33, a third main fuel-line connection hole 1130 is formed from a center of the engine side flange part 1001 of the high-pressure block 1000 to a middle of the body. As described above, the third main fuel-line connection hole 1130 communicates with a junction of the first main fuel-line connection hole 1110 and the second main fuel-line connection hole 1120 (refer to FIG. 31 concurrently).

In addition, from a front of the body of the high-pressure block 1000, an upper communication hole 1410 and a lower communication hole 1420 are formed in a state parallel with the third main fuel-line connection hole 1130.

The upper communication hole 1410 penetratively communicates with a point where the first upper annular space connection groove 1232 and the second upper annular space connection groove 1332 join (refer to FIG. 33 concurrently).

The lower communication hole 1420 penetratively communicates with a point where the first lower annular space connection groove 1234 and the second lower annular space connection groove 1334 join (refer to FIG. 33 concurrently).

To the third main fuel-line connection hole 1130 of the high-pressure block 1000, an engine side high-pressure pipe 1500 may be connected. Between the engine side high-pressure pipe 1500 and the high-pressure block 1000, an engine side annular space 1430 is formed. From the upper communication hole 1410 to the engine side annular space 1430, an upper extension hole 1412 is formed, and from the lower communication hole 1420 to the engine side annular space 1430, a lower extension hole 1422 is extended and formed.

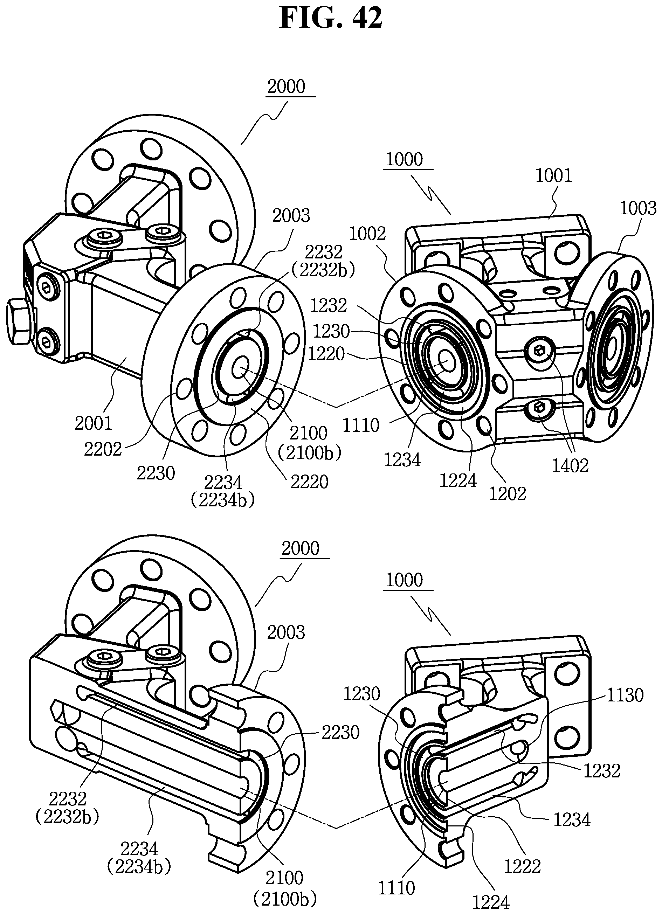

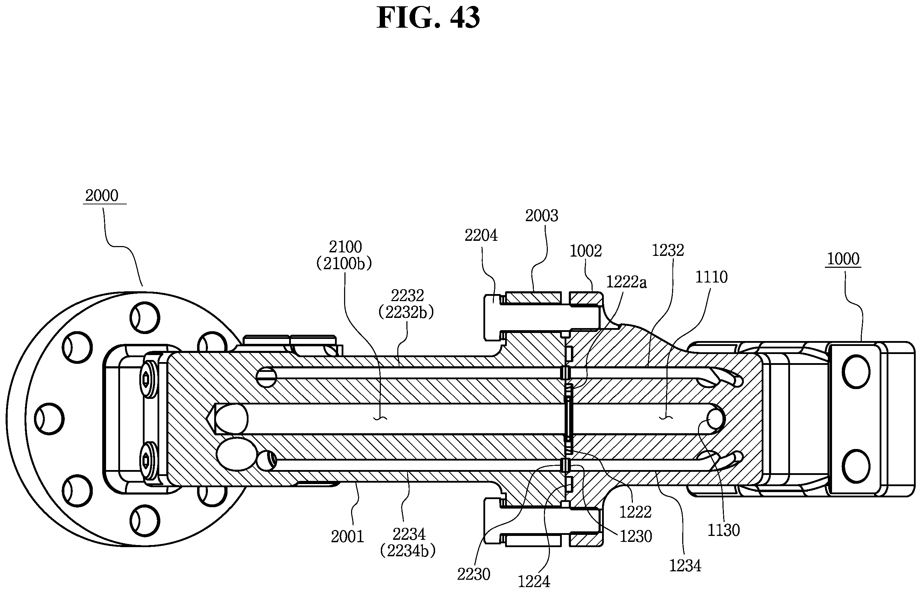

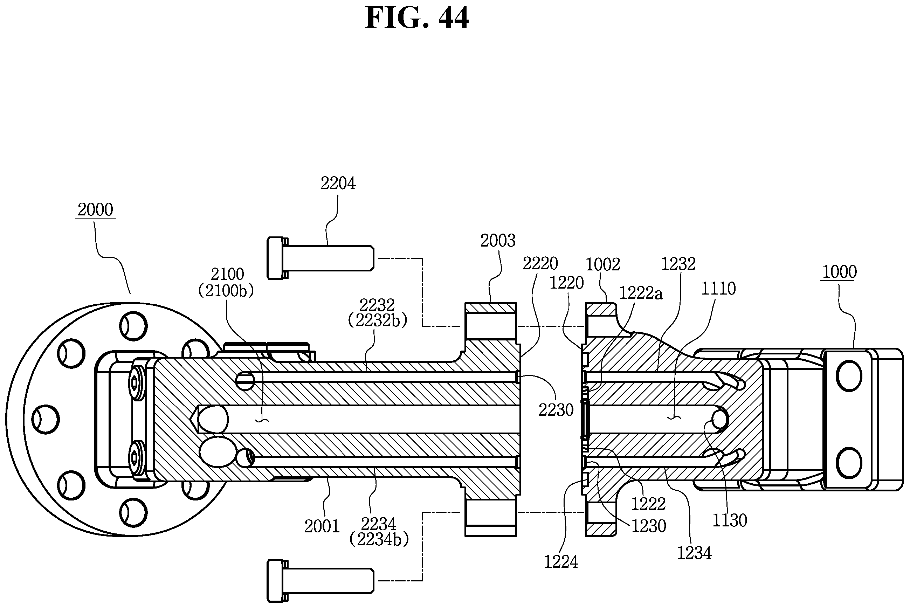

Next, FIG. 42 to FIG. 44 illustrate a configuration of a connection part between the downstream side flange part 2003 of the jumping block 2000 and the upstream side flange part 1002 of the high-pressure block 1000 of the block type common rail 60a according to the present disclosure, in which FIG. 42 illustrates a perspective view, FIG. 43 is a cross-sectional view along line X-X of FIG. 30 and illustrates a cross-sectional view illustrating a state in which two flange parts are coupled, and FIG. 44 illustrates a cross-sectional view in a state in which two flange parts are separated. FIG. 31 to FIG. 33 together will be referenced.

With reference to FIG. 42 to FIG. 44, the upstream side flange part 1002 of the high-pressure block 1000 is the same part as the upstream side flange part 1002 described above through FIG. 34 to FIG. 36, and a configuration thereof is also the same.

The downstream side flange part 2003 of the jumping block 2000 is configured with the same configuration as the upstream side flange part 2002 described in FIG. 37 to FIG. 39.

That is, in the downstream side flange part 2003 of the jumping block 2000, a fourth main fuel-line connection hole 2100 is formed in a center. As described in FIG. 33, since the fourth main fuel-line connection hole 2100 of the downstream side flange part 2003 extends only from the downstream side flange part 2003 to the separator attachment/detachment part 2004, it was specially distinguished as "a downstream side main line connection hole 2100b".

Such a downstream side main line connection hole 2100b (i.e., the fourth main fuel-line connection hole 2100) extends from the downstream side flange part 2003 to the separator attachment/detachment part 2004 in an upstream direction along the block-shaped body part 2001 of the jumping block 2000.

In addition, in a connection surface 2220 of the downstream side flange part 2003 of the jumping block 2000, an annular groove 2230 is formed by maintaining an interval toward an outside in a radial direction of the fourth main fuel-line connection hole 2100.

At upper and lower parts of the annular groove 2230, a third upper annular space connection groove 2232 and a third lower annular space connection groove 2234 are formed, respectively. Accordingly, the third upper annular space connection groove 2232 and the third lower annular space connection groove 2234 communicate with each other at the annular groove 2230.

As described in FIG. 33, since the third upper annular space connection groove 2232 of the downstream side flange part 2003 of the jumping block 2000 extends only from the downstream side flange part 2003 to the separator attachment/detachment part 2004, it was specially distinguished as "a downstream side upper annular space connection groove 2232b". Similarly, the third lower annular space connection groove 2234 was distinguished as "a downstream side lower annular space connection groove 2234b".

In addition, the annular groove 2230 of the jumping block 2000 abuts and mutually communicates with the annular groove 1230 of the upstream side flange part 1002 of the high-pressure block 1000.

Accordingly, the downstream side upper annular space connection groove 2232b and the downstream side lower annular space connection groove 2234b of the downstream side flange part 2003 of the jumping block 2000 and the first upper annular space connection groove 1232 and the first lower annular space connection groove 1234 of the upstream side flange part 1002 of the high-pressure block 1000 communicate with each other through the annular groove 2230 and the annular groove 1230 that are abutting each other.

The downstream side upper annular space connection groove 2232b and the first upper annular space connection groove 1232, and the downstream side lower annular space connection groove 2234b and the first lower annular space connection groove 1234 maintain horizontal without the height difference with respect to the ground while being parallel with the first main fuel-line connection hole 1110 and the fourth main fuel-line connection hole 2100.

According to this, as illustrated in FIG. 43, since the downstream side lower annular space connection groove 2234b of the jumping block 2000 and the first lower annular space connection groove 1234 of the high-pressure block 1000 are horizontally connected to each other without the height difference such as a gradient or a step, leaked fuel may smoothly flow and be discharged.

In addition, in the downstream side flange part 2003 of the jumping block 2000 and the upstream side flange part 1002 of the high-pressure block 1000, fastening holes 2202 and 1202 for fastening each other are formed.

In addition, in a connection surface 1320 of the downstream side flange part 1003 of the high-pressure block 1000, an inner seal groove 1222 and an outer seal groove 1224 may be formed. By inserting a seal 1222a into each of these inner seal groove 1222 and outer seal groove 1224, airtightness between the two connection surfaces 2220 and 1220 may be maintained.

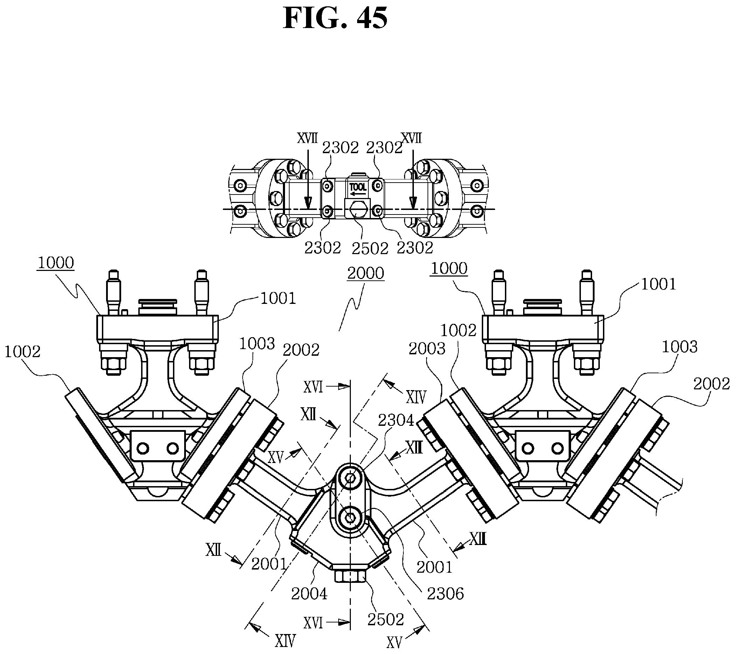

Next, FIG. 45 to FIG. 50 are views for explaining configurations of the separator attachment/detachment part 2004 formed in the middle of the jumping block 2000 and the annular space connection groove in the block type common rail 60a according to the present disclosure.

First, in FIG. 45, a plan view of a principal part of the block type common rail 60a according to the present disclosure is illustrated. FIG. 33 together will be referenced.

With reference to FIG. 45, as described above, the separator attachment/detachment part 2004 for detecting whether or not fuel leakage into the annular space occurs is provided in the middle of the jumping block 2000.

The separator attachment/detachment part 2004 is formed at a middle point of the block-shaped body part 2001 of the jumping block 2000.

In the block-shaped body part 2001, as described in FIG. 33, a fourth main fuel-line connection hole 2100 is formed in a center, and a third upper annular space connection groove 2232 and a third lower annular space connection groove 2234 are formed at an upper part and a lower part of the fourth main fuel-line connection hole 2100.

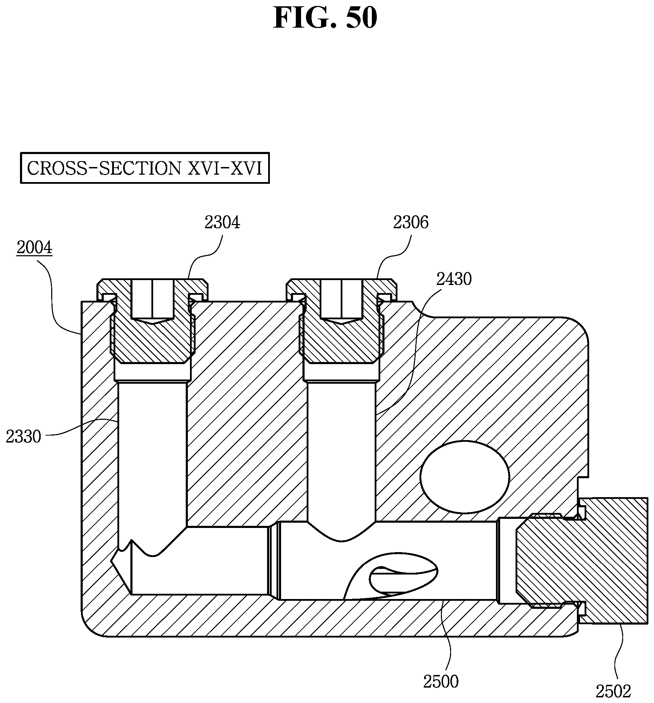

In the separator attachment/detachment part 2004, a separator insertion hole 2500 (refer to FIG. 50 to FIG. 51), which will be described in detail later, is formed, and a plug 2502 is blocking an inlet of this separator insertion hole 2500. At a time of leakage detection, after separating the plug 2502, the separator 850 may be inserted into the separator insertion hole 2500.

In the separator attachment/detachment part 2004 (refer to FIG. 33), the upstream side upper annular space connection groove 2232a and the downstream side upper annular space connection groove 2232b of the third upper annular space connection groove 2232 are disconnected from each other. Similarly, the upstream side lower annular space connection groove 2234a and the downstream side lower annular space connection groove 2234b of the third lower annular space connection groove 2234 are disconnected from each other.

In the separator attachment/detachment part 2004, the disconnected upstream side upper annular space connection groove 2232a and downstream side upper annular space connection groove 2232b are connected to each other by the separator insertion hole 2500. Similarly, the disconnected upstream side lower annular space connection groove 2234a and downstream side lower annular space connection groove 2234b are connected to each other by the separator insertion hole 2500.

At the same time, by the separator insertion hole 2500, while the upstream side upper annular space connection groove 2232a and the upstream side lower annular space connection groove 2234a are also connected to each other, the downstream side upper annular space connection groove 2232b and the downstream side lower annular space connection groove 2234b are also connected to each other.

When the separator 850 is inserted into such a separator insertion hole 2500, the separator 850 blocks connection of the annular spaces on an upstream side and the annular spaces on a downstream side. That is, the connection of the upstream side upper and lower annular space connection grooves 2232a and 2234a and the downstream side upper and lower annular space connection grooves 2232b and 2234b is disconnected.

These matters will be specifically described through the drawings.

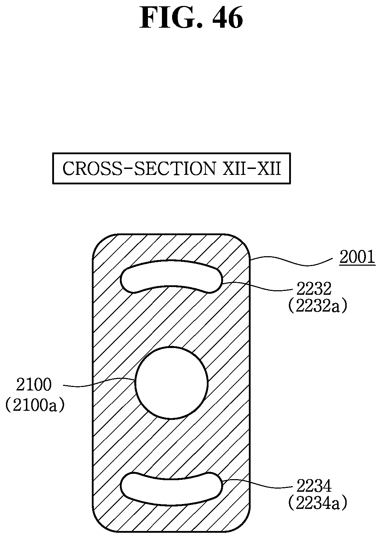

In FIG. 46 (a cross-sectional view along line XII-XII of FIG. 45), a view illustrating structures of the main fuel line and the annular space formed inside one side (upstream side) block-shaped body part 2001 of the jumping block 2000 is illustrated.

With reference to FIG. 45 to FIG. 46 (with reference to FIG. 33 together), in the block-shaped body part 2001 on the upstream side of the jumping block 2000, an upstream side main line connection hole 2100a as the fourth main fuel-line connection hole 2100 is penetratively formed in a center part. At an upper side of the upstream side main line connection hole 2100a, an upstream side upper annular space connection groove 2232a as the third upper annular space connection groove 2232 is formed in a circular arc shape. At a lower side of the upstream side main line connection hole 2100a, an upstream side lower annular space connection groove 2234a as the third lower annular space connection groove 2234 is formed in the circular arc shape.

As described above, the upstream side upper annular space connection groove 2232a and the upstream side lower annular space connection groove 2234a are formed in the straight line from the upstream side flange part 2002 to the separator attachment/detachment part 2004 (refer to FIG. 33).

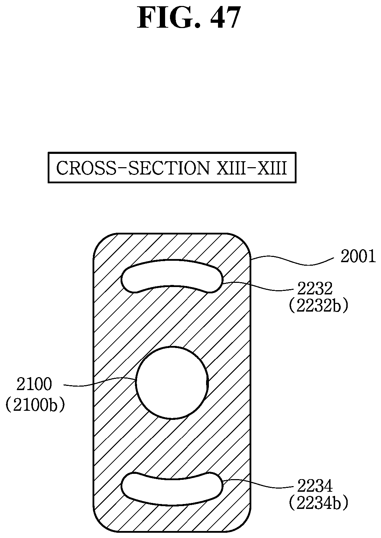

In FIG. 47 (a cross-sectional view along line XIII-XIII of FIG. 45), a view illustrating structures of the main fuel line and the annular space formed inside another side (downstream side) block-shaped body part 2001 of the jumping block 2000 is illustrated.

With reference to FIG. 47, FIG. 33, and FIG. 45, in the block-shaped body part 2001 on the downstream side of the jumping block 2000, a downstream side main line connection hole 2100b as the fourth main fuel-line connection hole 2100 is penetratively formed in a center part. At an upper side of the downstream side main line connection hole 2100b, a downstream side upper annular space connection groove 2232b as the third upper annular space connection groove 2232 is formed in the circular arc shape. At a lower side of the downstream side main line connection hole 2100b, a downstream side lower annular space connection groove 2234b as the third lower annular space connection groove 2234 is formed in the circular arc shape.

As described above, the downstream side upper annular space connection groove 2232b and the downstream side lower annular space connection groove 2234b are formed in the straight line from the downstream side flange part 2003 to the separator attachment/detachment part 2004 (refer to FIG. 33).

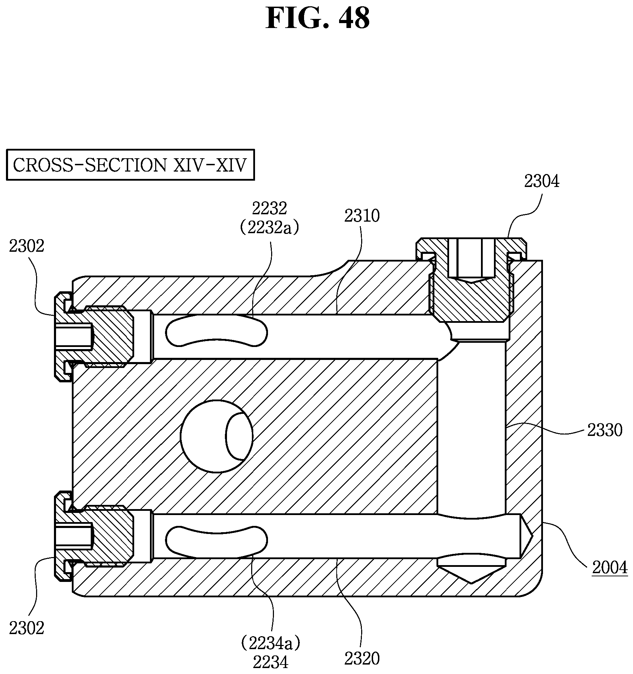

In FIG. 48 (a cross-sectional view along line XIV-XIV of FIG. 45), a configuration for communication of the upstream side upper annular space connection groove 2232a and the upstream side lower annular space connection groove 2234a is illustrated.

With reference to FIG. 48, FIG. 33, and FIG. 45, an upper communication hole 2310 and a lower communication hole 2320 penetratively pass across end parts (inner ends) of the upstream side upper annular space connection groove 2232a and the upstream side lower annular space connection groove 2234a, respectively.

In addition, a first vertical communication hole 2330 penetratively passes through end parts (inner ends) of the upper communication hole 2310 and the lower communication hole 2320.

Accordingly, the upstream side upper annular space connection groove 2232a and the upstream side lower annular space connection groove 2234a are connected to the first vertical communication hole 2330 through the upper communication hole 2310 and the lower communication hole 2320 to communicate with each other.

Inlets of the upper communication hole 2310 and the lower communication hole 2320 are blocked by screw-fastening a plug 2302, respectively, and an inlet of the first vertical communication hole 2330 is blocked by screw-fastening a plug 2304.

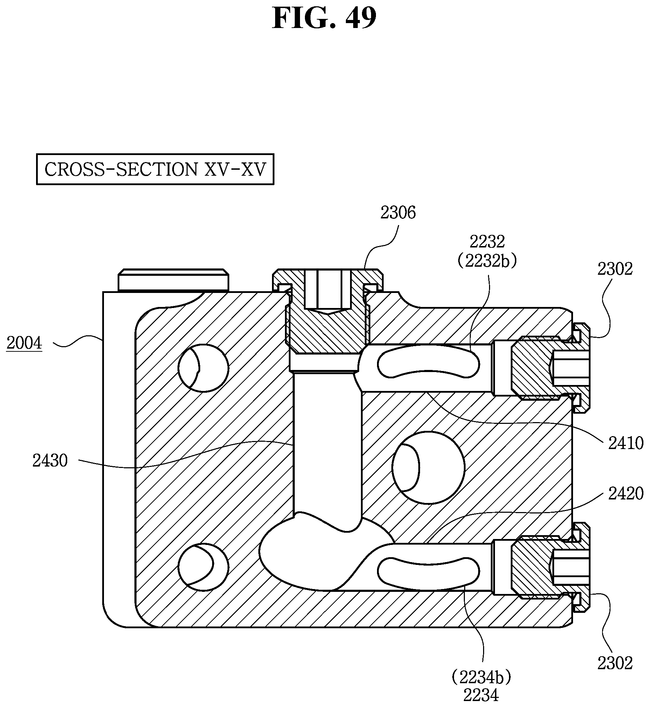

In FIG. 49 (a cross-sectional view along line XV-XV of FIG. 45), a configuration for communication of the downstream side upper annular space connection groove 2232b and the downstream side lower annular space connection groove 2234b is illustrated.

With reference to FIG. 49, FIG. 33, and FIG. 45, an upper communication hole 2410 and a lower communication hole 2420 penetratively pass across end parts of the downstream side upper annular space connection groove 2232b and the downstream side lower annular space connection groove 2234b, respectively.

In addition, a second vertical communication hole 2430 penetratively passes through end parts (inner ends) of the upper communication hole 2410 and the lower communication hole 2420.

Accordingly, the downstream side upper annular space connection groove 2232b and the downstream side lower annular space connection groove 2234b are connected to the second vertical communication hole 2430 through the upper communication hole 2410 and the lower communication hole 2420 to communicate with each other.

Here, the first vertical communication hole 2330 and the second vertical communication hole 2430 are formed at points apart from each other in a longitudinal direction of the separator insertion hole 2500 (refer to FIG. 33 and FIG. 45).

Next, in FIG. 50 (a cross-sectional view along line XVI-XVI of FIG. 45), a view for explaining a structure in which the first and second vertical communication holes 2330 and 2430 described in FIG. 48 and FIG. 49 are communicated again with the separator insertion hole 2500 is illustrated.

With reference to FIG. 50, FIG. 33, and FIG. 45, the separator insertion hole 2500 is formed in a form penetratively passing across end parts (inner ends) of the first vertical communication hole 2330 and the second vertical communication hole 2430.

The first vertical communication hole 2330 and the second vertical communication hole 2430 communicate with each other through the separator insertion hole 2500.

An inlet of the separator insertion hole 2500 is blocked by screw-fastening a plug 2502. At a time of leakage detection, after loosening and separating the plug 2502, the separator 850 may be inserted into the separator insertion hole 2500.

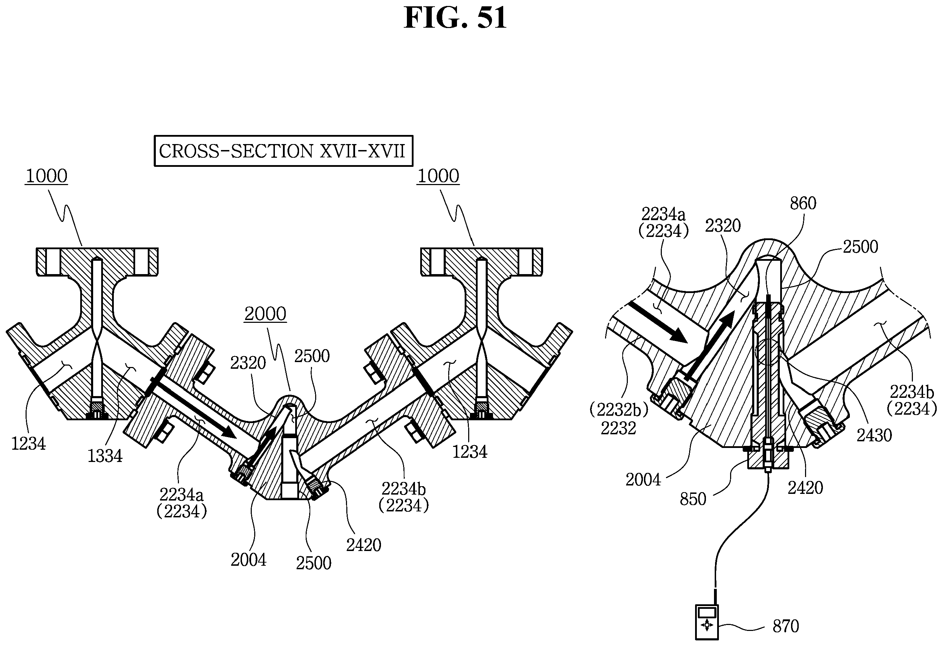

Next, in FIG. 51 (a horizontal cross-sectional view along line XVII-XVII of FIG. 45), a view illustrating a connection structure of a lower side annular space and the separator insertion hole of the block type common rail 60a is illustrated.

FIG. 51, FIG. 33, FIG. 45, and FIG. 50 together will be referenced. When the separator for leakage detection 850 is inserted into the separator insertion hole 2500, the head part 852 (refer to FIG. 28) of the separator 850 blocks a middle part of the separator insertion hole 2500. Accordingly, communicative connection of the first vertical communication hole 2330 and the second vertical communication hole 2430 is blocked (or broken) by the head part 852 of the separator 850. As such, as the communicative connection of the first vertical communication hole 2330 and the second vertical communication hole 2430 is blocked, communicative connection between the upstream side upper and lower annular space connection grooves 2232a, 2234a and the downstream side upper and lower annular space connection grooves 2232b, 2234b is also blocked.

Along with this, an end surface of the separator 850, that is, an end surface of the head part 852, is exposed into an inside of the first vertical communication hole 2330. That is, it is exposed to a space of an inner end part of the separator insertion hole 2500. Then, a sensor insertion hole 854, which is open to the end surface of the head part 852 communicates with the first vertical communication hole 2330. The sensor insertion hole 854 is disconnected from the second vertical communication hole 2430. Accordingly, when the leakage detection sensor 860 is inserted into the separator insertion hole 2500, a probe of the leakage detection sensor 860 may be exposed to the space of the first vertical communication hole 2330. Here, while the first vertical communication hole 2330 communicates with the upper communication hole 2310 and the lower communication hole 2320, again the upper communication hole 2310 communicates with the upstream side upper annular space connection groove 2232a and the lower communication hole 2320 communicates with the upstream side lower annular space connection groove 2234a, and thus the probe of the leakage detection sensor 860 may detect leaked fuel into the upstream side annular space, that is, the upstream side upper annular space connection groove 2232a and the upstream side lower annular space connection groove 2234a.

According to the liquid fuel supply line and the liquid fuel supply system provided with the block type common rail 60a of the present disclosure configured as such, the block type common rail 60a has a structure in which the jumping block 2000 provided with the separator attachment/detachment part 2004 is always mounted.

Accordingly, at a test step before operation or any required time point during operation (for example, when a leakage alarm occurs in a leakage alarm tank), leakage may be easily detected only by separating the plug 2502 of the separator insertion hole 2500 and inserting the separator 850 without a separate complicated process.

In addition, while the block type common rail 60a of the present disclosure is made in a form connecting a plurality of high-pressure blocks 1000 and a plurality of jumping blocks 2000, since the separator attachment/detachment part 2004 is provided in each jumping block 2000, leakage may be detected at several points of the common rail, and a leakage occurrence point may be precisely and easily found.

In addition, the block type common rail 60a of the present disclosure is made in a form in which between the high-pressure block 1000 and the high-pressure block 1000 is connected by the jumping block 2000 of a solid block type of which inside is completely filled, and the main fuel-line connection hole and the annular space connection groove are perforated in this jumping block 2000. Accordingly, the common rail may be configured without a welded part, so that a risk of defect occurrence or fuel leakage at a welded part may be fundamentally removed by that much. In addition, since the annular space connection grooves 1334 and 2234 between the high-pressure block and the jumping block may be connected without the height difference such as a step or a gradient, fuel leaked into the annular space may smoothly flow and be discharged.

In addition, since the high-pressure block 1000 and the jumping block 2000 constituting the block type common rail 60a may be manufactured only by adding simple machining (e.g., perforation and surface machining) after forging or casting, manufacturability is excellent.

In addition, since the jumping block 2000 is made of a solid block and thus length increase/decrease is free in design and manufacturing, the application range thereof is very wide, such as even an engine of a form in which an interval between the high-pressure block 1000 and the high-pressure block 1000 is very narrow may be easily implemented.

In addition, since the block type common rail 60a of the present disclosure is made in a form connecting a plurality of high-pressure blocks 1000 and a plurality of jumping blocks 2000, it may be repaired or replaced by separating in a unit of each high-pressure block 1000 or a unit of each jumping block 2000, and thus maintenance is easy and operation costs may be reduced.

### [Liquid Fuel Supply Line - Example 3]

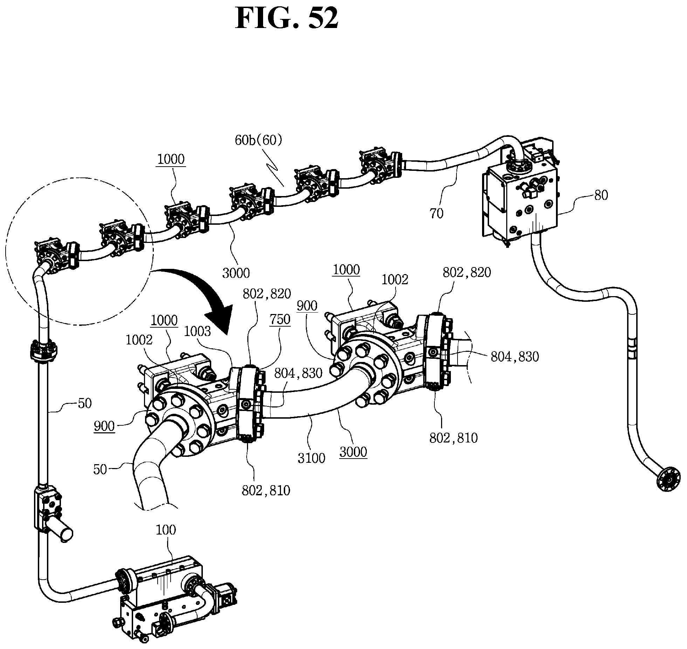

FIG. 52 to FIG. 56 are another embodiment of the liquid fuel supply line according to the present disclosure, and in particular, are views for explaining an embodiment in which the common rail 60 is configured as a jumping pipe type common rail 60b and a leakage detection structure is applied to the corresponding jumping pipe type common rail 60b.

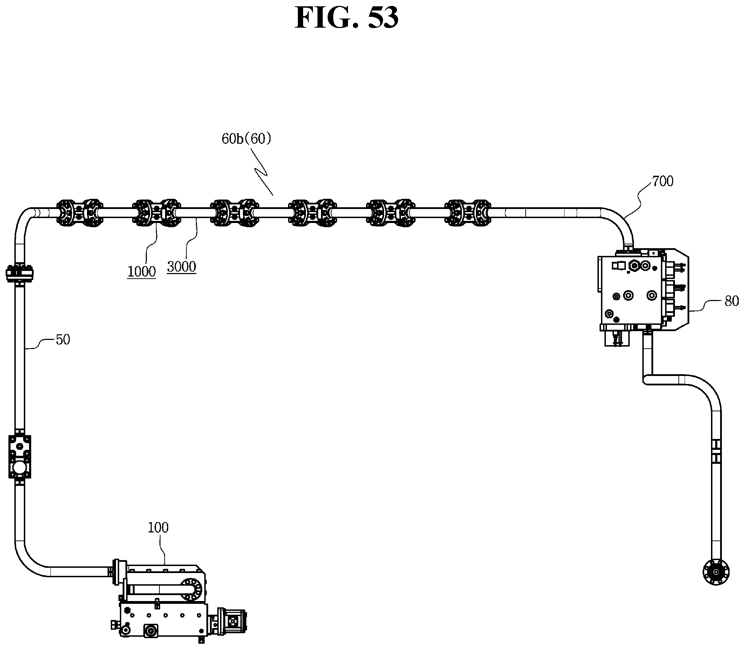

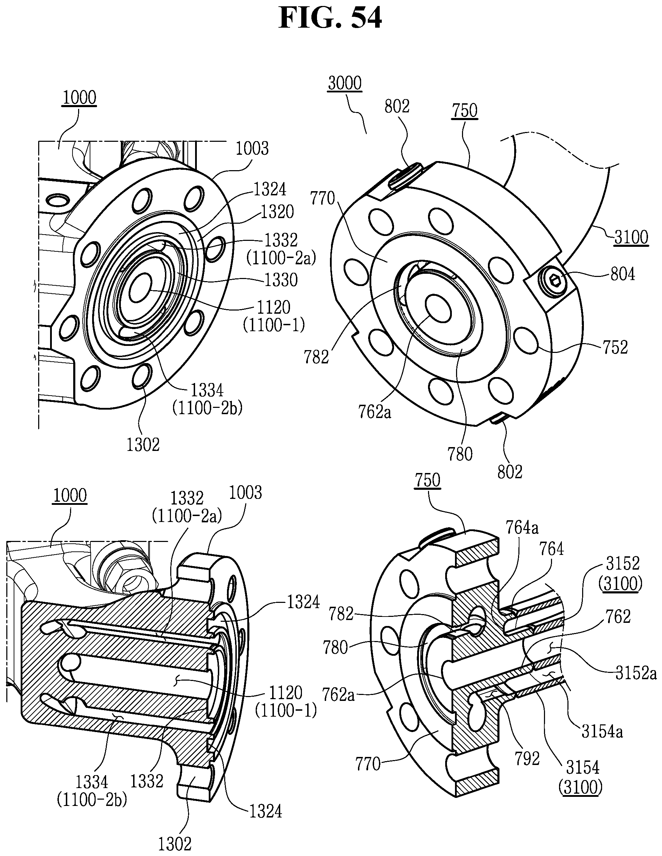

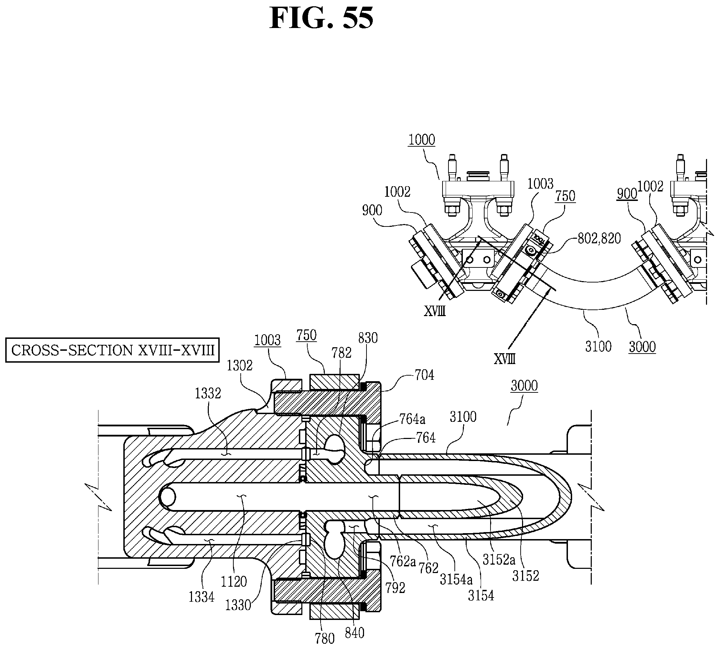

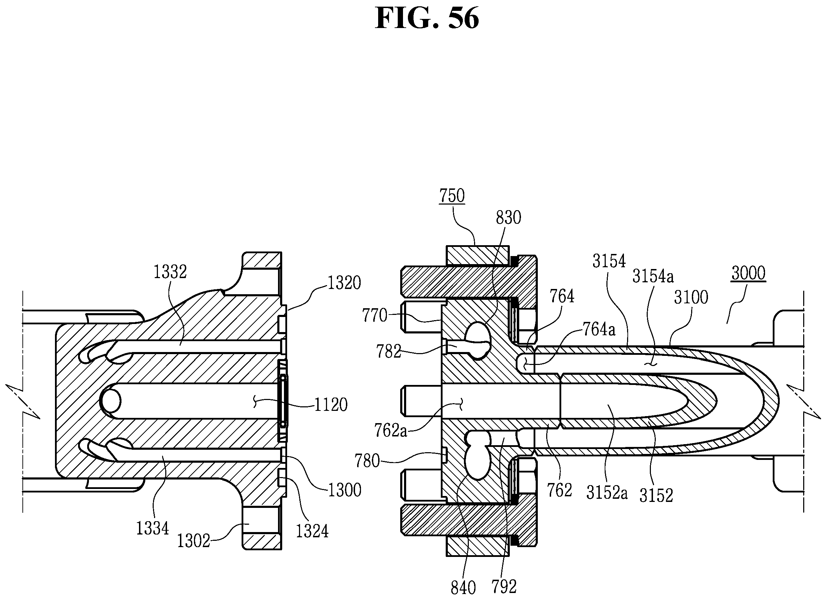

In FIG. 52, a perspective view of the jumping pipe type common rail 60b is illustrated, in FIG. 53, a front view is illustrated, in FIG. 54, an exploded perspective view of the flange part 1003 of the high-pressure block 1000 and the leakage detection block 750 of the jumping pipe 3000 is illustrated, in FIG. 55, a coupled state cross-sectional view (a cross-sectional view along line XVIII-XVIII in FIG. 55) is illustrated, and in FIG. 56, a separated state cross-sectional view is illustrated.

First, with reference to FIG. 52 to FIG. 54, the liquid fuel supply system according to the present disclosure includes a high-pressure liquid fuel inlet line 50 (the same as Example 2). As described above, the high-pressure liquid fuel inlet line 50 is configured with an inner pipe 52 forming a main fuel line 52a inside, and an outer pipe 54 maintaining an annular space 54a outside the inner pipe 52.

In addition, as the common rail 60, a jumping pipe type common rail 60b is provided. The jumping pipe type common rail 60b is connected with the high-pressure liquid fuel inlet line 50 and distributes high-pressure liquid fuel to an engine cylinder.

In addition, a discharge line 70 (the same as Example 2) which is a high-pressure double pipe connected to an outlet of the jumping pipe type common rail 60b is provided.

The jumping pipe type common rail 60b is provided with a high-pressure block 1000 and a jumping pipe 3000.

The jumping pipe 3000 includes a double curved pipe 3100 connecting between the neighboring high-pressure blocks 1000. The double curved pipe 3100 is configured with an inner pipe 3152 forming a main fuel line 3152a in a center, and an outer pipe 3154 maintaining an annular space 3154a outside the inner pipe 3152.

At an upstream end of the double curved pipe 3100, a leakage detection block 750 to which a separator for leakage detection 850 is attachable/detachable is provided. This leakage detection block 750 is in the same form as the leakage detection block 750 described in FIG. 21 to FIG. 28.

At a downstream end of the double curved pipe 3100, a connection flange 900 is provided. This connection flange 900 is in the same form as the connection flange 900 described in FIG. 34 to FIG. 36.

The leakage detection block 750 provided at the upstream end of the double curved pipe 3100 is connected with the downstream side flange part 1003 of the high-pressure block 1000. The connection flange 900 provided at the downstream end of the double curved pipe 3100 is connected to the upstream side flange part 1002 of the neighboring high-pressure block 1000 on a downstream side.

The high-pressure block 1000 illustrated in FIG. 52 to FIG. 56 is the same block as the high-pressure block 1000 described in FIG. 29 to FIG. 39.

That is, the high-pressure block 1000 is provided with an engine side flange part 1001 formed at one side of a body, an upstream side flange part 1002 and a downstream side flange part 1003 formed at both sides opposite to the engine side flange part 1001, and a main fuel-line connection hole 1100-1 perforated to connect the upstream side flange part 1002 and the downstream side flange part 1003 by penetrating a cross-sectional center of the body while branchingly penetrating to the engine side flange part 1001.

The downstream side flange part 1003 of the high-pressure block 1000 illustrated in FIG. 52 to FIG. 56 is configured with the same configuration as the downstream side flange part 1003 described in FIG. 37 to FIG. 39.

Accordingly, at an upper part and a lower part of the main fuel-line connection hole 1100-1, an upper annular space connection groove 1100-2a and a lower annular space connection groove 1100-2b perforated in parallel with the main fuel-line connection hole 1100-1 are provided, respectively.

Similarly, the leakage detection block 750 of the jumping pipe 3000 illustrated in FIG. 52 to FIG. 56 has the same configuration as the leakage detection block 750 described in FIG. 21 to FIG. 28.

Accordingly, the leakage detection block 750 includes a main fuel-line connection hole 762a connected with the main fuel-line connection hole 1100-1 of the high-pressure block 1000 in a center, a first annular space connection groove 782 formed to a certain depth of a body while facing the upper annular space connection groove 1100-2a and the lower annular space connection groove 1100-2b of the high-pressure block 1000, and a second annular space connection groove 792 formed to a certain depth of the body while communicating with the annular space 3154a at a diametrically opposite side of the first annular space connection groove 782.

In addition, the leakage detection block 750 is configured by including a first separator insertion hole 810, a second separator insertion hole 820, a first communication hole 830, and a second communication hole 840, identically to what was described in FIG. 27 to FIG. 28. In each separator insertion hole 810 and 820, a plug 802 is fastened. In the first communication hole 830 and the second communication hole 840, a plug 804 is fastened.

By inserting the separator for leakage detection 850 into each of the first separator insertion hole 810 and the second separator insertion hole 820 after removing the plug 804, communicative connection between both ends of the first annular space connection groove 782 and the second annular space connection groove 792 is blocked, and an end of each separator 850 is exposed to an inside of the first communication hole 830 communicating only with the first annular space connection groove 782 and an inside of the second communication hole 840 communicating only with the second annular space connection groove 792 (refer to FIG. 27 to FIG. 28 concurrently).

When the leakage detection sensor 860 is inserted into a center hole of the separator 850, in the separator 850 inserted into the first separator insertion hole 810, a communication state of respective one ends of the first annular space connection groove 782 and the second annular space connection groove 792 is blocked by a head part 852 thereof blocking the first separator insertion hole 810. Further, an insertion end of the separator 850, that is, an end surface of the head part 852, is exposed to the first annular space connection groove 782 and the first communication hole 830. Accordingly, when the leakage detection sensor 860 is inserted into the center hole of the separator 850, a probe part of the leakage detection sensor 860 may detect leaked fuel of the first annular space connection groove 782 and the first communication hole 830. In this case, the first annular space connection groove 782 communicates with the annular groove 1330 of the high-pressure block 1000, and the annular groove 1330 communicates with the second upper annular space connection groove 1332 and the second lower annular space connection groove 1334 of the high-pressure block 1000. Accordingly, fuel leakage into the second upper annular space connection groove 1332 and the second lower annular space connection groove 1334 on a side of the high-pressure block 1000 may be detected by the leakage detection sensor 860 (refer to FIG. 27 to FIG. 28 concurrently).

Similarly, in the separator 850 inserted into the second separator insertion hole 820, a communication state of respective other ends of the second annular space connection groove 792 and the first annular space connection groove 782 is blocked by the head part 852 thereof blocking the second separator insertion hole 820. Further, an end surface of the head part 852, which is an insertion end of the separator 850, is exposed to the second annular space connection groove 792 and the third communication hole 840. Accordingly, when the leakage detection sensor 860 is inserted into the center hole of the separator 850, the probe part of the leakage detection sensor 860 may detect leaked fuel of the second annular space connection groove 792 and the second communication hole 840, and thus fuel leakage into the annular space 3154a on a side of the double curved pipe 3100 and the connection flange 900 may be detected (refer to FIG. 27 to FIG. 28 concurrently).

As such, according to the liquid fuel supply line and the liquid fuel supply system provided with the jumping pipe type common rail 60b, the connection flange of the jumping pipe 3000 may be easily configured as the leakage detection block 750 capable of leakage detection, and also, leakage may be easily detected only by inserting the separator 850 into the first separator insertion hole 810 and the second separator insertion hole 820 of the leakage detection block 750 without a separate complicated process at any time of a test step before operation or during operation.

In addition, since the jumping pipe type common rail 60b of the present disclosure is made in a form connecting a plurality of high-pressure blocks 1000 and a plurality of jumping pipes 3000, while the leakage detection block 750 is provided in each jumping pipe 3000, leakage may be detected at several points of the common rail, and a leakage occurrence point may be precisely and easily found.

In addition, since the jumping pipe type common rail 60b of the present disclosure is made in a form in which between the high-pressure block 1000 and the high-pressure block 1000 is connected by the jumping pipe 3000 having the double curved pipe 3100, a weight of the double curved pipe 3100 is light, so that a weight of the entire common rail may be reduced. Accordingly, it is good to apply to an engine where leakage detection is easy while the weight needs to be reduced.

In addition, since the jumping pipe type common rail 60b of the present disclosure is made in a form connecting a plurality of high-pressure blocks 1000 and a plurality of jumping pipes 3000, it may be repaired or replaced by separating in a unit of each high-pressure block 1000 or a unit of each jumping pipe 3000, and thus maintenance is easy and operation costs may be reduced.

### [Leakage Detection Means and Leakage Detection System of Liquid Fuel Supply Line]

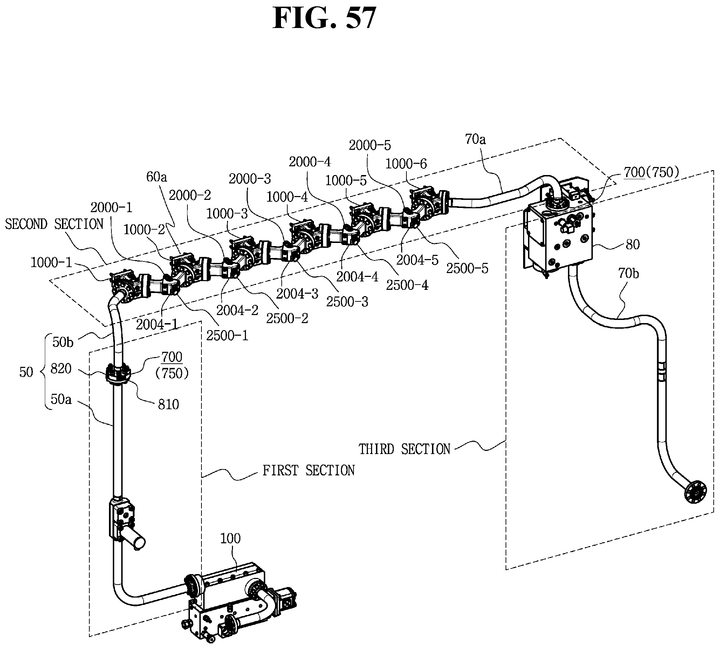

FIG. 57 to FIG. 59 are views for explaining the leakage detection system of the high-pressure liquid fuel supply line according to the present disclosure.

In FIG. 57, a view for explaining the leakage detection system of the high-pressure liquid fuel supply line is illustrated, in which the connection part for leakage detection 700 is applied to the high-pressure liquid fuel inlet line 50 according to the present disclosure, and the jumping block 2000 for leakage detection is applied to the block type common rail 60a.

### (Leakage Detection Means)

One specific embodiment of the leakage detection means according to the present disclosure is implemented as the leakage detection block 750 provided in the high-pressure liquid fuel inlet line 50, the discharge line 70, and the jumping pipe 3000 explained through FIG. 21 to FIG. 28 above.

Another specific embodiment of the leakage detection means according to the present disclosure is implemented as the jumping block 2000 having the separator attachment/detachment part 2004 explained through FIG. 29 to FIG. 51.

The leakage detection means implemented in a form such as the leakage detection block 750 or the jumping block 2000 is to have the following four common and basic technical features.

First, a 'main fuel-line connection hole' penetrating a body, and an 'annular space' formed around the main fuel-line connection hole are provided.

Second, the annular space is divided into an 'upstream side annular space' and a 'downstream side annular space'.

Third, a 'separator insertion hole' for communicatively connecting across the upstream side annular space and the downstream side annular space is provided.

Fourth, a connection configuration of the upstream side annular space, the downstream side annular space, and the separator insertion hole is configured such that, when the separator 850 is inserted into the separator insertion hole, communicative connection between the upstream side annular space and the downstream side annular space is blocked by the head part 852 of the separator 850, and a sensor insertion hole 854, which is open to an end surface of the head part 852 communicates with any one of the upstream side annular space and the downstream side annular space (Accordingly, when the leakage detection sensor 860 is inserted into the sensor insertion hole 854, a probe of the leakage detection sensor 860 is exposed at the end surface of the head part, so that leakage of the corresponding annular space where the probe is exposed may be detected. Refer to the leakage detection sensor 860 in FIG. 28 and FIG. 51).

In the leakage detection block 750 explained through FIG. 21 to FIG. 28, the 'main fuel-line connection hole' is implemented as the 'main fuel-line connection hole 762a'. The 'upstream side annular space' is implemented as the 'first annular space connection groove 782'. The 'downstream side annular space' is implemented as the 'second annular space connection groove 792'. The 'separator insertion hole' is implemented as the 'first separator insertion hole 810' or the 'second separator insertion hole 820'.

In the jumping block 2000 explained through FIG. 29 to FIG. 51, the 'main fuel-line connection hole' is implemented as the 'main fuel-line connection hole 1100-1' (refer to FIG. 32) or the 'fourth main fuel-line connection hole 2100'. The 'upstream side annular space' is implemented as the 'upstream side upper and lower annular space connection grooves 2232a and 2234b'. The 'downstream side annular space' is implemented as the 'downstream side upper and lower annular space connection grooves 2232b and 2234b'.

The 'separator insertion hole' is implemented as the 'separator insertion hole 2500'.

### (Leakage Detection System of Liquid Fuel Supply Line)

As already explained above, the liquid fuel supply line according to the present disclosure includes the high-pressure liquid fuel inlet line 50 of a double pipe structure, the common rail 60 of a double wall structure connected to a downstream end of the high-pressure liquid fuel inlet line 50, and the discharge line 70 of a double pipe structure connected to a downstream end of the common rail 60.

Common and basic technical features of the leakage detection system of such a liquid fuel supply line are that the leakage detection means is installed in at least one of the high-pressure liquid fuel inlet line 50, the common rail 60, or the discharge line 70, so that leakage may be detected at a point where the corresponding leakage detection means is installed.

Specific embodiments of the leakage detection system of the present disclosure may be implemented in the following three forms. That is, as the common rail 60, it may be classified into a block type common rail 60a, a jumping pipe type common rail 60b, or a straight pipe type common rail 60c.

### (Leakage Detection System of Liquid Fuel Supply Line to which Block type Common Rail 60a is applied)

With reference to FIG. 57, the liquid fuel supply system is configured with the high-pressure liquid fuel inlet line 50, the block type common rail 60a, and the discharge line 70 explained above.

As explained above, the high-pressure liquid fuel inlet line 50 has the main fuel line 52a and the annular space 54a. The block type common rail 60a is connected to the downstream end of the high-pressure liquid fuel inlet line 50.

The high-pressure liquid fuel inlet line 50 is in a form divided into a first inlet line 50a on an upstream side and a second inlet line 50b on a downstream side, and the divided part is connected by the connection part for leakage detection 700 to which the separator for leakage detection 850 is attachable/detachable. The connection part for leakage detection 700 is provided with the leakage detection block 750 to which the separator for leakage detection 850 is attachable/detachable.

The block type common rail 60a is provided with a plurality of high-pressure blocks 1000 (1000-1, 1000-2, ..., 1000-n) corresponding to each engine cylinder. In addition, a jumping block 2000 (2000-1, 2000-2, ..., 2000-n) connecting between the neighboring high-pressure blocks 1000 is provided. In the plurality of high-pressure blocks 1000 and the plurality of jumping blocks 2000, the main fuel-line connection hole 2100 and the annular space connection groove 1100-2 explained above are formed over an entire length.

In a middle of each jumping block 2000 (2000-1, 2000-2, ..., 2000-n), a separator attachment/detachment part 2004 (2004-1, 2004-2, ..., 2004-n) to which the separator 850 is attachable/detachable is provided. That is, in the separator attachment/detachment part 2004 (2004-1, 2004-2, ..., 2004-n), a separator insertion hole 2500 (2500-1, 2500-2, ..., 2500-n) is provided.

The discharge line 70 has the main fuel line 52a and the annular space 54a and is connected to the downstream end of the block type common rail 60a.

The discharge line 70 is in a form divided into a first discharge line 70a on an upstream side and a second discharge line 70b on a downstream side, and the divided part is connected by the connection part for leakage detection 700 to which the separator for leakage detection 850 is attachable/detachable. The connection part for leakage detection 700 is provided with the leakage detection block 750 to which the separator for leakage detection 850 is attachable/detachable.

As explained above, at the downstream end of the discharge line 70, a leakage alarm tank (not illustrated) for recovering liquid fuel leaked into the annular space of the high-pressure liquid fuel inlet line 50, the annular space of the block type common rail 60a, and the annular space of the discharge line 70 and issuing an alarm is installed.

Leakage detection may be performed in a final leakage test process of a manufactured engine. In addition, while the engine is in use, it may be performed in a case where leaked fuel of more than a reference amount is detected in the leakage alarm tank and a leakage alarm occurs. In this case, it is performed in a state in which the engine is stopped and the liquid fuel remaining in the liquid fuel supply line is discharged.

At a time of leakage detection, nitrogen gas (another inert gas may be used) is injected instead of liquid fuel into an inlet of the main fuel line 52a of the high-pressure liquid fuel inlet line 50, which is the uppermost stream of the liquid fuel supply line.

If leakage occurs from the main fuel line because there is a defective part in each connection part or the like of the liquid fuel supply line, the leaked inert gas will flow out into the annular space.

The detection of leakage is performed by detecting oxygen concentration from the leakage detection sensor 860, determining whether or not the oxygen concentration becomes lower than a reference value due to the leakage of the inert gas (nitrogen gas or the like), and judging that leakage has occurred in an annular space region communicating with the corresponding separator 850 if the oxygen concentration is lower than the reference value.

For example, the separator 850 is inserted into the first separator insertion hole 810 and the second separator insertion hole 820 formed in the connection part for leakage detection 700 of the high-pressure liquid fuel inlet line 50. Then, by the separator 850 inserted into the first separator insertion hole 810, it may be detected whether or not leaked nitrogen gas has been introduced into the annular space of a section on a side of the first inlet line 50a, which is an upstream side of the separator 850. In addition, by the separator 850 inserted into the second separator insertion hole 820, it may be detected whether or not leaked nitrogen gas has been introduced into the annular space of a section on a side of the second inlet line 50b, which is a downstream side therefrom.

Leakage detection in the connection part for leakage detection 700 of the discharge line 70 is also performed identically to the leakage detection of the high-pressure liquid fuel inlet line 50.

Meanwhile, the separator 850 is sequentially inserted into the separator insertion hole 2500-1, 2500-2, ..., 2500-n formed in each jumping block 2000-1, 2000-2, ..., 2000-n of the block type common rail 60a. Then, whether or not leakage occurs in an upstream section of the inserted separator 850 may be detected.

For example, by the separator for leakage detection 850 inserted into the separator insertion hole 2500-2 of the second jumping block 2000-2 of the block type common rail 60a, it may be detected whether or not leaked gas has been introduced into the annular space of a section between the first separator insertion hole 2500-1 and the second separator insertion hole 2500-2, which is the upstream side of the corresponding separator 850. That is, whether or not leakage occurs in the section between the first separator insertion hole 2500-1 and the second separator insertion hole 2500-2 may be detected.

Accordingly, the liquid fuel supply line may be largely divided into several regions, for example, as illustrated in FIG. 57, a first section on a side of the high-pressure liquid fuel inlet line 50, a second section on a side of the block type common rail 60a, and a third section on a side of the discharge line 70, and each section may be sequentially detected. Thereafter, by dividing the section where leakage is detected into detailed sections again and detecting same sequentially, a detailed section or a position where leakage occurred may be narrowed down.

If leakage is detected from the leakage detection sensor 860 inserted into the first separator insertion hole 810 of the leakage detection block 750 of the high-pressure liquid fuel inlet line 50, it may be determined that leakage has occurred in a section of the first inlet line 50a (the first section) upstream therefrom.

In addition, if leakage is detected from the leakage detection sensor 860 inserted into the first separator insertion hole 810 of the connection part for leakage detection 700 of the discharge line 70, it may be determined that leakage has occurred in a section (the second section) between the separator insertion hole 2500-n (in the drawing, '2500-5') of the last jumping block 2000-n (in the drawing, '2000-5') and the first discharge line 70a, and an upstream section (the first section) thereof. In this case, if leakage did not occur in the first section, it may be determined that leakage occurred in the second section.

If leakage is detected from the leakage detection sensor 860 inserted into the second separator insertion hole 820 of the connection part for leakage detection 700 of the discharge line 70, it may be determined that leakage has occurred in a section of the second discharge line 70b (the third section), which is the downstream side of the corresponding connection part for leakage detection 700.

In addition, if leakage is detected from the leakage detection sensor 860 inserted into the second separator insertion hole 820 of the leakage detection block 750 of the high-pressure liquid fuel inlet line 50, or if leakage is detected from the leakage detection sensor 860 inserted into the separator insertion hole 2500-1 of the first jumping block 2000-1 of the block type common rail 60a, it may be determined that leakage has occurred in a section between the first separator insertion hole 810 of the leakage detection block 750 of the high-pressure liquid fuel inlet line 50 and the separator insertion hole 2500-1 of the first jumping block 2000-1.

In this way, an expected leakage point may be narrowed down.

An example of a process of searching for a leakage point for each section will be specifically described.

As illustrated in FIG. 57, the liquid fuel supply line may be classified into a first section including the first inlet line 50a on the upstream side up to the leakage detection block 750 of the high-pressure liquid fuel inlet line 50, a second section including the block type common rail 60a from the leakage detection block 750 of the high-pressure liquid fuel inlet line 50 to the leakage detection block 750 of the discharge line 70, and a third section including the second discharge line 70b on the downstream side from the leakage detection block 750 of the discharge line 70.

Further, the separator 850 is inserted into each of the first and second separator insertion holes 810 of the leakage detection block 750 of the high-pressure liquid fuel inlet line 50. Subsequently, leakage of the first section is detected by inserting the leakage detection sensor 860 into the separator 850 inserted into the first separator insertion hole 810.

If leakage is not detected in the first section, whether or not leakage occurs in the second section and the third section is detected by inserting the separator 850 into each of the first and second separator insertion holes 810 of the leakage detection block 750 of the discharge line 70. If leakage is detected from the separator 850 inserted into the first separator insertion hole 810, it is determined that leakage has occurred in the second section (since leakage did not occur in the first section previously, it may be determined that leakage occurred in the second section). If leakage is detected from the separator 850 inserted into the second separator insertion hole 820, it may be determined that leakage has occurred in the third section.

In the above process, if leakage in the first and third sections is not confirmed and leakage in the second section is confirmed, detection is performed by sequentially inserting the separator 850 and the leakage detection sensor 860 from an upstream toward a downstream direction from the separator insertion hole 2500-1 of the uppermost stream jumping block 2000-1 to the separator insertion hole 2500-n of the lowermost stream jumping block 2000-n of the block type common rail 60a. Then, whether or not leakage occurs in sections between the neighboring jumping blocks 2000 may be searched.

As another method, detection may also be performed for each detailed section by inserting the separator 850 into all of the first separator insertion hole 810 and the second separator insertion hole 820 formed in the connection part for leakage detection 700 of the high-pressure liquid fuel inlet line 50, the first separator insertion hole 810 and the second separator insertion hole 820 formed in the connection part for leakage detection 700 of the discharge line 70, and the separator insertion hole 2500 (2500-1 to 2500-5) of each jumping block 2000 of the block type common rail 60a.

Meanwhile, in the liquid fuel supply line, it may be detected by inserting the separator 850 into the separator insertion hole of a point to be detected, and inserting a dummy separator produced separately into the remaining separator insertion holes.

According to this, leakage in a section of the first inlet line 50a on the upstream side of the connection part for leakage detection 700 of the high-pressure liquid fuel inlet line 50, a section between the second inlet line 50b on the downstream side of the connection part for leakage detection 700 of the high-pressure liquid fuel inlet line 50 and the separator insertion hole 2500-1 of the first jumping block 2000-1, sections between two separator insertion holes 2500 of the neighboring jumping blocks 2000, a section between the separator insertion hole 2500-5 of the last jumping block 2000-5 and the first discharge line 70a on the upstream side of the connection part for leakage detection 700 of the discharge line 70, and a section of the second discharge line 70b on the downstream side of the connection part for leakage detection 700 of the discharge line 70 may each be independently detected.

### (Leakage Detection System of Liquid Fuel Supply Line to which Jumping pipe type Common Rail 60b is applied)

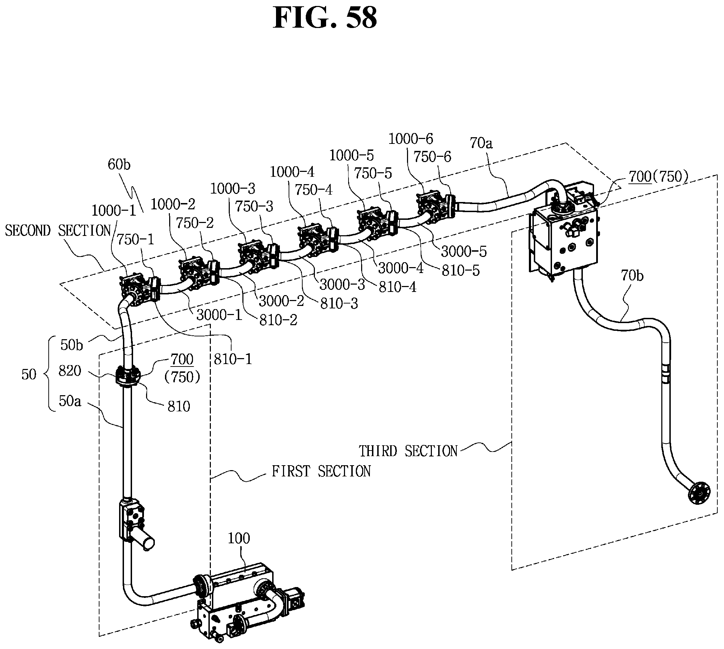

Next, in FIG. 58, a view for explaining leakage detection of a high-pressure liquid fuel supply line including the jumping pipe type common rail 60b is illustrated.

The connection part for leakage detection 700 is applied to the high-pressure liquid fuel inlet line 50, the leakage detection block 750 is applied to the jumping pipe type common rail 60b, and the connection part for leakage detection 700 is applied to the connection part for leakage detection 700.

With reference to FIG. 58, the liquid fuel supply line is configured by including the high-pressure liquid fuel inlet line 50, the jumping pipe type common rail 60b, and the discharge line 70.

The high-pressure liquid fuel inlet line 50 is provided with the connection part for leakage detection 700 and the leakage detection block 750 thereof to which the separator for leakage detection 850 is attachable/detachable.

The jumping pipe type common rail 60b is provided with the leakage detection block 750 (750-1, 750-2, ..., 750-n) to which the separator for leakage detection 850 is attachable/detachable.

In addition, the discharge line 70 is provided with the connection part for leakage detection 700 and the leakage detection block 750 thereof to which the separator for leakage detection 850 is attachable/detachable.

At a downstream end of the discharge line 70, a leakage alarm tank (not illustrated) for recovering liquid fuel leaked into the annular space of the high-pressure liquid fuel inlet line 50, the annular space of the jumping pipe type common rail 60b, and the annular space of the discharge line 70 and alerting same is installed.

In such a leakage detection system, a method of detecting leakage is the same as the leakage detection method explained in FIG. 57 above.

Explaining one example among them, leakage of liquid fuel may be detected while sequentially inserting the separator 850 and the leakage detection sensor 860 from an upstream toward a downstream direction based on the liquid fuel flow direction into the first and second separator insertion holes 810 and 820 formed in the leakage detection block 750 of the high-pressure liquid fuel inlet line 50, the first and second separator insertion holes 810 and 820 formed in the leakage detection block 750-1, 750-2, ..., 750-n of the plurality of jumping pipes 3000-1, 300-2, ..., 300-n of the jumping pipe type common rail 60b, and the first and second separator insertion holes 810 and 820 formed in the leakage detection block 750 of the discharge line 70.

In addition, the liquid fuel supply line may be classified into a first section including the first inlet line 50a on the upstream side up to the leakage detection block 750 of the high-pressure liquid fuel inlet line 50, a second section including the block type common rail 60a from the leakage detection block 750 of the high-pressure liquid fuel inlet line 50 to the leakage detection block 750 of the discharge line 70, and a third section including the second discharge line 70b on the downstream side from the leakage detection block 750 of the discharge line 70, and detected for each section.

That is, the separator 850 is inserted into each of the first and second separator insertion holes 810 of the leakage detection block 750 of the high-pressure liquid fuel inlet line 50, and leakage of the first section is detected by inserting the leakage detection sensor 860 into the separator 850 inserted into the first separator insertion hole 810.

Subsequently, the separator 850 is inserted into each of the first and second separator insertion holes 810 of the leakage detection block 750 of the discharge line 70, leakage of the second section is detected by inserting the leakage detection sensor 860 into the separator 850 inserted into the first separator insertion hole 810, and leakage of the third section is detected by inserting the leakage detection sensor 860 into the separator 850 inserted into the second separator insertion hole 820.

If leakage in the first and third sections is not confirmed and leakage in the second section is confirmed, whether or not leakage occurs in sections between the neighboring jumping blocks 2000 is searched by sequentially inserting the separator 850 and the leakage detection sensor 860 from the upstream toward the downstream direction from the separator insertion hole 2500-1 of the uppermost stream jumping block 2000-1 of the block type common rail 60a to the separator insertion hole 2500-n of the lowermost stream jumping block 2000-n.

### (Leakage Detection System of Liquid Fuel Supply Line to which Straight pipe type Common Rail 60c is applied)

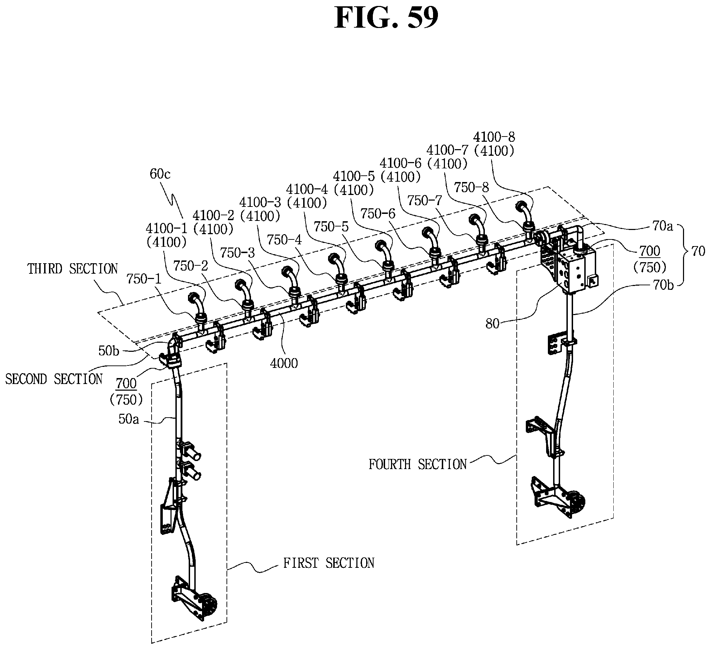

Next, in FIG. 59, a view for explaining the leakage detection system of the high-pressure liquid fuel supply line including the straight pipe type common rail 60c according to the present disclosure is illustrated.

With reference to FIG. 59, in the high-pressure liquid fuel inlet line 50, the connection part for leakage detection 700 to which the separator for leakage detection 850 is attachable/detachable is provided.

The straight pipe type common rail 60c is in a form provided with a straight pipe 4000 of a high-pressure double pipe structure extending in a cylinder arrangement direction, a branch pipe 4100 (4100-1, 4100-2, ..., 4100-n) of a high-pressure double pipe structure branched toward each cylinder from the straight pipe 4000, and a leakage detection block 750 (750-1, 750-2, ..., 750-n) installed in a middle of each branch pipe 4100 (4100-1, 4100-2, ..., 4100-n).

In addition, in the discharge line 70, the connection part for leakage detection 700 to which the separator for leakage detection 850 is attachable/detachable is provided.

At a downstream end of the discharge line 70, a leakage alarm tank (not illustrated) for recovering liquid fuel leaked into the annular space of the high-pressure liquid fuel inlet line 50, the annular space of the straight pipe type common rail 60c, and the annular space of the discharge line 70 and issuing an alarm is installed.

Such a straight pipe type common rail 60c provides a structure in which the branch pipe 4100 (4100-1, 4100-2, ..., 4100-n) is branched at each middle of the straight pipe 4000 of a simple double pipe structure, and the middle of the branch pipe may be simply connected to the leakage detection block 750 (750-1, 750-2, ..., 750-n), respectively.

In addition, since a leakage detectable section of the common rail may be easily subdivided and set into sections between the neighboring branch pipes, leakage may be detected at several points of the common rail, and a leakage occurrence point may be precisely and easily found.

In addition, since the straight pipe type common rail 60c of the present disclosure is made of the straight pipe 4000 and the branch pipe 4100 of a double pipe form as a whole, a weight of the entire common rail may be reduced. Accordingly, it is good to apply to an engine where leakage detection is easy while the weight needs to be reduced.

A leakage detection method in the leakage detection system provided with the liquid fuel supply line having such a straight pipe type common rail 60c is the same as the leakage detection method explained in FIG. 57 and FIG. 58 above.

That is, inert gas is injected into the main fuel line 52a of the high-pressure liquid fuel inlet line 50.

Subsequently, leakage of liquid fuel may be detected while sequentially inserting the separator 850 and the leakage detection sensor 860 from an upstream toward a downstream direction based on the liquid fuel flow direction into the first and second separator insertion holes 810 and 820 formed in the leakage detection block 750 of the high-pressure liquid fuel inlet line 50, the first and second separator insertion holes 810 and 820 formed in each leakage detection block 750 of the plurality of branch pipes 4100-1, 4100-2, ..., 4100-n of the straight pipe type common rail 60c, and the first and second separator insertion holes 810 and 820 formed in the leakage detection block 750 of the discharge line 70.

In addition, for example, the liquid fuel supply line may be classified into a first section including the first inlet line 50a on the upstream side up to the leakage detection block 750 of the high-pressure liquid fuel inlet line 50, a second section including the straight pipe type common rail 60c from the leakage detection block 750 of the high-pressure liquid fuel inlet line 50 to the leakage detection block 750 of the discharge line 70, and a third section including the second discharge line 70b on the downstream side from the leakage detection block 750 of the discharge line 70, and detected.

That is, the separator 850 is inserted into each of the first and second separator insertion holes 810 of the leakage detection block 750 of the high-pressure liquid fuel inlet line 50, and leakage of the first section is detected by inserting the leakage detection sensor 860 into the separator 850 inserted into the first separator insertion hole 810.

Subsequently, by inserting the separator 850 into each of the first and second separator insertion holes 810 of the leakage detection block 750 of the discharge line 70, leakage of the second section is detected by inserting the leakage detection sensor 860 into the separator 850 inserted into the first separator insertion hole 810, and leakage of the third section is detected by inserting the leakage detection sensor 860 into the separator 850 inserted into the second separator insertion hole 820.

If leakage in the first and third sections is not confirmed and leakage in the second section is confirmed, the separator 850 is inserted into the first and second separator insertion holes 810 and 820 of the leakage detection block 750 provided in each branch pipe 4100-1, 4100-2, ..., 4100-n of the straight pipe type common rail 60c, and leakage of a downstream section (an engine side section) of the leakage detection block 750 of each branch pipe 4100-1, 4100-2, ..., 4100-n is detected by inserting the leakage detection sensor 860 into the separator 850 inserted into the second separator insertion hole 820.

If leakage of the downstream section (the engine side section) of the leakage detection block 750 of each branch pipe 4100-1, 4100-2, ..., 4100-n is not detected, leakage of a section of the straight pipe 4000 is detected by inserting the separator 850 into the first separator insertion hole 810 of any one or more leakage detection blocks 750 among the leakage detection blocks 750 of each branch pipe 4100-1, 4100-2, ..., 4100-n, and inserting the leakage detection sensor 860 into this separator 850 inserted into the first separator insertion hole 810.

In the above, specific preferred embodiments of the present disclosure have been illustrated and also explained. However, the present disclosure is not limited to the embodiments described above, and any person having ordinary skill in the art to which the corresponding invention belongs may perform various modified implementations without departing from the subject matter of the present disclosure claimed in the claims.

## Claims

1. A liquid fuel pressurizing unit, comprising:
a control cylinder (212); and
a valve shaft (300) of a rotary type provided with a valve portion (V300) on an outer circumference of a shaft and installed inside the control cylinder (212), and configured to control a flow direction of operating oil so that the valve portion (V300) supplies or discharges the operating oil as the shaft rotates.

2. The liquid fuel pressurizing unit of claim 1, wherein the valve portion (V300) of the valve shaft (300) comprises:
an inlet groove (304) configured to supply operating oil; and
an outlet groove (306) configured to discharge the operating oil.

3. The liquid fuel pressurizing unit of claim 2, wherein a total of two inlet grooves (304) of the valve portion (V300) are formed in symmetrical shapes on both left and right sides on a cross section of the valve shaft (300), and a total of two outlet grooves (306) are formed in symmetrical shapes on both left and right sides in a direction orthogonal to the inlet grooves (304), such that two operating oil supply/discharge operations are performed per one rotation of the valve shaft (300) through one valve portion (V300).

4. The liquid fuel pressurizing unit of claim 1 or 2, wherein the valve shaft (300) has a configuration in which a plurality of valve portions (V300) are disposed in parallel in an axial direction, such that a total of N times of operating oil supply/discharge operations are performed per one rotation of the valve shaft (300), wherein 'N' is the number of the valve portions (V300).

5. The liquid fuel pressurizing unit of claim 3, wherein the valve shaft (300) has a configuration in which a plurality of valve portions (V300) are disposed in parallel in an axial direction, and is configured such that a total of 2N times of operating oil supply/discharge operations are performed per one rotation of the valve shaft (300), wherein 'N' is the number of the valve portions (V300).

6. The liquid fuel pressurizing unit of claim 5, further comprising:
an operating oil supply port (214) into which operating oil supplied from the inlet groove (304) of the valve shaft (300) is introduced when meeting and communicating with the inlet groove (304) of the valve portion (V300),
wherein it is set such that, in a state where a trailing end (304b) of the inlet groove (304) of any one valve portion (V300) in a middle of supplying the operating oil in communication with the operating oil supply port (214) is overlapped with the operating oil supply port (214) by an overlap angle (β°) to continue supplying the operating oil, a leading end (304a) of the inlet groove (304) of another valve portion (V300) immediately following meets the operating oil supply port (214) to start supply of the operating oil.

7. The liquid fuel pressurizing unit of claim 6, wherein the overlap angle (β°) is 5 to 25°.

8. The liquid fuel pressurizing unit of claim 5, wherein the valve shaft (300) comprises:
an operating oil inlet groove (320) formed around the outer circumference of the valve shaft (300) so that operating oil is introduced from an operating oil supply source;
a plurality of operating oil supply holes (322) formed from the operating oil inlet groove (320) toward an axial center of the valve shaft (300); and
an operating oil supply flow path (302) formed along the axial center of the valve shaft (300) so as to communicate with the operating oil supply holes (322).

9. The liquid fuel pressurizing unit of claim 8, wherein the valve shaft (300) comprises:
a communication slot (308) extending from the outlet groove (306) toward one side in the axial direction; and
a drain groove (310) formed around the outer circumference of the valve shaft (300) so as to communicate with the communication slot (308).

10. The liquid fuel pressurizing unit of claim 1, comprising:
an operating oil supply port (214) connected to a side surface of the control cylinder (212) in a radial direction;
a low-pressure chamber (C1) filled with the operating oil supplied through the operating oil supply port (214);
an opposite port (214a) formed to communicate with the control cylinder (212) at a diametrically opposite side of the operating oil supply port (214) based on a cross-sectional center of the valve shaft (300); and
a pressure balancing flow path (220) connecting the low-pressure chamber (C1) and the opposite port (214a),
wherein pressure of the low-pressure chamber (C1) is configured to act on both sides of the valve shaft (300) simultaneously through the operating oil supply port (214) and the opposite port (214a).

11. A liquid fuel pressurizing unit comprising a piston pump unit (500) configured to pressurize low-pressure liquid fuel to a high pressure by pressure of operating oil and discharge the same, wherein the piston pump unit (500) comprises a plurality of plunger pump portions (P500) operated by the operating oil, and comprises a plurality of operating oil supply ports (214) configured to supply the operating oil to the plurality of plunger pump portions (P500).

12. The liquid fuel pressurizing unit of claim 11, wherein the plurality of plunger pump portions (P500) each comprise:
a low-pressure part cylinder (502) forming a low-pressure chamber (C1) filled with operating oil through the operating oil supply port (214) and having a large diameter;
a high-pressure part cylinder (504) forming a high-pressure chamber (C2) filled with low-pressure liquid fuel at an opposite side of the low-pressure chamber (C1) and having a diameter smaller than the diameter of the low-pressure part cylinder (502);
a pressurizing plunger (600) in which a low-pressure part piston (610) installed inside the low-pressure part cylinder (502) is formed at one side and a high-pressure part piston (620) installed inside the high-pressure part cylinder (504) is formed at an opposite side; and
a high-pressure liquid fuel discharge flow path (514) configured to send high-pressure liquid fuel, which is pressurized by the high-pressure part piston (620) and of which pressure is increased.

13. The liquid fuel pressurizing unit of claim 12, comprising:
a cylinder liner (520) forming the high-pressure part cylinder (504);
a plurality of low-pressure liquid fuel distribution holes (522) penetratively formed in the cylinder liner (520) in a radial direction, into which low-pressure liquid fuel supplied from a low-pressure liquid fuel pump (31) is introduced;
an inlet groove (622) formed around an outer circumference of the high-pressure part piston (620) so as to be in contact with and communicate with the low-pressure liquid fuel distribution holes (522);
a plurality of distribution passages (624) formed in a radial direction from the inlet groove (622) toward an axial center of the high-pressure part piston (620); and
an inlet passage (626) connecting inner ends of the plurality of distribution passages (624) and penetrated toward an end of the high-pressure part piston (620) in an axial direction to communicate with the high-pressure chamber (C2).

14. The liquid fuel pressurizing unit of claim 12, wherein a compression spring (640) for returning the pressurizing plunger (600) in an operating oil discharge direction is installed inside the low-pressure part piston (610) in order to, after completing discharge of the liquid fuel in the high-pressure chamber (C2), fill the high-pressure chamber (C2) with low-pressure liquid fuel and discharge the operating oil in the low-pressure chamber (C1).

15. The liquid fuel pressurizing unit of claim 13, wherein a first check valve (660) is installed in the inlet passage (626) to block inflow of low-pressure liquid fuel by blocking the inlet passage (626) when the pressurizing plunger (600) moves in a compression direction and pressure of the liquid fuel in the high-pressure chamber (C2) increases to a set pressure, and a second check valve (670) is installed in the high-pressure liquid fuel discharge flow path (514) of the high-pressure chamber (C2) to open the high-pressure liquid fuel discharge flow path (514) so that high-pressure liquid fuel is allowed to be discharged when the pressure of the liquid fuel in the high-pressure chamber (C2) increases to the set pressure.

16. The liquid fuel pressurizing unit of claim 15, further comprising:
a common discharge flow path (516) configured to merge and send the high-pressure liquid fuel discharged from a plurality of high-pressure liquid fuel discharge flow paths (514) provided in the plurality of plunger pump portions (P500).

17. The liquid fuel pressurizing unit of claim 11, comprising:
a control cylinder (212) configured to control operating oil supplied to the plurality of plunger pump portions (P500); and
a valve shaft (300) rotating inside the control cylinder (212),
wherein the plurality of plunger pump portions (P500) are disposed in parallel in an axial direction of the control cylinder (212),
the plurality of operating oil supply ports (214) are formed to communicate in a radial direction of the control cylinder (212) in a state parallel with an alignment direction of the plurality of plunger pump portions (P500), and
a plurality of valve portions (V300) configured to supply and discharge the operating oil to the plurality of operating oil supply ports (214) at equal cycles to each other according to rotation of the valve shaft (300) are formed on the valve shaft (300) while maintaining intervals in the axial direction.

18. A liquid fuel pressurizing unit, comprising:
a control cylinder (212);
an operating oil supply port (214) connected to a side surface of the control cylinder (212) in a radial direction;
a plunger pump portion (P500) configured to pressurize low-pressure liquid fuel to high-pressure liquid fuel and discharge the same by receiving pressure of operating oil supplied from the operating oil supply port (214); and
a valve shaft (300) of a rotary type provided with a valve portion (V300) on an outer circumference of a shaft and installed inside the control cylinder (212), and configured to control a flow direction of the operating oil so that the valve portion (V300) supplies or discharges the operating oil to the operating oil supply port (214) as the shaft rotates.

19. A liquid fuel supply system comprising the liquid fuel pressurizing unit of any one of claims 1, 11, or 18.

20. An engine comprising the liquid fuel supply system of claim 19.
